# EUROPEAN PATENT SPECIFICATION

(11) **EP 0 930 661 B1**
(45) Date of publication and mention of the grant of the patent: **02.04.2014**
(21) Application number: 98310029.8
(22) Date of filing: 08.12.1998
(51) Int. Cl.: H01M 2/26, H01M 2/20, H01M 10/04

(54) **The Electricity storage/discharge device with low internal resistance current collector structure**
Elektrizität-Speicher/Entladungsvorrichtung mit niedrigem inneren Widerstand Kollektorstruktur
Dispositif de stokage/décharge d'électricité avec une structure de collecteur de courant à faible résistance interne

(30) Priority: 20.01.1998 GB 9801181
(43) Date of publication of application: 21.07.1999
(73) Proprietor: Yang, Tai-Her, Dzan-Hwa (TW)
(72) Inventor: Yang, Tai-Her, Dzan-Hwa (TW)
(74) Representative: Wright, Howard Hugh Burnby

(56) References cited:
- US-A- 1 934 945
- US-A- 3 563 804
- US-A- 5 230 967
- US-A- 6 139 987

## Description

### SUMMARY OF THE INVENTION

The electricity storage/discharge device with low internal resistance current collector structure is originally disclosed that its electrode plate has two or more than two current collecting terminals thereby to constitute two or more than two input or output current circuits to reduce internal resistance, whereof the aforesaid two or more than two current collecting terminals of the electrode plates include the outside extended current terminals the electrode plate sides or the solid or hollow tube shape conductor rods made from the conducting material in circular, square or other geometric shapes to penetrate through the conductor through holes provided at the electrode plates of the electricity storage and discharge device for connecting the electrode plates in the same polarities for parallel combination or connecting the electrode plates in different polarities for series combination or mixture of series and parallel combinations.

US 3563,804 describes an electrochemical cell with terminals having conductive or insulating blocks interposed. A capsule contains a pile of alternate positive and negative electrode sheets with the interposition of absorbent sheets. The positive and negative electrode sheets include lugs, each having a perforation. The lugs on the positive and negative electrode sheets are offset from each other so that they do not align. Rods pass through the holes in the lugs and the electrode sheets are held in place by nuts located at the ends of the rods.

US 3518,127 discloses a storage battery with a plurality of intercellular separated connections within the battery case. Conducting bars, which link all the plates of the same polarity in each cell may extend through openings in the partitions separating adjacent cells to effect serial intercellular connection.

US 2511,943 discloses a storage battery in which the plates of the battery are structurally connected together at their bottoms so as to reduce buckling of the plates and danger due to vibration.

US 4983475 discloses an electrochemical battery which has a plurality of alternating positive and negative plates. At least one tab protrudes from one edge of each of the positive and negative plates. At least one tab protrudes from an opposite edge of each of the positive and negative plates. A pair of negative plate straps connect together each tab protruding from each negative plate. A pair of positive plate straps connect together, each tab protruding from each positive plate. A first diagonal bar connects together the pair of negative plate straps, and a second diagonal bar connects together the pair of positive plate straps.

GB 2202375 discloses a decoupling capacitor for integrated circuits.

### The invention is defined in its broadest form in current claim 1. Preferred embodiments of the invention are defined in claims 2 to 13.

### BRIEF DESCRIPTION OF THE DRAWINGS

Figure 1 is a 3-D decomposed schematic diagram of a application example of the invention illustrating that the electrode plate is installed with conductor through holes and isolating spaces.
Figure 2 is the front view of Figure 1.
Figure 3 is the A-A' sectional view of Figure 1.
Figure 4 is the B-B' sectional view of Figure 2.
Figure 5 is a 3-D decomposed schematic diagram of an application example of the invention illustrating that two sides of the electrode plate are respectively installed with a conductor through hole and an isolating through hole.
Figure 6 is a front view of figure 5.
Figure 7 is tne A-A' sectional view of figure 6.
Figure 8 is the B-B' sectional view of figure 6.
Figure 9 is a 3-D decomposed schematic diagram of an application example of the invention illustrating that two sides of the electrode plate are respectively provided with two in-line conductor through holes and an isolating space.
Figure 10 is a front view of figure 9.
Figure 11 is the A-A' sectional view of figure 10.
Figure 12 is the B-B' sectional view of figure 10.
Figure 13 is a 3-D decomposed schematic diagram of an application example of the invention illustrating that two sides of the electrode plate are respectively installed with two in-line conductor through holes and two isolating through holes.
Figure 14 is a front view of figure 13.
Figure 15 is the A-A' sectional view of figure 14.
Figure 16 is the B-B' sectional view of figure 14.
Figure 17 is a 3-D decomposed schematic diagram of an application example of the invention illustrating that two sides of the electrode plate are respectively cross installed with two conducting through holes and two isolating notch and space.
Figure 18 is a front view of figure 17.
Figure 19 is the A-A' sectional view of figure 18.
Figure 20 is the B-B' sectional view of figure 19.
Figure 21 is a 3-D decomposed schematic diagram of an application example of the invention illustrating that two sides of the electrode plate are respectively cross installed with two conductor through holes and two isolating through holes.
Figure 22 is a front view of figure 21.
Figure 23 is the A-A' sectional view of figure 22.
Figure 24 is the B-B' sectional view of figure 22.
Figure 25 is a 3-D decomposed schematic diagram of an application example of the invention illustrating that three sides of a triangular shape electrode plate are respectively installed with conductor through holes and isolating space.
Figure 26 is a front view of figure 25.
Figure 27 is the A-A' sectional view of figure 26.
Figure 28 is the B-B' sectional view of figure 26.
Figure 29 is a 3-D decomposed schematic diagram of an application example of the invention illustrating that three sides of a triangular shape electrode plate are respectively installed with a conductor through hole and an isolating through hole.
Figure 30 is a front view of figure 29.
Figure 31 is the A-A' sectional view of figure 30.
Figure 32 is the B-B' sectional view of figure 30.
Figure 33 is a 3-D decomposed schematic diagram of an application example of the invention illustrating that three sides of the triangular shape electrode plate are respectively installed with two in-line conductor through holes and an isolating space.
Figure 34 is a front view of figure 33.
Figure 35 is the A-A' sectional view of figure 34.
Figure 36 is the B-B' sectional view of figure 34.
Figure 37 is a 3-D decomposed schematic diagram of an application example of the invention illustrating three sides of the triangular shape electrode plate are respectively installed with two in-line conductor through holes and two isolating thorough holes.
Figure 38 is a front view of figure 37.
Figure 39 is the A-A' sectional view of figure 38.
Figure 40 is the B-B' sectional view of figure 38.
Figure 41 is a 3-D decomposed schematic diagram of an application example of the invention illustrating three sides of the triangular shape electrode plate are respectively cross installed with two conductor through holes and two isolating through holes.
Figure 42 is a front view of figure 41.
Figure 43 is the A-A' sectional view of figure 42.
Figure 44 is the B-B' sectional view of figure 42.
Figure 45 is a 3-D decomposed schematic diagram of an application example of the invention illustrating that four sides of the quadrilateral shape electrode plate are respectively installed with conductor through holes and an isolating space.
Figure 46 is a front view of figure 45.
Figure 47 is the A-A' sectional view of figure 46.
Figure 48 is the B-B' sectional view of figure 46.
Figure 49 is a 3-D decomposed schematic diagram of an application example of the invention illustrating that four sides of the quadrilateral shape electrode plate are respectively installed with a conductor through hole and an isolating through hole.
Figure 50 is a front view of figure 49.
Figure 51 is the A-A' sectional view of figure 50.
Figure 52 is the B-B' sectional view of figure 50.
Figure 53 is a 3-D decomposed schematic diagram of an application example of the invention illustrating that the circular or quasi-circular shape electrode plates in different polarities are respectively cross installed with a conductor through hole and an isolating notch.
Figure 54 is a front view of figure 53.
Figure 55 is the A-A' sectional view of figure 54.
Figure 56 is a 3-D decomposed schematic diagram of an application example of the invention illustrating that the circular or quasi-circular shape electrode plates in different polarities are respectively intercross installed with a conductor through hole and an isolating through hole near to the plate central region.
Figure 57 is a front view of figure 56.
Figure 58 is the A-A' sectional view of figure 57.
Figure 59 is a 3-D decomposed schematic diagram of an application example of the invention illustrating that the circular or quasi-circular shape electrode plates in different polarities are respectively installed with two in-line conductor through holes and an isolating space at the exterior sides of plates.
Figure 60 is a front view of figure 59.
Figure 61 is the A-A' sectional view of figure 60.
figure 62 is a 3-D decomposed schematic, diagram of an application example of the invention illustrating that the circular or quasi-circular snape electrode plates in different polarities are respectively installed with two in-line conductor through holes and an isolating space at the exterior sides of plates.
Figure 63 is a front view of figure 59.
Figure 64 is the A-A' sectional view of figure 60.
Figure 65 is a 3-D decomposed schematic diagram of an application example of the invention illustrating that the circular or quasi-circular shape electrode plates in different polarities are respectively intercross installed with two conductor through holes and two isolating notches at the exterior sides of plates.
Figure 66 is a front view of figure 65.
Figure 67 is the A-A' sectional view of figure 66.
Figure 68 is the B-B' sectional view of figure 66.
Figure 69 is a 3-D decomposed schematic diagram of an application example of the invention illustrating that the circular or quasi-circular shape electrode plates in different polarities are respectively intercross installed with two conductor through holes and two isolating through holes near to the plate central region.
Figure 70 is a front view of figure 69.
Figure 71 is the A-A' sectional view of figure 70.
Figure 72 is the B-B' sectional view of figure 70.
Figure 73 is a 3-D decomposed schematic diagram of an application example of the invention illustrating that the two symmetrical extreme ends of the elliptical or quasi-elliptical shape electrode plates are respectively installed with a conductor through hole.
Figure 74 is a front view of figure 73.
Figure 75 is the A-A' sectional view of figure 74.
Figure 76 is a 3-D decomposed schematic diagram of an application example of the invention illustrating that the two symmetrical extreme ends of the rectangular or quasi-rectangular shape electrode plates are respectively installed with a conductor tnrougn hole.
Figure 77 is a front view of figure 76.
Figure 78 is the A-A' sectional view of figure 76.
Figure 79 is a 3-D decomposed schematic diagram of an application example of the invention illustrating that the two symmetrical exterior sides of the rectangular or quasi-rectangular shape electrode plates are respectively installed with two in-line conductor through holes.
Figure 80 is a front view of figure 79.
Figure 81 is the A-A' sectional view of figure 80.
Figure 82 is a 3-D decomposed schematic diagram of an application example of the invention illustrating that three sides of the triangular or quasi-triangular shape electrode plates are respectively installed with a conductor through hole.
Figure 83 is a front view of figure 82.
Figure 84 is the A-A' sectional view of figure 83. Figure 85 is a 3-D decomposed schematic diagram of an application example of the invention illustrating that the four exterior sides of the symmetrical quadrilateral or quasi-quadrilateral shape electrode plates are respectively installed with a conductor through hole.
Figure 86 is a front view of figure 85.
Figure 87 is the A-A' sectional view of figure 86.
Figure 88 is a 3-D decomposed schematic diagram of an application example of the invention illustrating that the exterior side of the circular or quasi-circular shape electrode plates is respectively intercross installed with conductor through holes and isolating trough holes.
Figure 89 is a front view of figure 88.
Figure 90 is tne A-A' sectional view of figure 89.
Figure 91 is the B-B' sectional view of figure 89.
Figure 92 is a 3-D decomposed schematic diagram of an application example of the invention illustrating that electrode plates in different polarities are respectively provided with a conductor through hole and an isolating through hole near to central region of plate.
Figure 93 is a front view of figure 92.
Figure 94 is the A-A' sectional view of figure 93.
Figure 95 is a 3-D decomposed schematic diagram of an application example of the invention illustrating that electrode plates in different polarities are respectively provided with two conductor through holes and two isolating through holes near to central region of plate.
Figure 96 is a front view of figure 92.
Figure 97 is the A-A' sectional view of figure 96. Figure 98 is a 3-D decomposed schematic diagram of an application example of the invention illustrating that electrode plates in different polarities are respectively installed with two conductor through holes and two isolating through holes in symmetrical cross distribution near to central region of plate.
Figure 99 is a front view of figure 98.
Figure 100 is the A-A' sectional view of figure 99.
Figure 101 is a 3-D decomposed schematic diagram of an application example of the invention illustrating that electrode plates in different polarities are respectively provided with three conductor through holes and three isolating through holes in asymmetrical cross distribution near to central region of plate.
Figure 102 is a front view of figure 101.
Figure 103 is the A-A' sectional view of figure 102.
Figure 104 is the B-B' sectional view of figure 102.
Figure 105 is a 3-D decomposed schematic diagram of an application example of the invention illustrating that electrode plates in different polarities are respectively provided with three conductor through holes and three isolating through holes in hexagonal-symmetrical cross distribution near to central region of plate.
Figure 106 is a front view of figure 105.
Figure 107 is the A-A' sectional view of figure 106.
Figure 108 is a 3-D decomposed schematic diagram of an application example of the invention illustrating that electrode plates in different polarities are respectively provided with three conductor through holes and three isolating through holes near to central region of plate.
Figure 109 is a front view of figure 105.
Figure 110 is the A-A' sectional view of figure 109.
Figure 111 is a 3-D decomposed schematic diagram of an application example of the invention illustrating that the electrode plates are respectively installed with four conductor through holes and four isolating through holes in cross-symmetrical double ring distribution.
Figure 112 is a front view of figure 111.
Figure 113 is the A-A' sectional view of figure 112.
Figure 114 is a 3-D decomposed schematic diagram of an application example of the invention illustrating that each electrode plate is provided with four conductor through holes and four isolating through holes in cross-symmetrical ring snape distribution.
Figure 115 is a front view of figure 114.
Figure 116 is the A-A' sectional view of figure 115.
Figure 117 is an embodying example of the application illustrating that two sides of the electrode plate are respectively installed with a current collecting terminal at the same ends.
Figure 118 is a side view of figure 117.
Figure 119 is an embodying example of the application illustrating that two sides of the electrode plate are respectively installed with a current collecting terminal at different ends.
Figure 120 is a side view of figure 119.
Figure 121 is an embodying example of the application illustrating that two sides of the electrode plate are respectively installed with a current collecting terminal near to the middle.
Figure 122 is a side view of figure 119.
Figure 123 is an embodying example of the application illustrating that two sides of the electrode plate are respectively installed with two current collecting terminals near to both ends of respective sides.
Figure 124 is a side view of figure 123.
Figure 125 is an embodying example of the application illustrating that two sides of the electrode plate are respectively cross installed with two current collecting terminals.
Figure 126 is a side view of figure 125.
Figure 127 is an embodying example of the application illustrating that four sides of the electrode plate are respectively installed with a current collecting terminal at the middle.
Figure 128 is a side view of figure 127.
Figure 129 is an embodying schematic diagram of the invention illustrating a non-closed elastic hollow tube conducting structure with an axial opening clearance.
Figure 130 is an embodying schematic diagram of the invention illustrating an insulated ring shape structure.

### DETAILED DESCRIPTION OF THE DRAWINGS

The conventional electricity storage and discharge device such as the primary or secondary side batteries or capacitors are usually provided with a current collecting terminal at a single side of each electrode plate for collecting the output or input current function or for using as a join node of series or parallel combinations with other electrodes, due to that the electrode plate has only single side input or output current, in case of larger current input and output transfer, the region close to the current collecting terminal and the region farther away from the current collecting terminal are in non-uniformed current densities, thus to deteriorate the performance of the electricity storage and discharge device; in addition, for parallel combination of the electrode plates in the same polarities or series combination of the electrode plates in different polarities, the current collecting terminals of the individual electrode plates are mutually connected or connected with the electricity conducting terminals by welding or pressure joining methods, whereby the single side single circuit results in a higher internal resistance; thereof tne electricity storage/discharge device with low internal resistance common current collector structure is originally disclosed that its electrode plate has two or more than two current collecting terminals thereby to constitute two or more than two input or output current circuits to reduce internal resistance, whereof the aforesaid two or more than two current collecting terminals of the electrode plates include the outside extended current terminals the electrode plate sides or the solid or hollow tube shape conductor rods made from the conducting material in circular, square or other geometric shapes to penetrate through the conductor through holes provided at the electrode plates of the electricity storage and discharge device for connecting the electrode plates in the same polarities for parallel combination or connecting the electrode plates in different polarities for series combination or mixture of series and parallel combinations, wherein the structural characteristics of this design include all or part of the following features:
1. The positive and negative electrode plates include the constructions of circular or quasi-circular, elliptical, or polygons with three sides or more than three sides (including triangle, quadrilateral, pentagon, hexagon, heptagon, octagon or polygons with more than eight sides) electrode plate structures, wherein its low internal resistance current collector embodiments include: (1) the two sides or more than two sides or the electrode plates are respectively installed with one or more than one outside extended current collecting terminals; (2) one or more than one conductor through holes are individually provided in the selected areas of two sides or more than two sides, or near to the central region of the positive or negative electrode plates, thereof the selected areas of the two sides or more than two sides or central region of the aforesaid positive or negative electrode plates are respectively provided with one or more than one isolating space or notches or trough holes with size larger than the conductor rods designed to allow for the penetration of conductor rods without contact after the electrode plates are cross laminated, thereby to allow the electrode plates have two or more than two input or output current circuits, thus to lower the internal resistance of the electricity storage device;
2. Should the conductor rods be used as the current collecting terminals, the conductor through hole and the conductor rod can be joined by pressure or welding, or by the press fit due to forcing elastic deformation of the inserted tube shape conductor rod against the conductor through hole in different geometrical, or by the press fit due to forcing elastic deformation of the non-closed hollow tube structure with axial opening clearance against the conductor through holes;
3. Should the conductor rods be used as the current collecting terminals, the positive or negative electrode plates are provided with isolating space or notches or through holes with size larger than the conductor rod to allow for penetration of the conductor rod without contact after the electrode plates in different polarities are cross laminated;
4. Should the conductor rods be used as the current collecting terminals, the respective electrode plates can be Joined by penetrating tne conductor rod through the conductor through holes of the electrode plates to be in parallel combinations or series combinations or mixture of series and parallel combinations;
5. Should the conductor rods be used as the current collecting terminals, both ends of the conductor rod can be installed with press lock screw and matched with press lock nut or unidirectional pressing washer to lock fix and promote the structural stability of the electrode plates;
6. Should the conductor rods be used as the current collecting terminals, and the conductor rod is constructed by tube shape material, cooling air or fluid can be pumped through the tube structure to cool the electrode plate;
7. By respectively installing one or more than one outside extended current collector terminals on the two or more than two sides of the individual electrode plates for multiple parallel combination circuits between the electrode plates in the same polarities or series combination circuit between the electrode plates in different polarities, the same electrode plate in the electricity storage device is provided with two or more than two current circuits for input and output thereby tne internal resistance during the electricity storage device input and output process can be reduced.

The miscellaneous application examples which have one or more than one aforesaid structural characteristics to constitute tne electricity storage/discharge device with low internal resistance current collector structure is delineated below, wherein to emphasize the structural characteristics of this case, the exterior casings and the insulation plates, sheets or films between the electrode plates in different polarities are omitted from the following illustrations of the application examples; wherein the application examples are described in the following:
A. The application examples of which two sides of the quadrilateral or quasi-quadrilateral shape electrode plate are respectively installed with current conductor through holes, including:

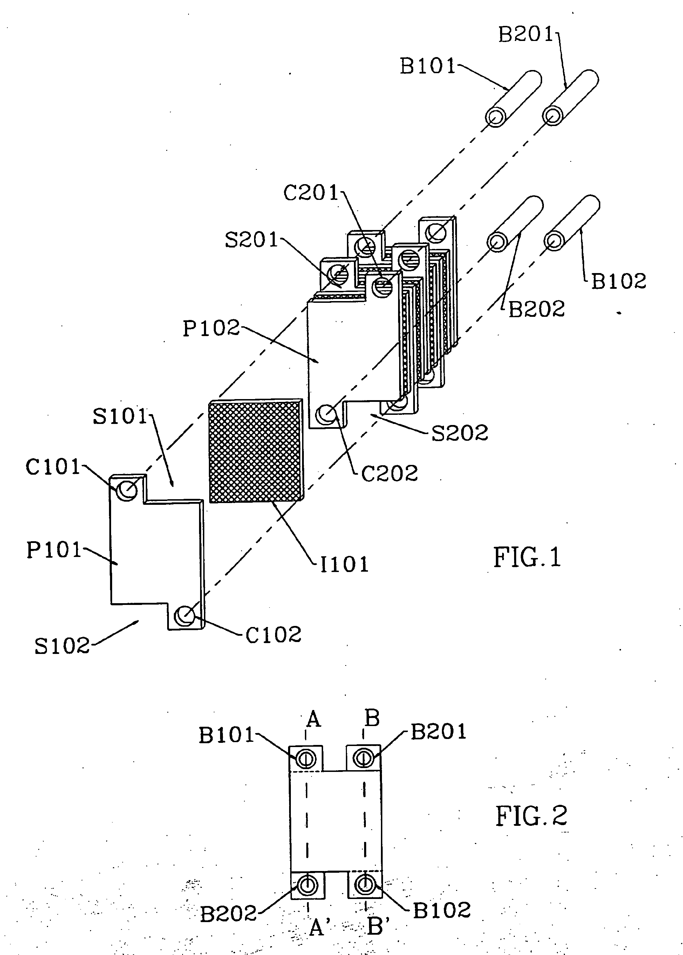

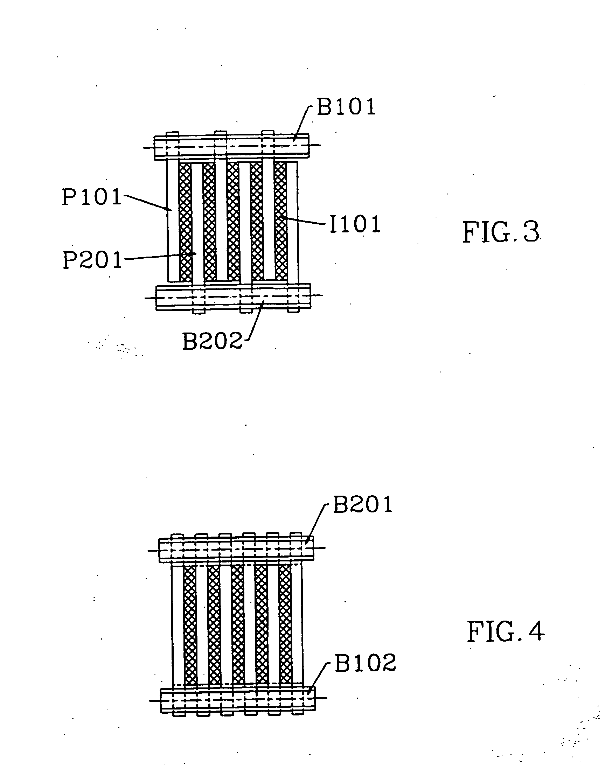

   1) Figure 1 is a 3-D decomposed schematic diagram of a application example of the electricity storage/ discharge device with low internal resistance current collector structure illustrating that the electrode collecting plate is installed with conductor through holes and the isolating spaces, figure 2 is the front view of figure 1, figure 3 is the A-A' sectional view of figure 2, and figure 4 is the B-B' sectional view of figure 2, wherein the application examples illustrated in figures 1-4 is mainly characterized in that two sides of the positive electrode plate P101 of the electricity storage and discharge device are respectively installed with a conductor through hole C101, C102 and an isolating space S101, S102, while two sides of tne negative electrode plate P201 are respectively installed with a conductor through hole C201, C202 and an isolating space S201, S202; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

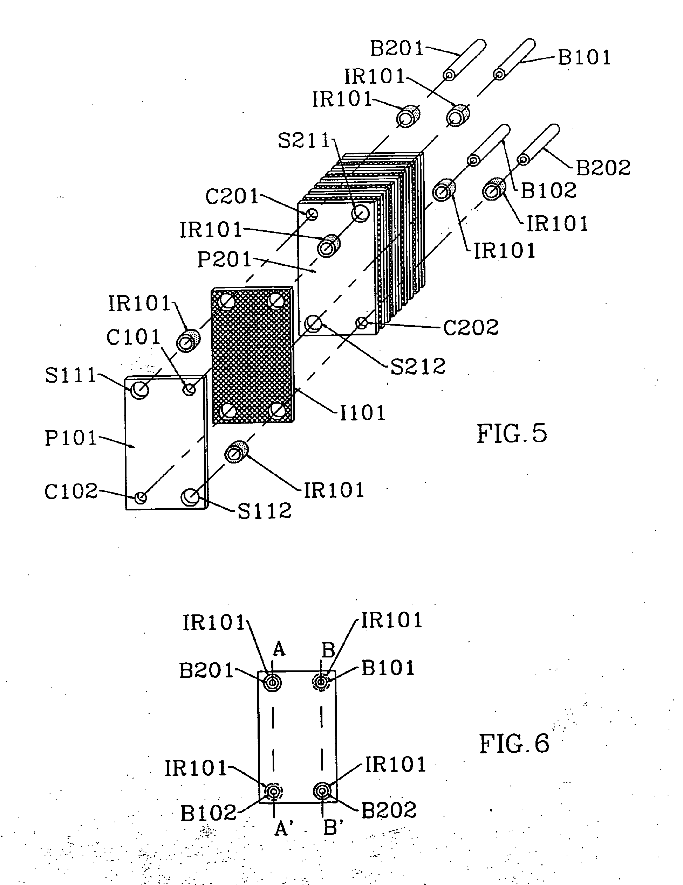

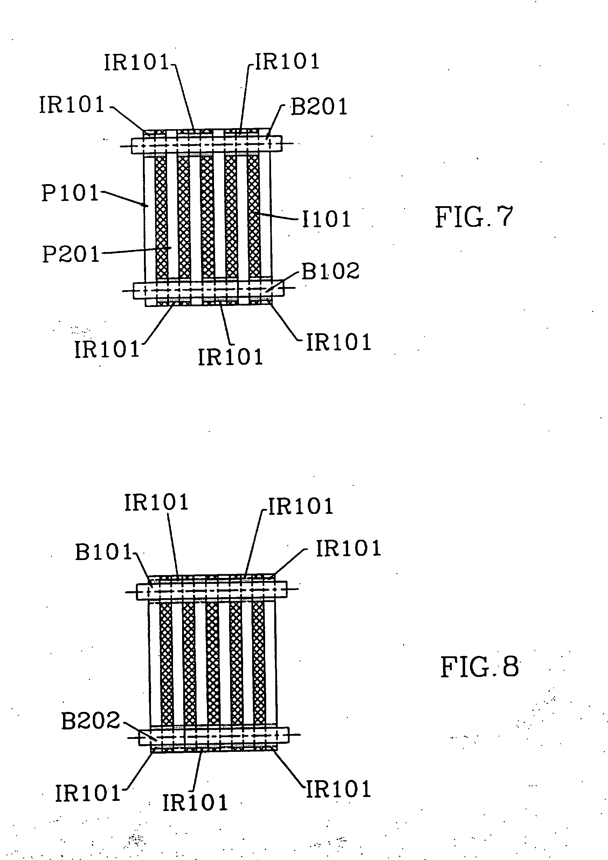

   2) Figure 5 is a 3-D decomposed schematic diagram of an application example of the electricity storage/ discharge device with low internal resistance current collector structure illustrating that two sides of the electrode plate are respectively provided with a conductor through hole and an isolating through hole, figure 6 is a front view of figure 5, figure 7 is the A-A' sectional view of figure 6 and figure 8 is the B-B' sectional view of figure 6, wherein the application examples illustrated in figures 5-8 are mainly characterized in that two sides of the positive electrode plate P101 of the electricity storage and discharge device are respectively installed with a conductor through hole C101, C102 and have respectively preserved an isolating through hole S111, S112, wherein two sides of the negative electrode plate P201 are respectively installed with a conductor through hole C201, C202 and have respectively preserved an isolating through hole S211, S212; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

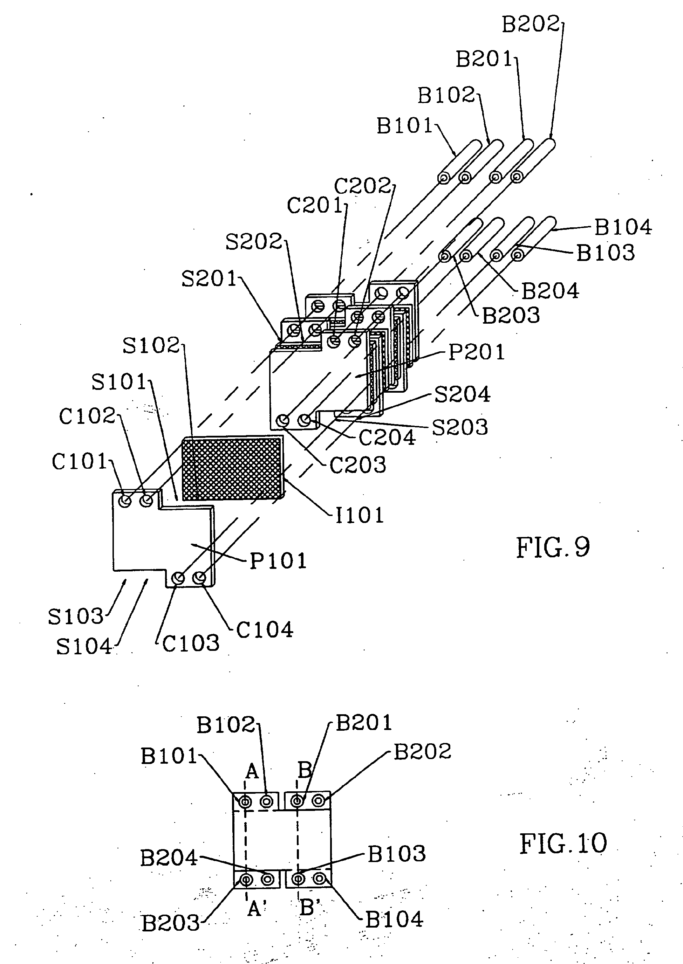

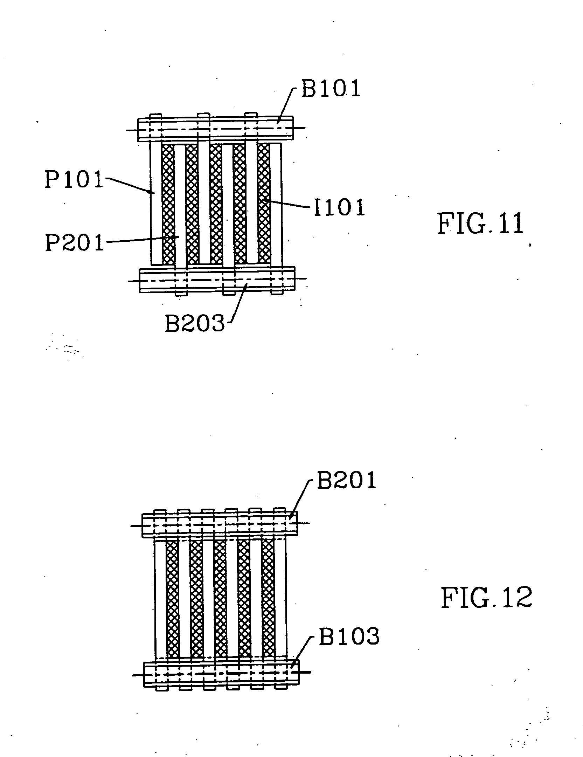

   3) Figure 9 is a 3-D decomposed schematic diagram of an application example of the electricity storage/ discharge device with low internal resistance current collector structure illustrating that two sides of the electrode plate are respectively provided with two in-line conductor through holes and an isolating space, figure 10 is a front view of figure 9, figure 11 is the A-A' sectional view of figure 10, and figure 12 is the B-B' sectional view of figure 10, wherein the application examples illustrated ir figures 9-12 are mainly characterized in that two sides of the positive electrode plate P101 of the electricity storage and discharge device are respectively installed with two neighboring conductor through holes C101, C102, C103, C104 and have respectively preserved two isolating spaces S101, S102, S103, S104, while two sides of the negative electrode plate P201 are respectively installed with two neighboring conductor through holes C201, C202, C203, C204 and have respectively preserved two isolating spaces S201, S202, S203, S204; therein the positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

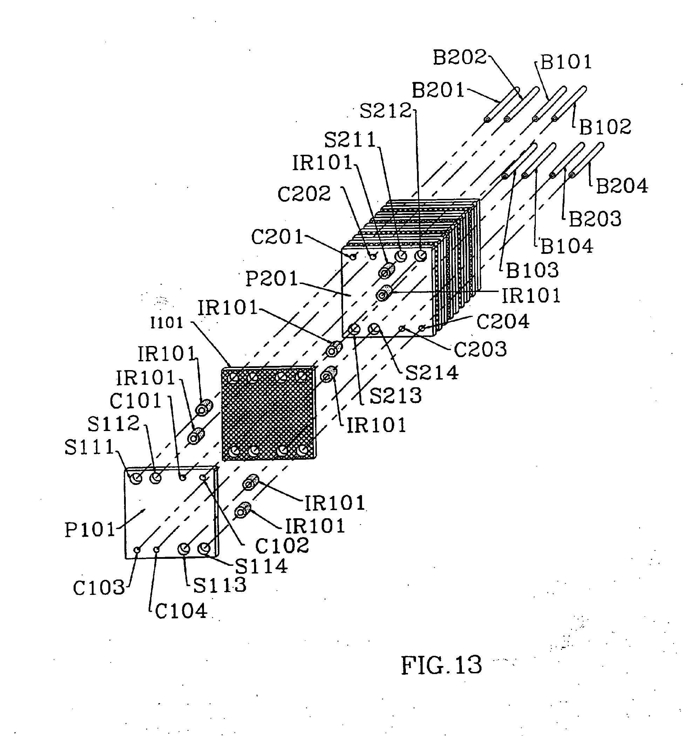

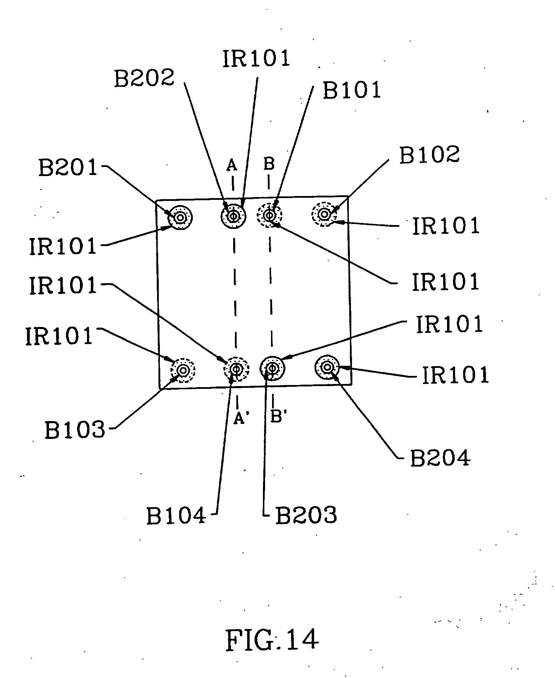

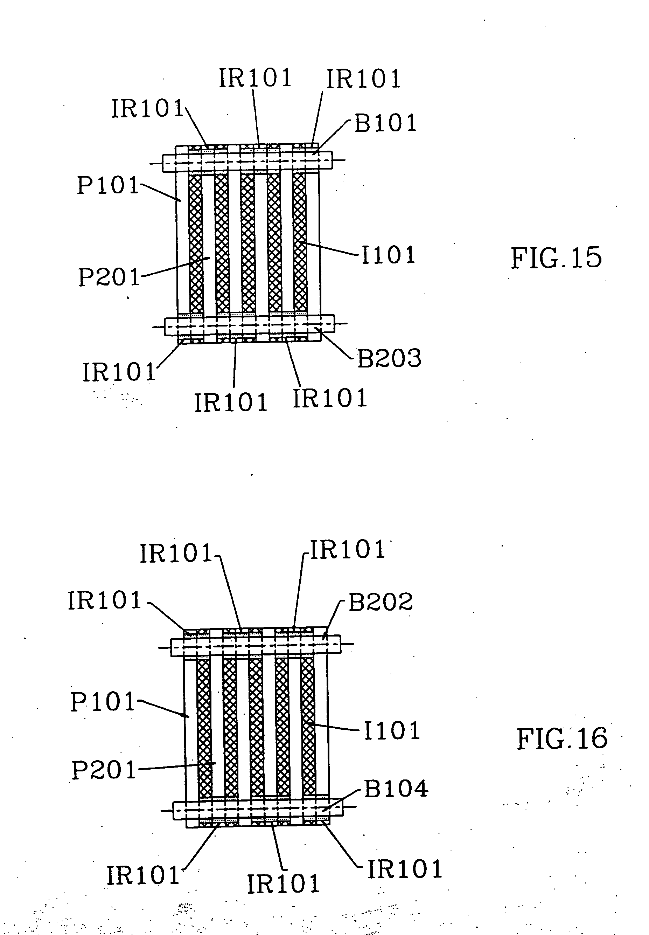

   4) Figure 13 is a 3-D decomposed schematic diagram of an application example of the electricity storage/ discharge device with low internal resistance current collector structure illustrating that two sides of the electrode plate are respectively provided with two in-line conductor through holes anc two isolating through holes, figure 14 is a front view of figure 13, figure 15 is the A-A' sectional view of figure 14, figure 16 is the B-B' sectional view of figure 14, wherein the application examples illustrated in figures 13-16 are mainly characterized in that two sides of the positive electrode plate P101 of the electricity storage and discharge device are respectively installed with two neighboring conductor through holes C101, C102, C103, C104 and have respectively preserved two neighboring isolating through holes S111, S112, S113, S114, while two sides of the negative electrode plate P201 are respectively installed with two neighboring conductor through holes C201, C202, C203, C204 and have respectively preserved two neighboring isolating through holes S211, S212, S213, S214; therein the positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

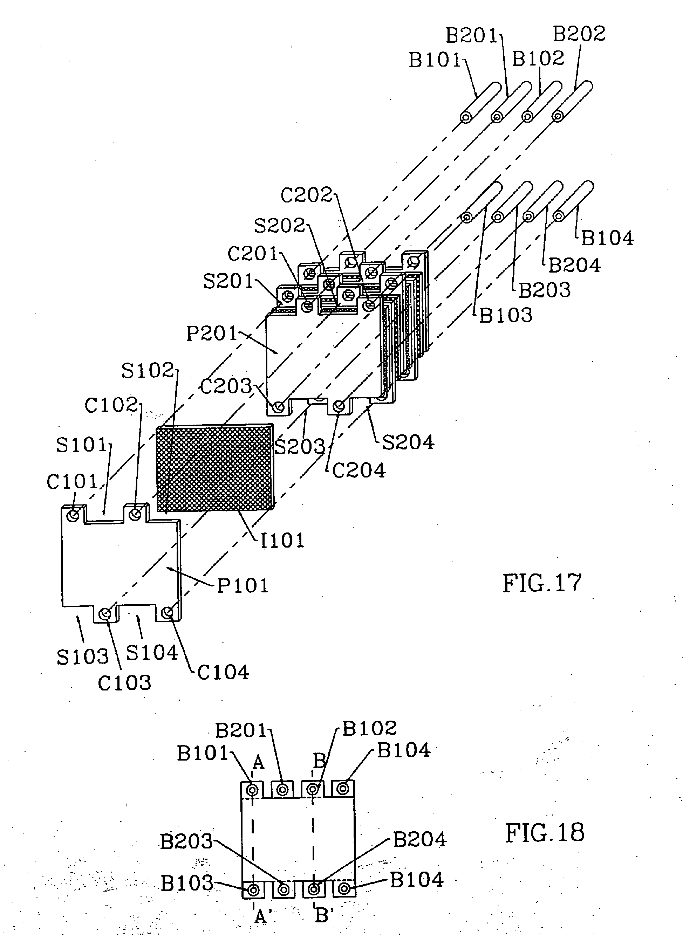

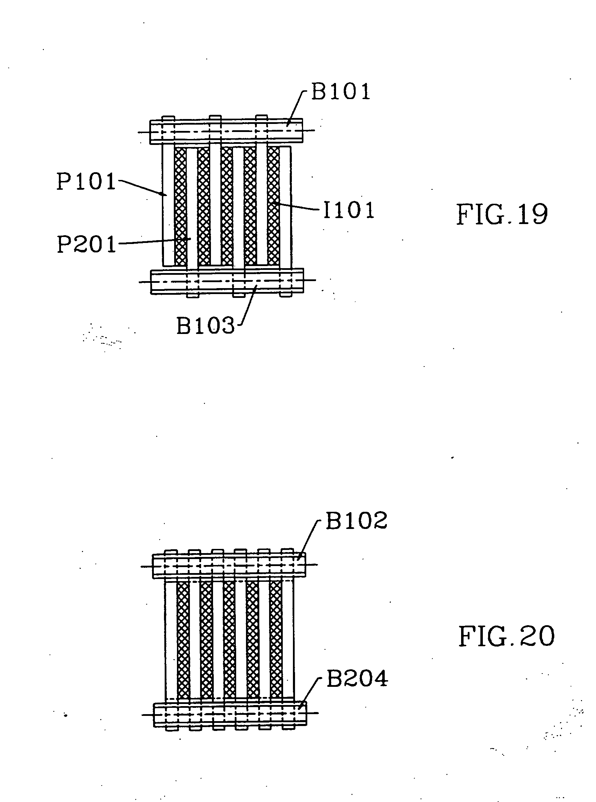

   5) Figure 17 is a 3-D decomposed schematic diagram of an application example of the electricity storage/ discharge device with low internal resistance current collector structure illustrating that two sides of the electrode plate are respectively cross installed with two conducting through holes and two isolating notch and space, figure 18 is a front view of figure 17, figure 19 is the A-A' sectional view of figure 18, and figure 20 is the B-B' sectional view of figure 19, wherein the application examples illustrated in figures17-20 are mainly characterized in that two sides of the positive electrode plate P101 of the electricity storage and discharge device are respectively cross installed with two conductor through holes C101, C102, C103, C104 and have respectively preserved two isolating notches and through holes S101, S102, S103, S104, while two sides of the negative electrode plate P201 are respectively cross installed with two conductor through holes C201, C202, C203, C204 and have respectively preserved two isolating notches and through holes S201, S202, S203, S204; therein the positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor trough holes, thereby they are respectively penetrated through and jointed with the electrode plates of their belonging in the same polarities for parallel combination current collection, or the two ends of the conductor rods are respectively penetrated through and jointed with the electrode plates in different polarities for series combinations;

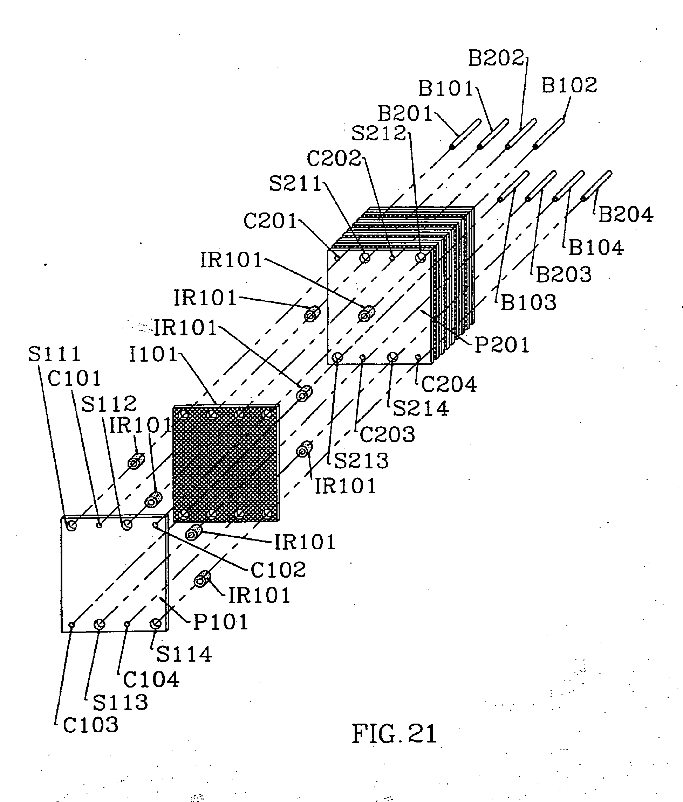

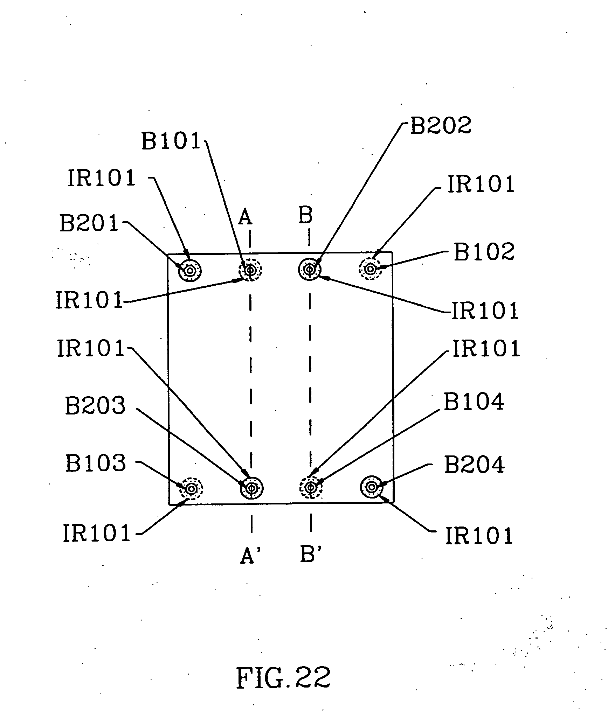

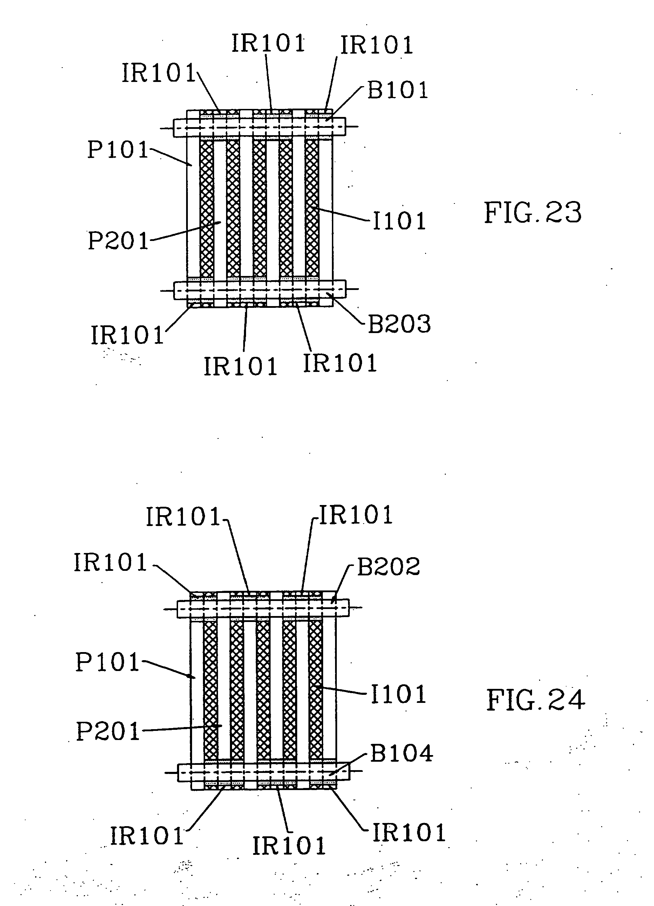

   6) Figure 21 is a 3-D decomposed schematic diagram of an application example of the electricity storage/ discharge device with low internal resistance current collector structure, illustrating that two sides of the electrode plate are respectively cross installed with two conductor through holes and two isolating through holes, figure 22 is a front view of figure 21, figure 23 is the A-A' sectional view of figure 22, and figure 24 is the B-B' sectional view of figure 22, wherein the application examples illustrated in figures 21~24 are mainly characterized in that two sides of the positive electrode plate P101 of the electricity storage and discharge device are respectively cross installed with two conductor through holes C101, C102, C103, C104 and two isolating through holes S111, S112, S113, S114, while two sides of the negative electrode plate P201 are respectively cross installed with two conductor through holes C201, C202, C203, C204 and two isolating through holes S211, S212, S213, S214; therein the positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrates through the aforesaid conductor through holes, thereby they are respectively penetrated trough and joined with the electrode plates of their belonging in the same polarities for parallel combination current collection, or the two ends of the conductor rods are respectively penetrazed through and pointed with the electrode plates in different polarities for series combinations;
B. The application examples of which three sides of the triangle or quasi-triangle shape electrode plate are respective installed with current conductor through holes, including:

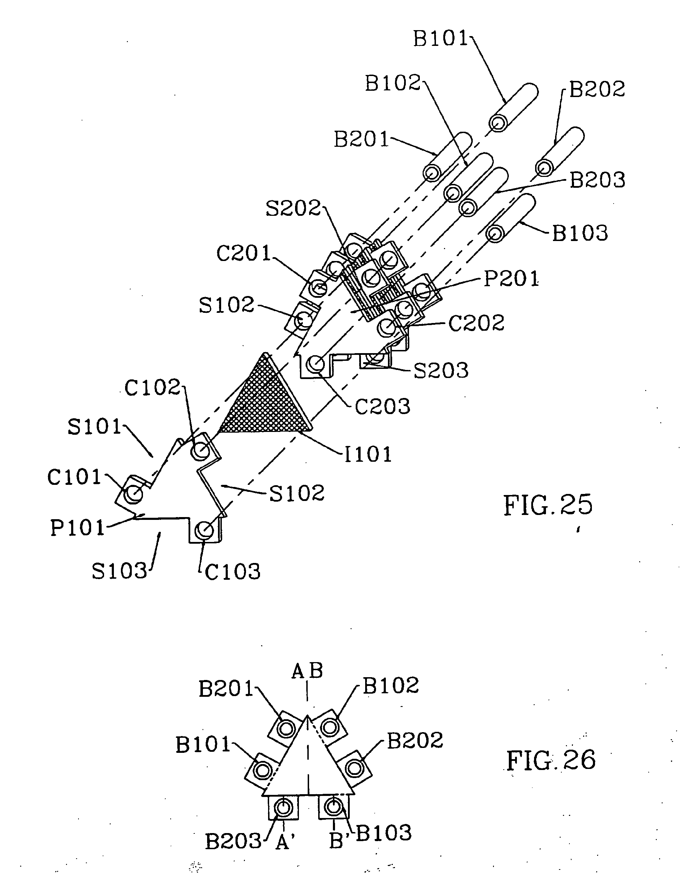

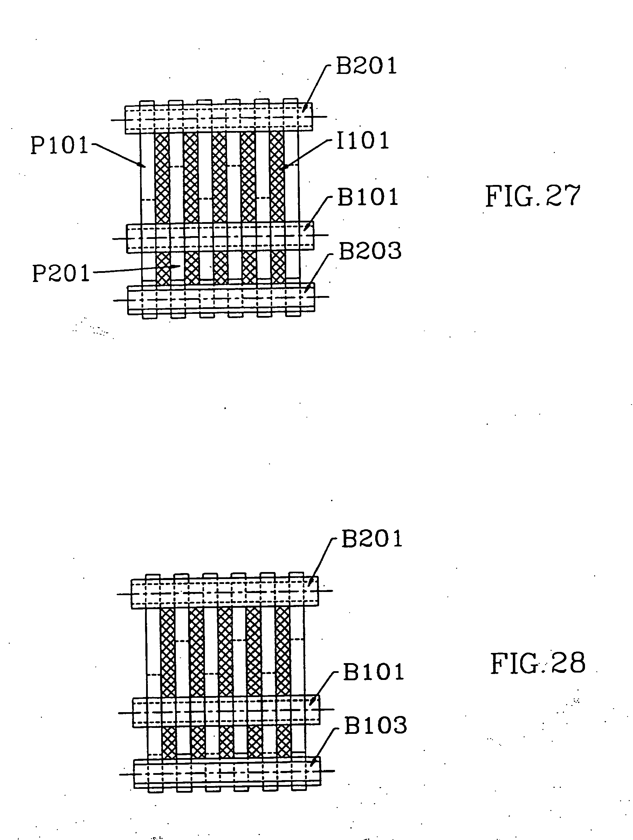

   1) Figure 25 is a 3-D decomposed schematic diagram of an application example of the electricity storage/ discharge device with low internal resistance current collector structure illustrating that three sides of the triangular shape electrode plate are respectively installed with a conductor through hole and an isolating space, figure 26 is a front view of figure 25, figure 27 is the A-A' sectional view of figure 26, and figure 28 is the B-B' sectional view of figure 26, wherein the application examples illustrated in figures 25~28 are mainly characterized in that three sides of the positive electrode plate P101 of the electricity storage and discharge device are respectively installed with a conductor through hole C101, C102, C103 and an insulating through hole S111, S112, S113, S114, while three sides of the negative electrode plate P102 are respectively installed with a conductor through hole C201, C202, C203 and an insulating through hole S211, S212, S213, S214; therein the positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and joined with the electrode plates in different polarities for series combinations;

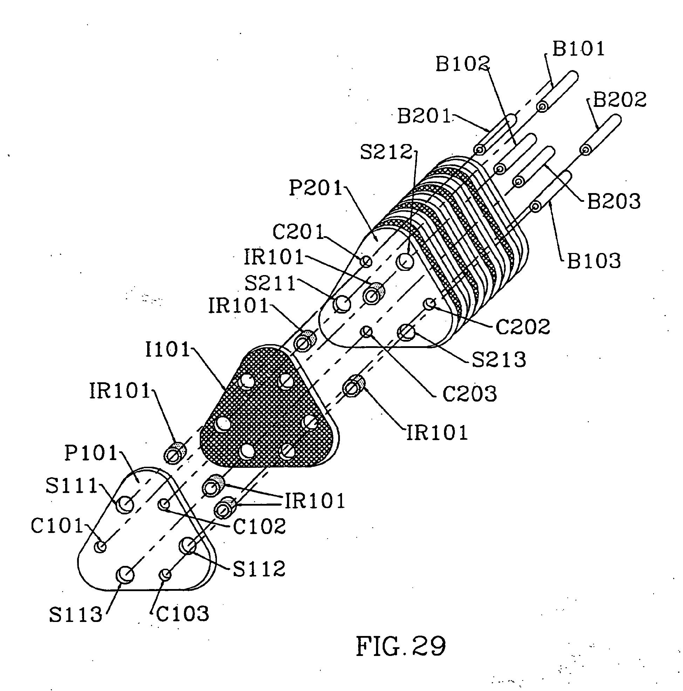

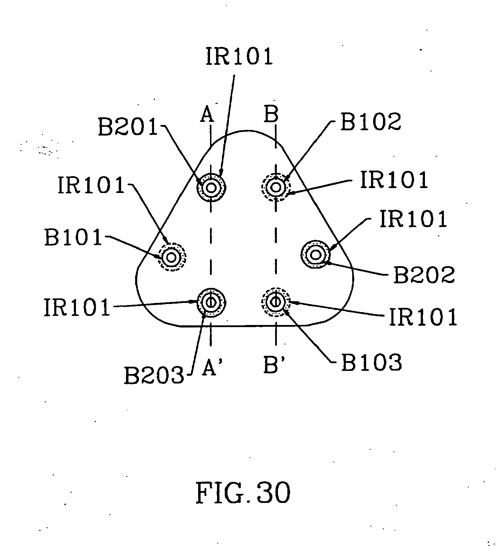

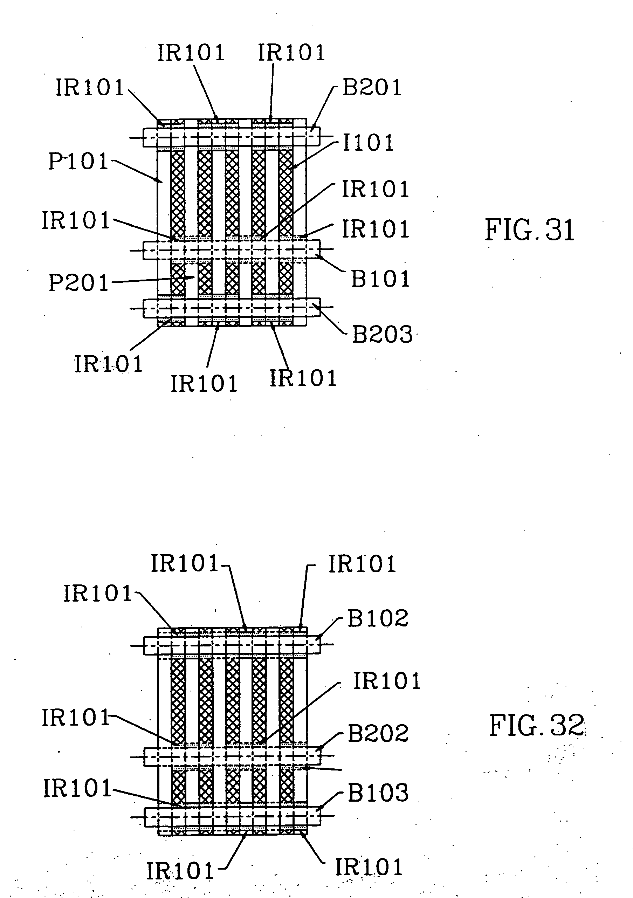

   2) Figure 29 is a 3-D decomposed schematic diagram of an application example of the electricity storage/discharge device with low internal resistance current collector structure illustrating three sides of a triangular shape electrode plate are respectively installed with a conductor through hole and an isolating through hole, figure 30 is a front view of figure 29, figure 31 is the A-A' sectional view of figure 30, figure 32 is the B-B' sectional view of figure 30, wherein the application examples illustrated in figures 29~32 are mainly characterized in that three sides of the positive electrode plate P101 of the electricity storage and discharge device are respectively installed with a conductor through holes C101, C102, C103 and have respectively preserved an isolating through hole S111, S112, S113, while three sides of the negative electrode plate P201 are respectively installed with a conductor tnrougn hole C201, C202, C203 and have respectively preserved an isolating through hole S211, S212, S213; therein the positive and negative electrode plates are cross laminated, and an isolator plate I101 is installed between the two neighboring electrode plates in different polarities, whereby the positive electrode conductor rods B101, B102, B103 and the negative electrode conductor rods B201, B202, B203 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

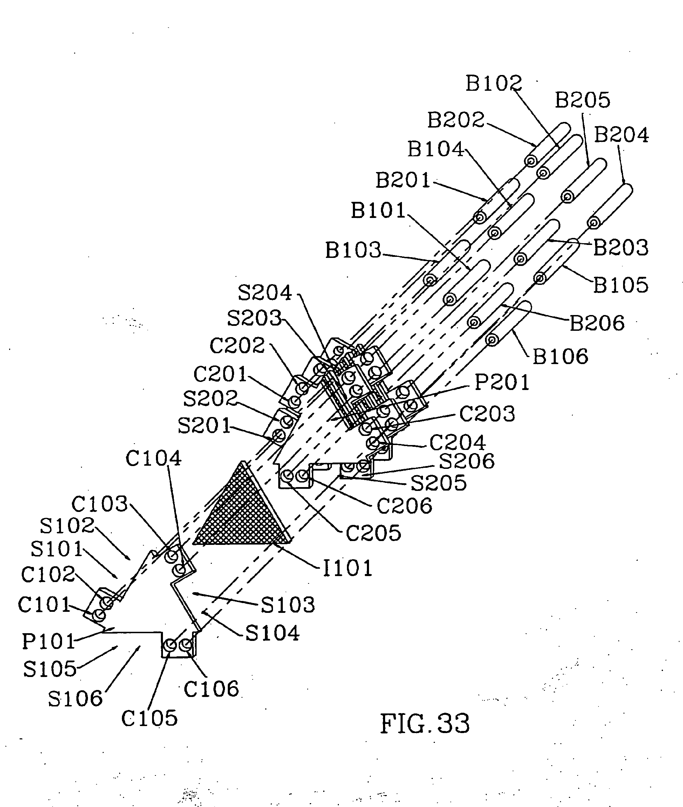

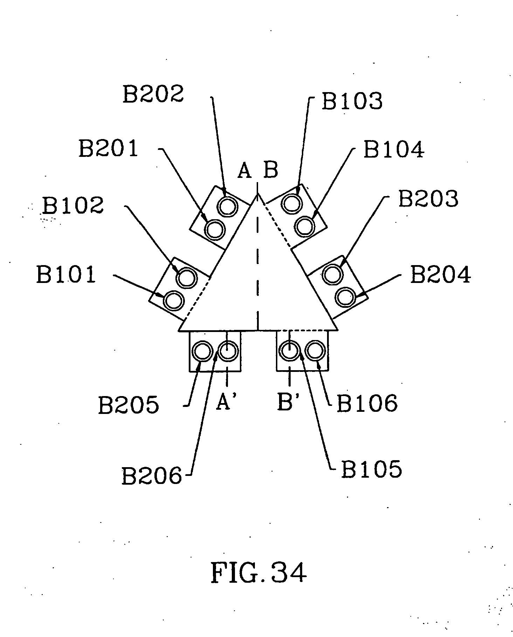

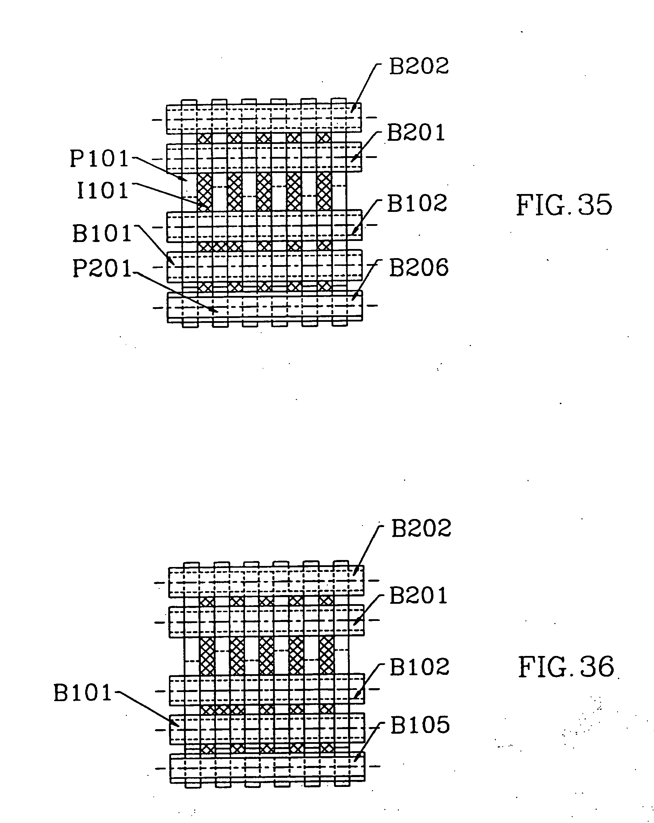

   3) Figure 33 is a 3-D decomposed schematic diagram of an application example of the electricity storage/ discharge device with low internal resistance current collector structure illustrating that three sides of the triangular shape electrode plate are respectively installed with two in-line conductor through holes and an isolating space, figure 34 is a front view of figure 33, figure 35 is the A-A' sectional view of figure 34, figure 36 is the B-B' sectional view of figure 34, wherein the application examples illustrated in figures 33~36 are mainly characterized in that three sides of the positive electrode plate P101 of the electricity storage and discharge device are respectively installed with two neighboring conductor through holes C101, C102, C103, C104, C105, C106 and have respectively preserved an isolating space S101, S102, S133, while three sides of the negative electrode plate P201 are respectively installed with two neighboring conductor through holes C201, C202, C203, C204, C205, C206 and have respectively preserved an isolating space S201, S202, S203; therein the positive and negative electrode plates are cross laminated, and an isolator plate I101 is installed between the two neighboring electrode plates in different polarities, whereby the positive electrode conductor rods B101, B102, B103, B104, B105, B106 and the negative electrode conductor rods B201, B202, B203, B204, B205, B206 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

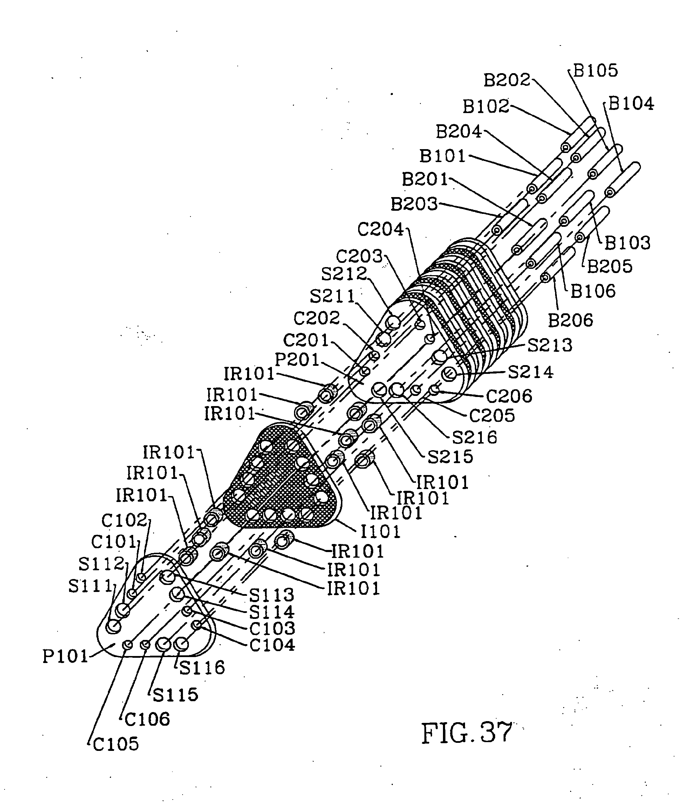

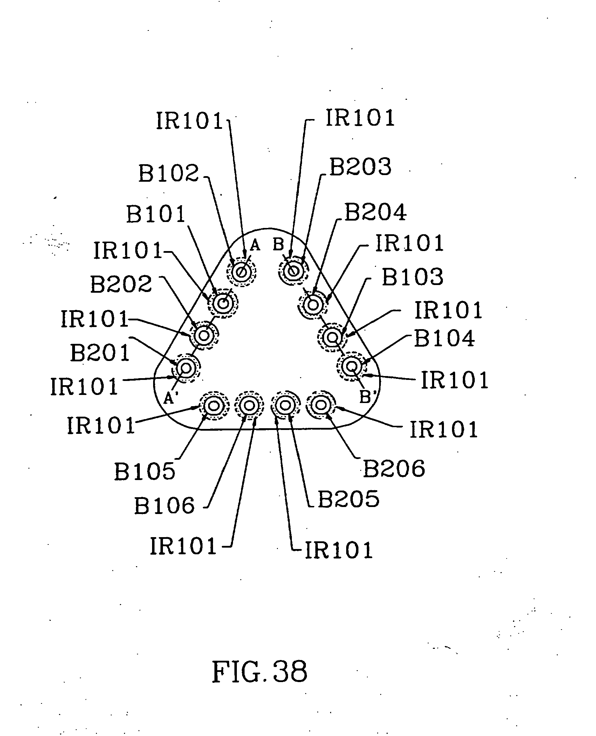

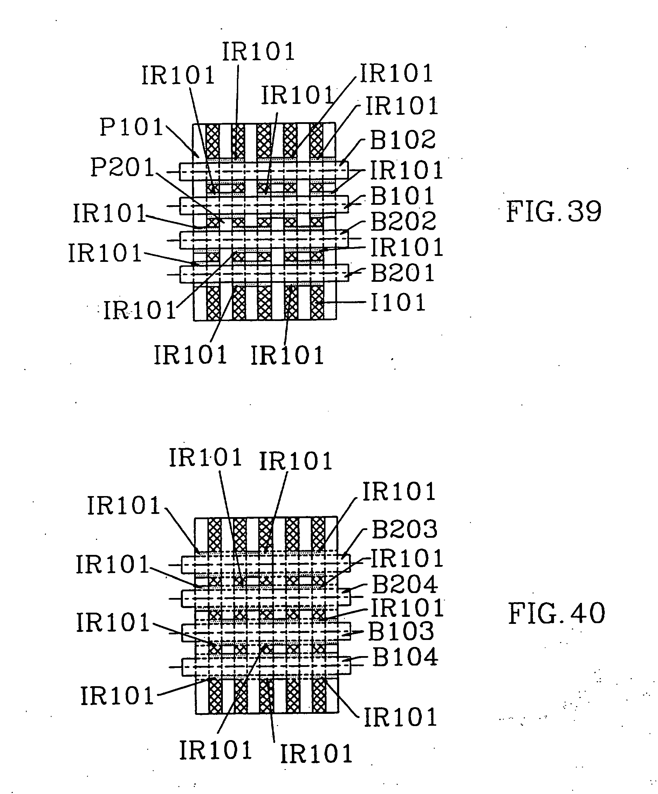

   4) Figure 37 is a 3-D decomposed schematic diagram of an application example of the electricity storage/ discharge device with low internal resistance current collector structure illustrating three sides of the triangular shape electrode plate are respectively installed with two in-line conductor through holes and two isolating through holes, figure 38 is a front view of figure 37, figure 39 is tne A-A' sectional view of figure 38, figure 40 is the B-B' sectional view of Figure 38, wherein the application examples illustrated in figures 37∼40 are mainly characterized in that three sides of the positive electrode plate P101 of the electricity storage and discharge device are respectively installed with two neighboring conductor through holes C101, C102, C103, C104, C105, C106 and have respectively preserved two neighboring isolating holes S111, S112, S113, S114, S115, S116, while three sides of the negative electrode plate P201 are respectively installed with two neighboring conductor through holes C201, C202, C203, C204, C205, C206 and have respectively preserved two neighboring isolating through holes S211, S212, S213, S214, S215, S216; therein the positive and negative electrode plates are cross laminated, and an isolator plate I101 is installed between the two neighboring electrode plates in different polarities, whereby the positive electrode conductor rods B101, B102, B103, B104, B105, B106 and the negative electrode conductor rods B201, B202, B203, B204, B205, B206 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

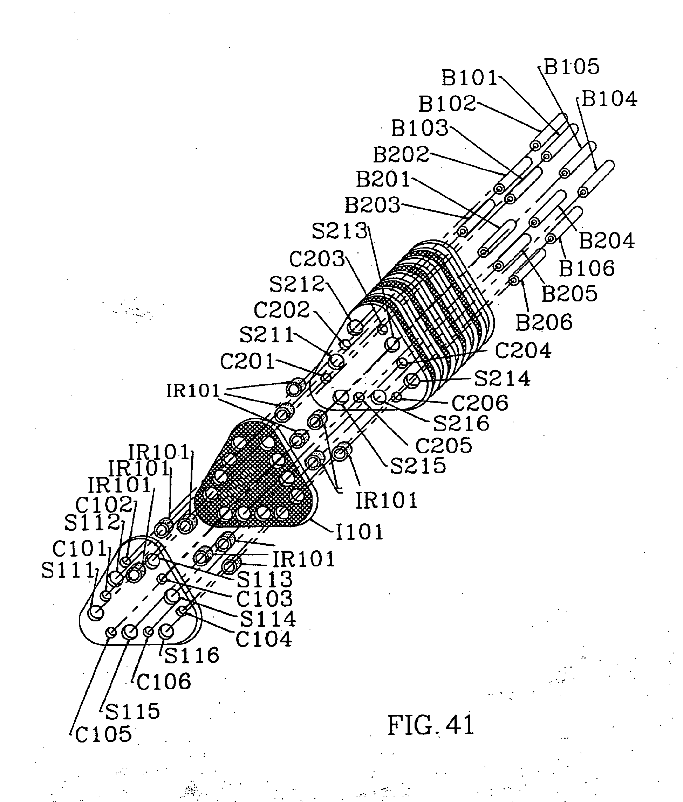

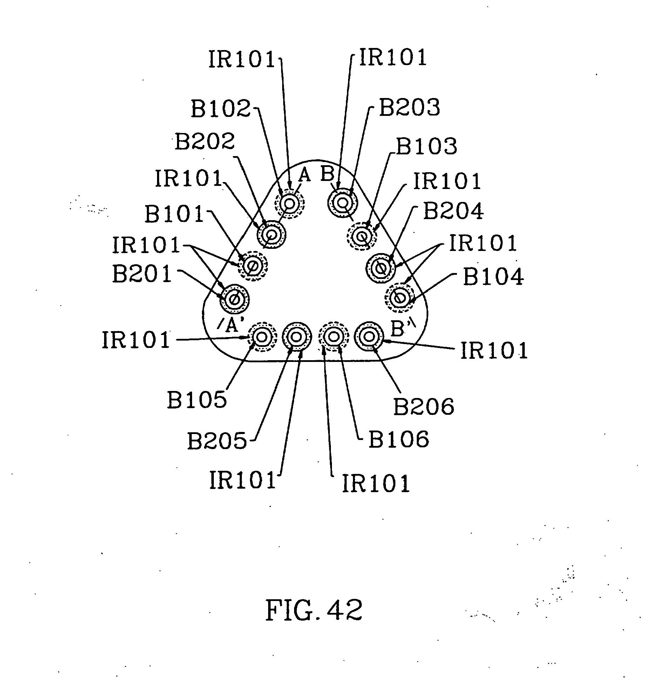

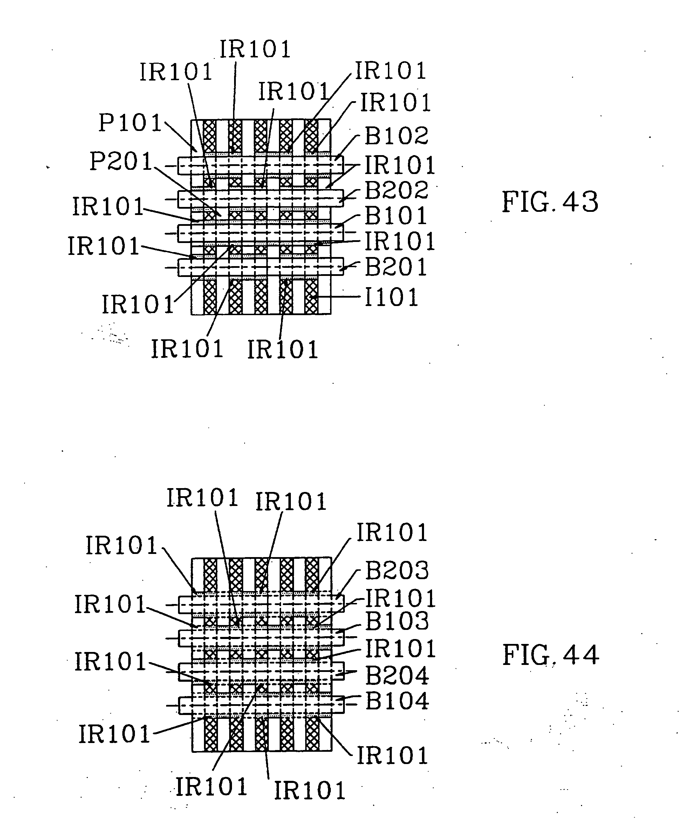

   5) Figure 41 is a 3-D decomposed schematic diagram of an application example of the electricity storage/ discharge device with low internal resistance, current collector structure illustrating three sides of the triangular snape electrode plate are respectively cross installed with two conductor through holes and two isolating through holes, figure 42 is a front view of figure 41, figure 43 is the A-A' sectional view of figure 42, figure 44 is the B-B' sectional view of figure 42, wherein the application examples illustrated in figures 41~44 are mainly characterized in that three sides of the positive electrode plate P101 of the electricity storage and discharge device are respectively cross installed with two conductor through holes C101, C102, C103, C104, C105, C106 and respectively cross installed with two isolating holes S111, S112, S113, S114, S115, S116 while three sides of the negative electrode plate P201 are respectively cross installed with two conductor through holes C201, C202, C203, C204, C205, C206 and respectively installed with two isolating through holes S211, S212, S213, S214, S215, S216; therein the positive and negative electrode plates are cross laminated, and an isolator plate I101 is installed between the two neighboring electrode plates in different polarities, whereby the positive electrode conductor rods B101, B102, B103, B104, B105, B106 and the negative electrode conductor rods B201, B202, B203, B204, B205, B206 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities, for series combinations;
C. The application examples of which four sides of the quadrilateral or quasi-quadrilateral shape electrode plates are respective installed with current conauctor through holes, including:

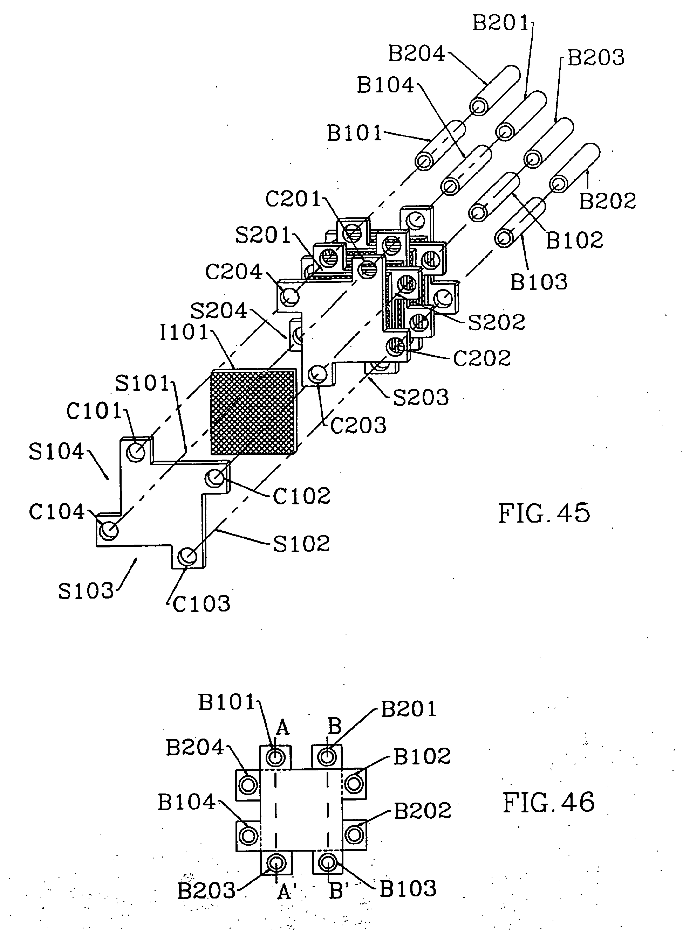

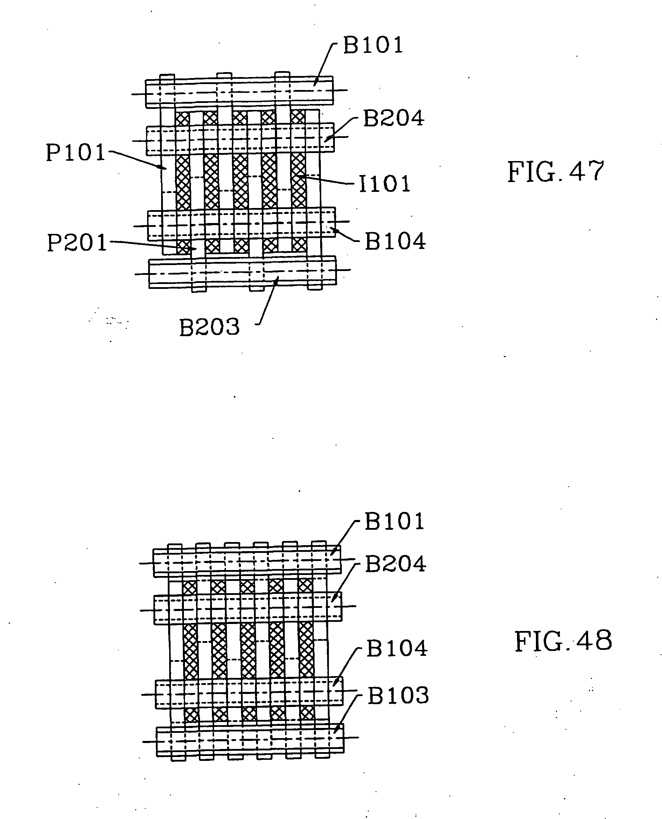

   1) Figure 45 is a 3-D decomposed schematic diagram of an application example of the electricity storage/ discharge device with low internal resistance current collector structure illustrating that four sides of the quadrilateral shape electrode plate are respectively installed with conductor through holes and an isolating space, figure 46 is a front view of figure 45, figure 47 is the A-A' sectional view of figure 46, figure 48 is the B-B' sectional view of figure 46, wherein the application examples illustrated in figures 45~48 are mainly characterized in that four sides of the positive electrode plate P101 of the electricity storage and discharge device are respectively installed with a conductor through hole C101, C102, C103, C104 and have respectively preserved an isolating space S101, S102, S103, S104 while four sides of the negative electrode plate P201 are respectively installed with a conductor through holes C201, C202, C203, C204 and have respectively preserved an isolating space S201, S202, S203, S204; therein the positive and negative electrode plates are cross laminated, and an isolator plate I101 is installed between the two neighbouring electrode plates in different polarities, whereby the positive electrode conductor rods B101, B102, B103, B104 and the negative electrode conductor rods B201, B202, 3203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

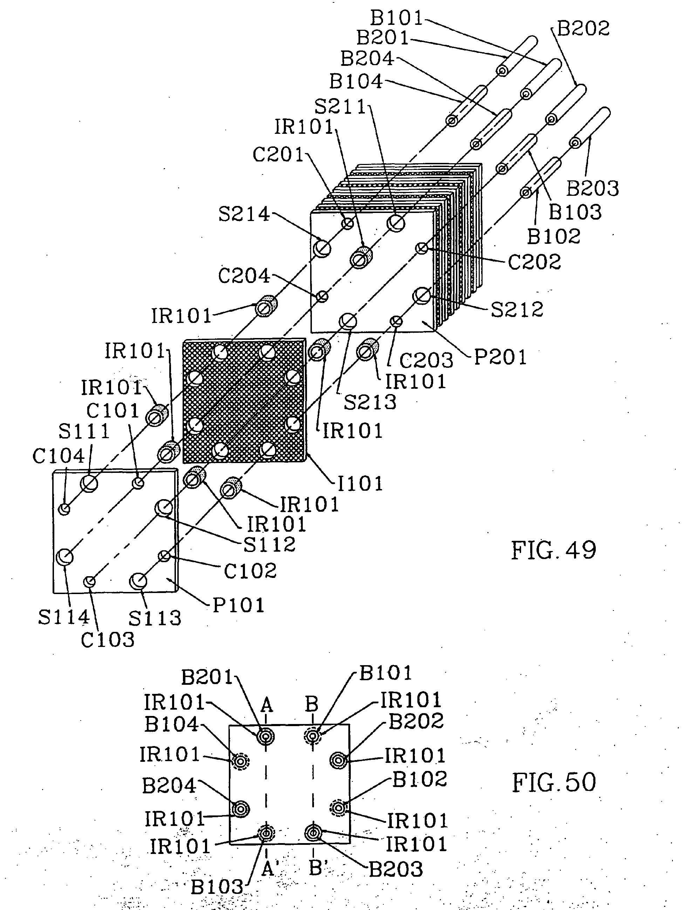

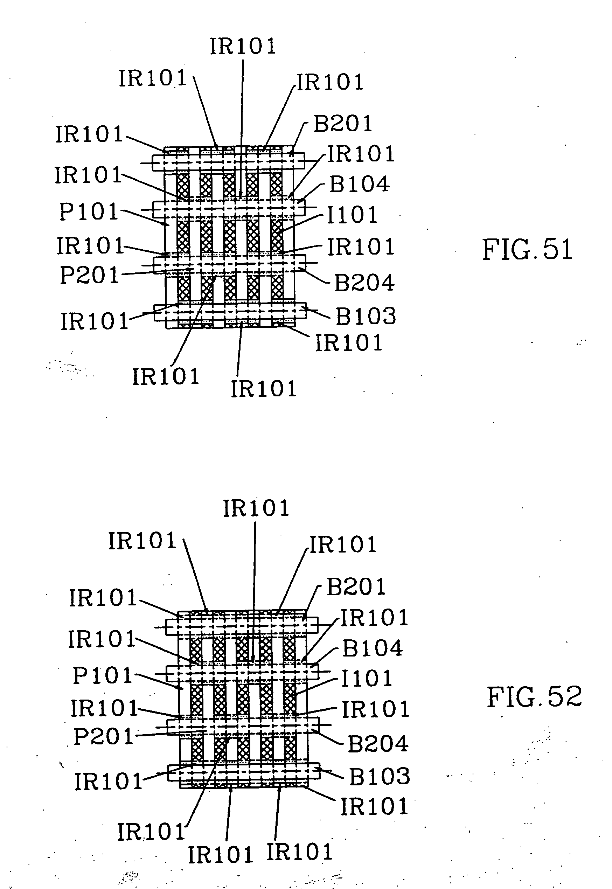

   2) Figure 49 is a 3-D decomposed schematic diagram of an application example of the electricity storage/ discharge device with low internal resistance current collector structure illustrating that four sides of the quadrilateral shape electrode plate are respectively installed with a conductor through hole and an isolating through hole, figure 50 is a front view of figure 49, figure 51 is the A-A' sectional view of figure 50, and figure 52 is the B-B' sectional view of figure 50, wherein the application examples illustrated in figures 49~52 are mainly characterized in that four sides of the positive electrode plate P101 of the electricity storage and discharge device are respectively installed with a conductor through hole C101, C102, C103, C104 and respectively installed with an isolating through hole S111, S112, S113, S114 while four sides of the negative electrode plate P201 are respectively installed with a conductor through holes C201, C202, C203, C204 and respectively installed with an isolating through hole S211, S212, S213, S214; therein the positive and negative electrode places are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;
D. The application examples of which the circular or quasi-circular shape electrode plates are respective cross installed with current conductor through holes, including:

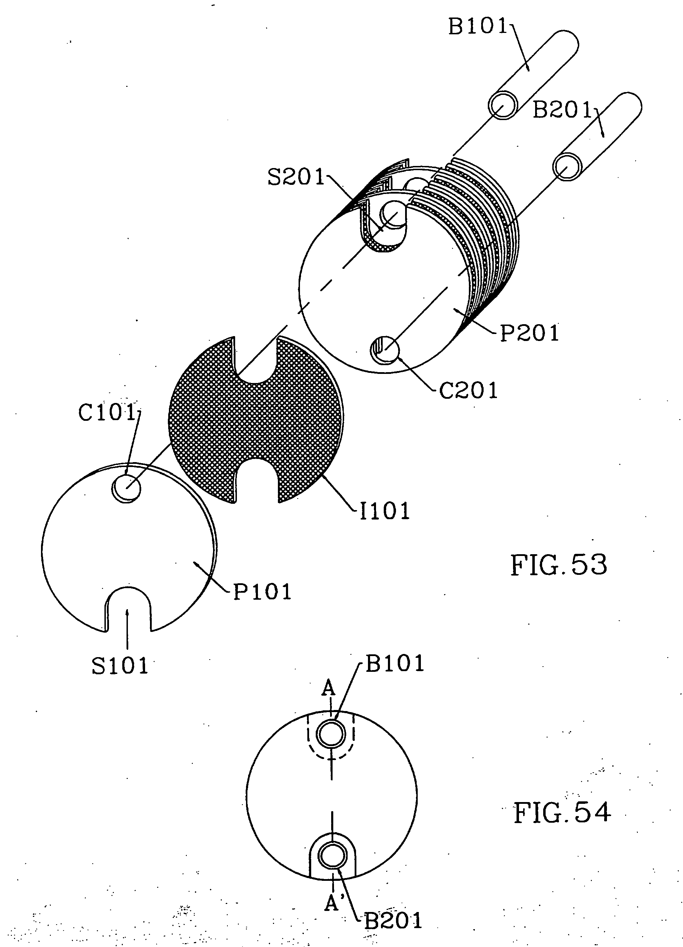

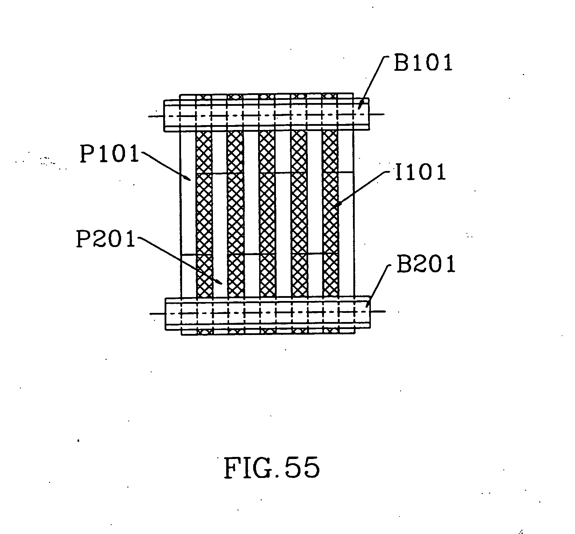

   1) Figure 53 is a 3-D decomposed schematic diagram of an application example of the electricity storage/discharge device with low internal resistance current collector structure illustrating that the circular or quasi-circular shape electrode plates in different polarities are respectively cross installed with a conductor through hole and an isolating notch, figure 54 is a front view of figure 53, figure 55 is the A-A' sectional view of figure 54, wherein the application examples illustrated in figures 53~55 are mainly characterized in that one end of the circular or quasi-circular positive electrode plate P101 of the electricity storage and discharge device is installed with a conductor through hole C101, while the other end is provided with an isolating space S101, wherein one end of the circular or quasi-circular negative electrode plate P201 is installed with a conductor through hole C201, while the other end is provided with an isolating space S201; therein the positive and negative electrode plates are cross laminated, and an isolator plate I101 is installed between the two neighboring electrode plates in different polarities, whereby the positive electrode conductor rod B101 and the negative electrode conductor rod B201 are respectively penetrated through tne aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

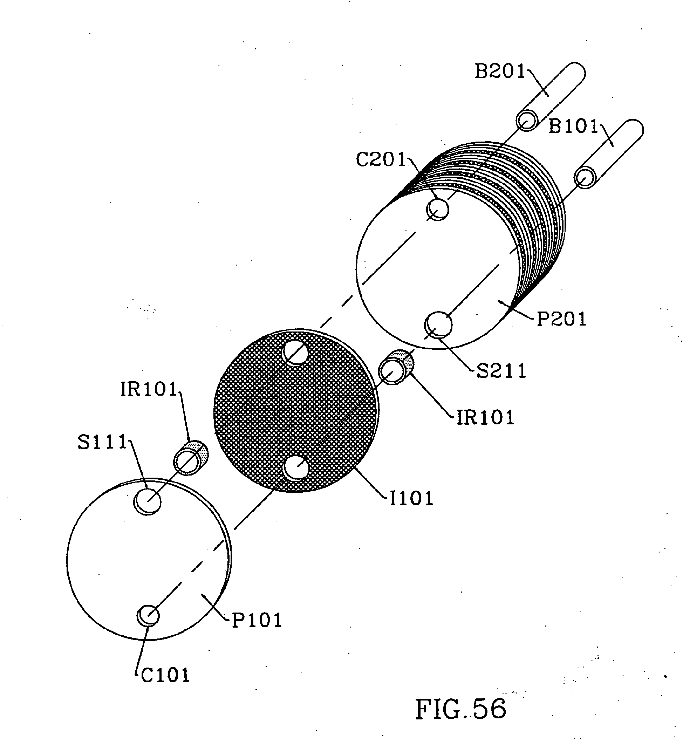

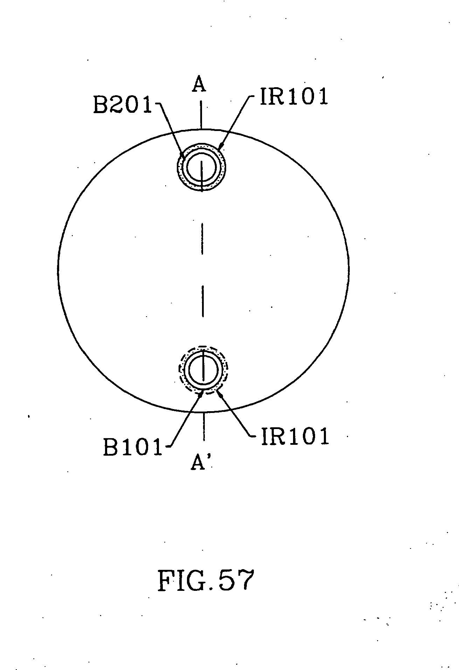

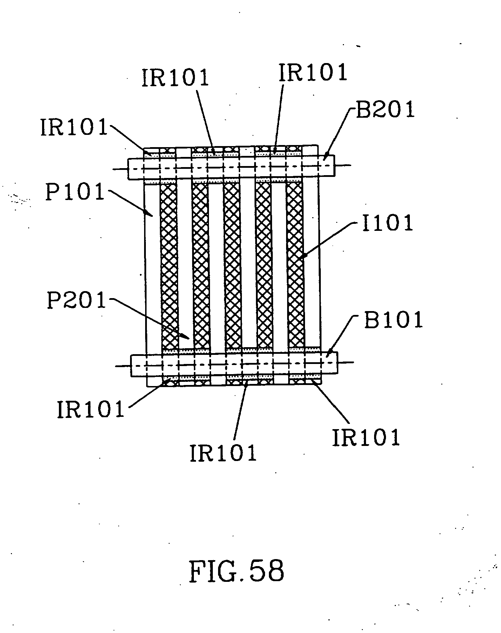

   2) Figure 56 is a 3-D decomposed schematic diagram of an application example of the electricity storage/ discharge device with low internal resistance current collector structure illustrating that the circular or quasi-circular snape electrode plates in different polarities are respectively intercross installed with a conductor through nole and an isolating through hole near to the plate central region, figure 57 is a front view of figure 56 and figure 58 is the A-A' sectional view of figure 57, wherein the application examples illustrated in figures 56~58 are mainly characterized in that one end of the circular or quasi-circular positive electrode plate P101 of the electricity storage and discharge device is installed with a conductor through hole C101, while the other end is provided with an isolating through hole S111, wherein one end of the circular or quasi-circular negative electrode plate P201 is installed with a conductor through hole C201, while the other end is provided with an isolating through hole S211; therein the positive and negative electrode plates are cross laminated, and an isolator plate I101 is installed between the two neighboring electrode plates in different polarities, whereby the positive electrode conductor rod B101 and the negative electrode conductor rod B201 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collectec output or the input current diffused from the conductor rod to the surrounding area in multiple circuits, thereby to reduce the internal resistance;

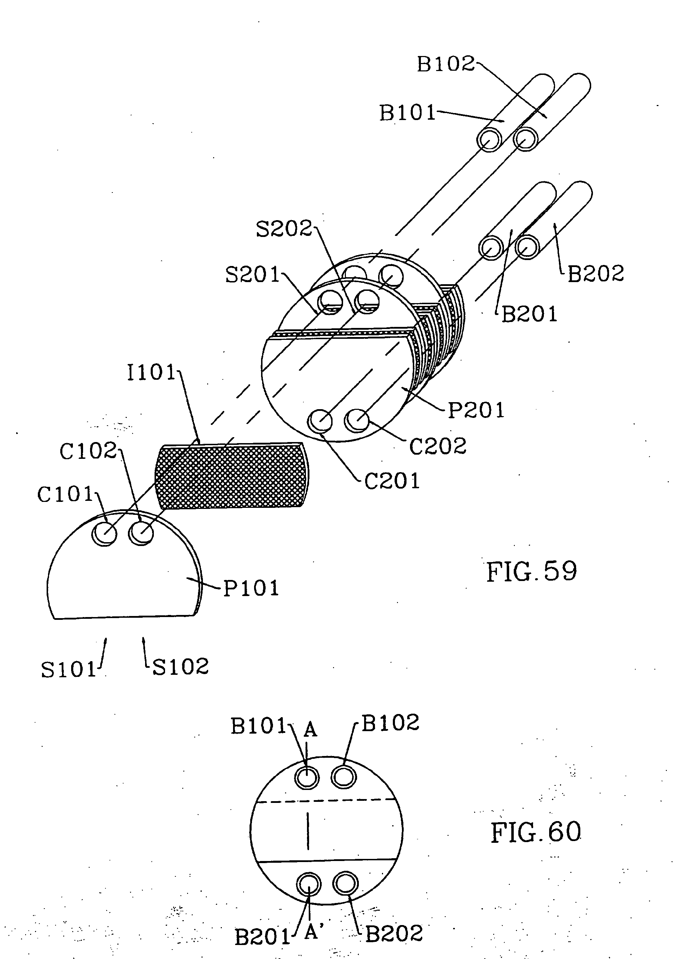

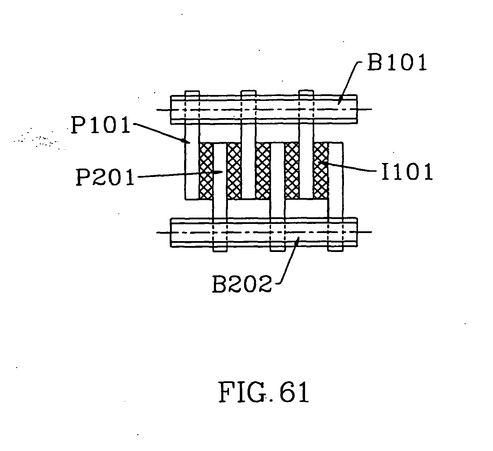

   3) Figure 59 is a 3-D decomposed schematic diagram of an application example of the electricity storage/ discharge device with low internal resistance current collector structure illustrating that the circular or quasi-circular shape electrode plates in different polarities are respectively installed with two in-line conductor through holes and an isolating space at the exterior sides of plates, figure 60 is a front view of figure 59 and figure 61 is the A-A' sectional view of figure 60, wherein the application examples illustrated in figures 59~61 are mainly characterized in that exterior ends of the circular or quasi-circular positive electrode plates P101 of the electricity storage and discharge device are respectively cross installed with two neighboring conductor through holes C101, C102 as well as respectively cross installed with two isolating spaces S101, S102, while exterior ends of the circular or quasi-circular negative electrode plates P201 are respectively cross installed with two neighboring conductor through holes C201, C202 as well as respectively cross installed with two isolating spaces S201, S202; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

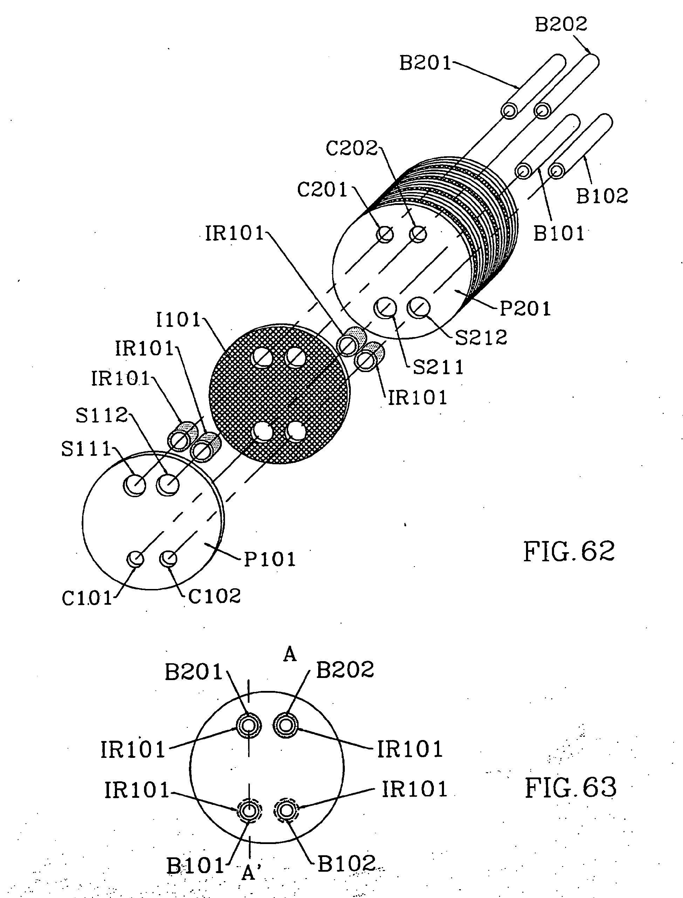

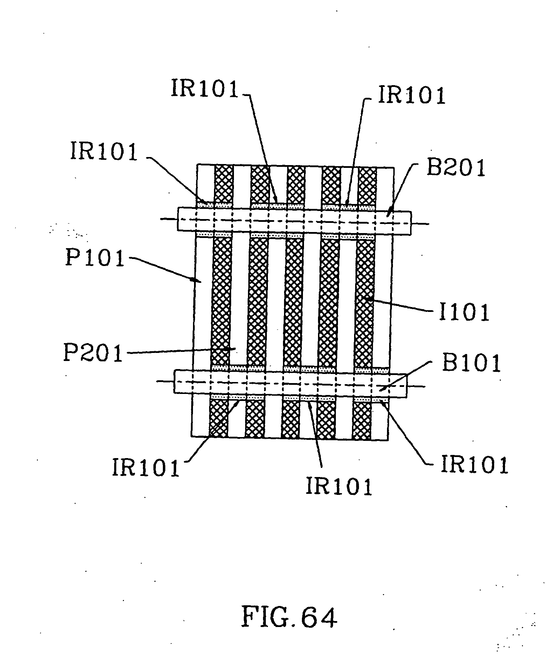

   4) Figure 62 is a 3-D decomposed schematic diagram of an application example of the electricity storage/ discharge device with low internal resistance current collector structure illustrating that the circular or quasi-circular shape electrode plates in different polarities are respectively installed with two in-line conductor through holes and an isolating space at the exterior sides of plates, figure 63 is a front view of figure 59, figure 64 is the A-A' sectional view of figure 60, wherein the application examples illustrated in figures 62~64 are mainly characterized in that exterior ends of the circular or quasi-circular positive electrode plates P101 of the electricity storage and discharge device are respectively cross installed with two conductor through noles C101, C102 as well as respectively cross installed with two neighboring isolating through holes S111, S112, while exterior enas of the circular or quasi-circular negative electrode plates P201 are respectively cross installed with two conductor through holes C201, C202 as well as respectively cross installed with two neighboring isolating through holes S211, S212; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

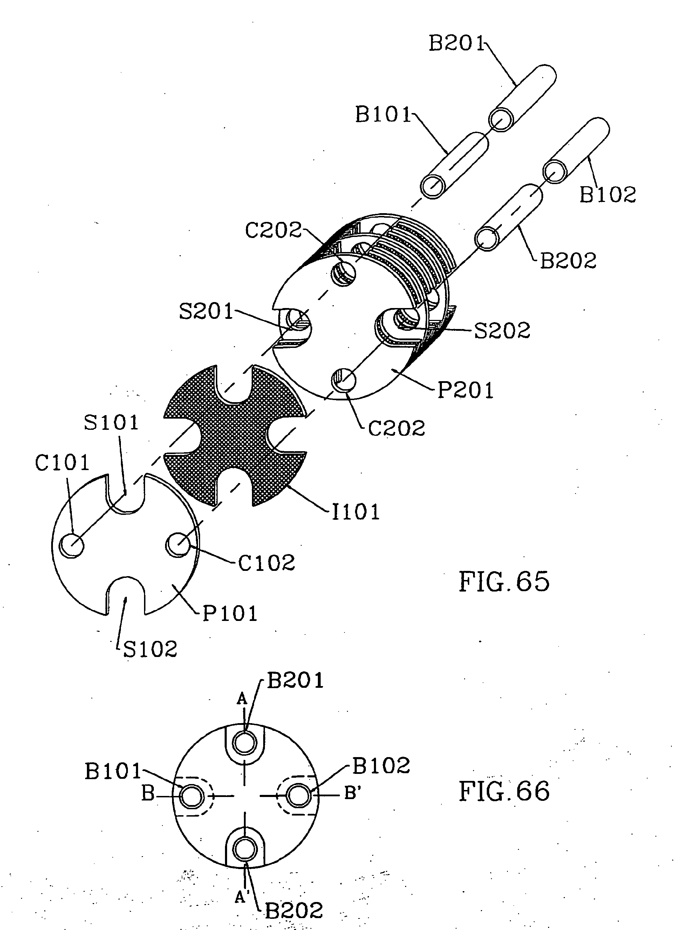

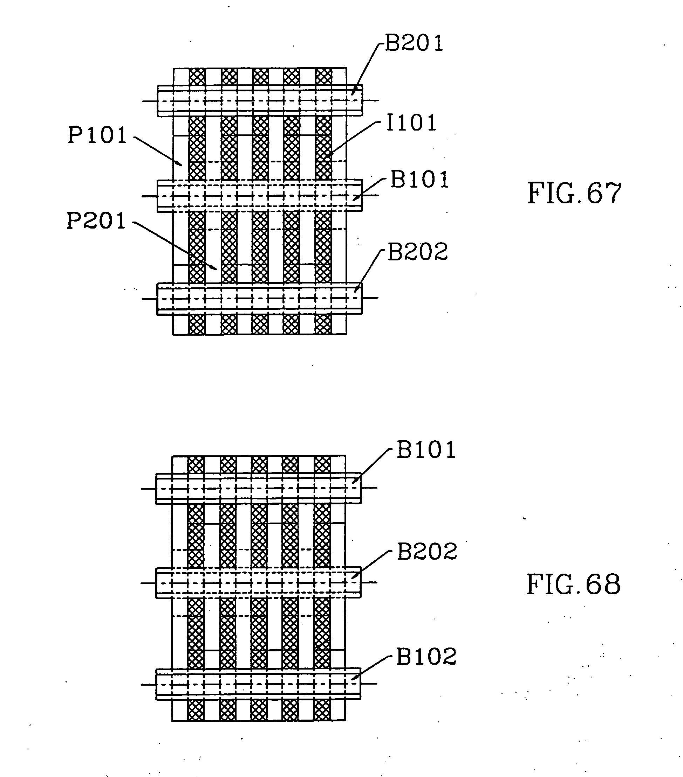

   5) Figure 65 is a 3-D decomposed schematic diagram of an application example of the electricity storage/ discharge device with low internal resistance current collector structure illustrating that the circular or quasi-circular shape electrode plates in different polarities are respectively intercross installed with two conductor through holes and two isolating notches at the exterior sides of plates, figure 66 is a front view of figure 65, figure 67 is the A-A' sectional view of figure 66, and figure 68 is the B-B' sectional view of figure 66, wherein the application examples illustrated in figures 65~68 are mainly characterized in that exterior ends of the circular or quasi-circular positive electrode plates P101 of the electricity storage and discharge device are respectively cross installed with two conductor through holes C101, C102 as well as respectively cross installed with two isolating notches S111, S112, while exterior ends of the circular or quasi-circular negative electrode plates P201 are respectively cross installed with two conductor through holes C201, C202 as well as respectively cross installed with two isolating notches S211, S212; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of tne conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

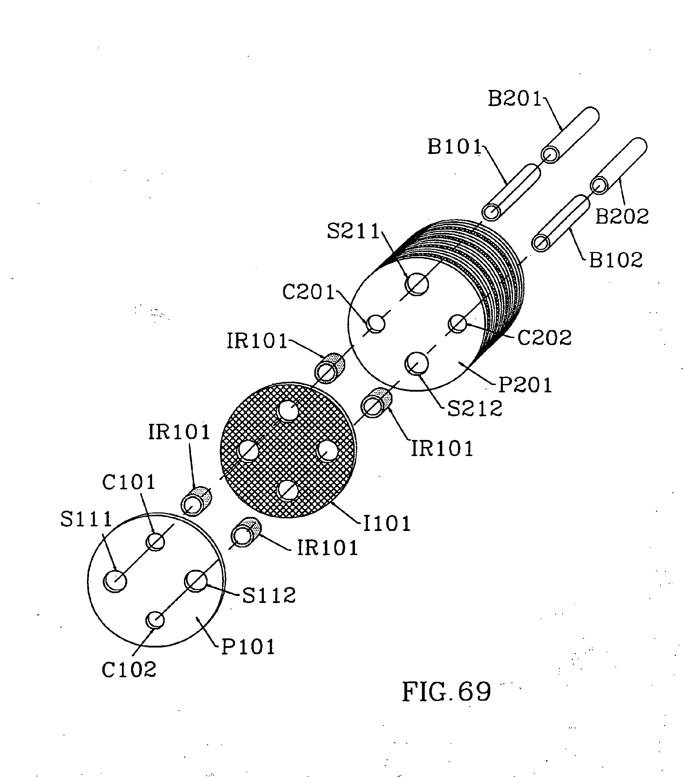

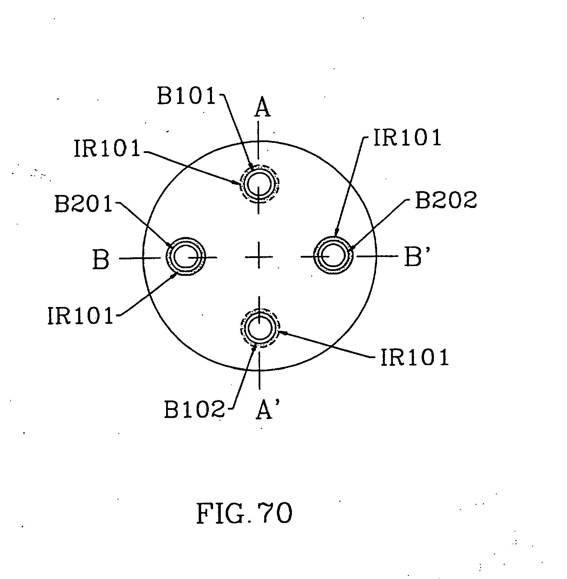

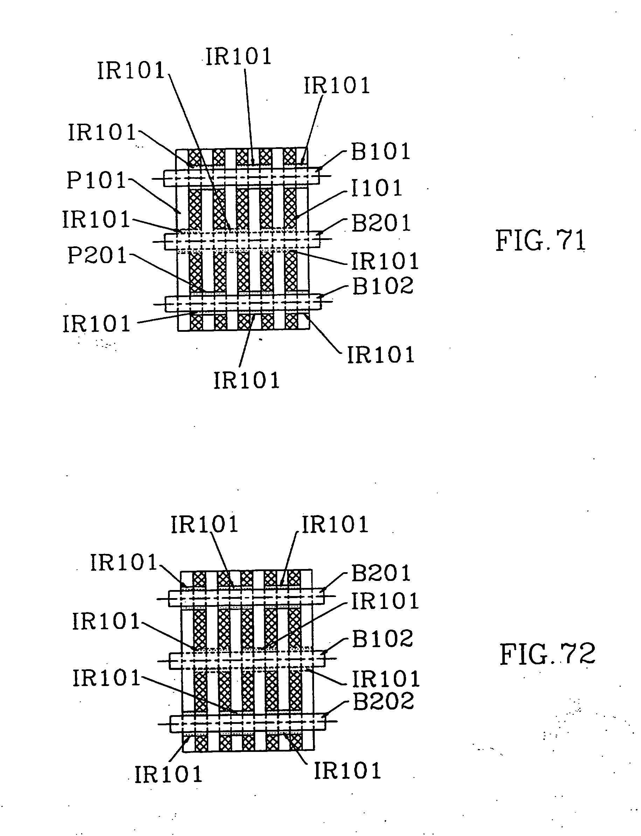

   6) Figure 69 is a 3-D decomposed schematic diagram of an application example of the electricity storage/ discharge device with low internal resistance current collector structure illustrating that the circular or quasi-circular shape electrode plates in different polarities are respectively intercross installed with two conductor through holes and two isolating through holes near to plate central region, figure 70 is a front view of figure 69, figure 71 is the A-A' sectional view of figure 70, and figure 72 is the B-B' sectional view of figure 70, wherein the application examples illustrated in figures 69~72 are mainly characterized in that exterior ends of the circular or quasi-circular positive electrode plates P101 of the electricity storage and discharge device are respectively cross installed with two conductor through holes C101, C102 as well as respectively cross installed, with two isolating through holes S111, S112, while exterior ends of the circular or quasi-circular negative electrode plates P201 are respectively cross installed witn two conductor through holes C201, C202 as well as respectively cross installed with two isolating through holes S211, S212; therein the positive and negative electrode plates are cross laminated, and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;
E. The application examples of which the exterior ends of the symmetrical or quasi-symmetrical electrode plates are respectively symmetrically installed with current conductor through holes, including:

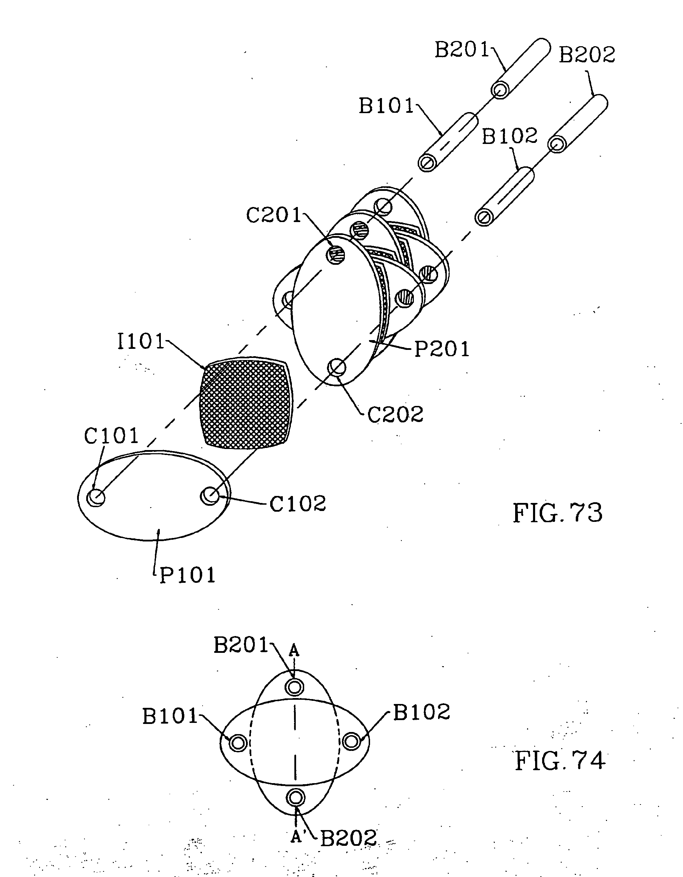

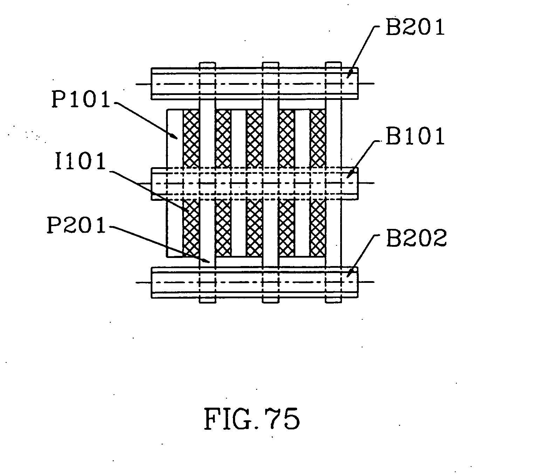

   1) Figure 73 is a 3-D decomposed schematic diagram of an application example of the electricity storage/ discharge device with low internal resistance current collector structure illustrating that the two symmetrical extreme ends of the elliptical or quasi-elliptical shape electrode plates are respectively installed with a conductor through hole, figure 74 is a front view of figure 73, and figure 75 is the A-A' sectional view of figure 74, wherein the application examples illustrated in figures 73∼75 are mainly characterized in that two symmetrical exterior ends of the positive electrode plates P101 of the electricity storage and discharge device are respectively installed with a conductor through hole C101, C102, while the two symmetrical exterior ends of negative electrode plates P201 are respectively installed with a conductor through hole C201, C202; therein the aforesaid elliptical or quasi-elliptical electrode plates in different polarities are cross laminated, whereby an isolating space is formed by the non-laminated regions between the two neighboring laminated electrode plates and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

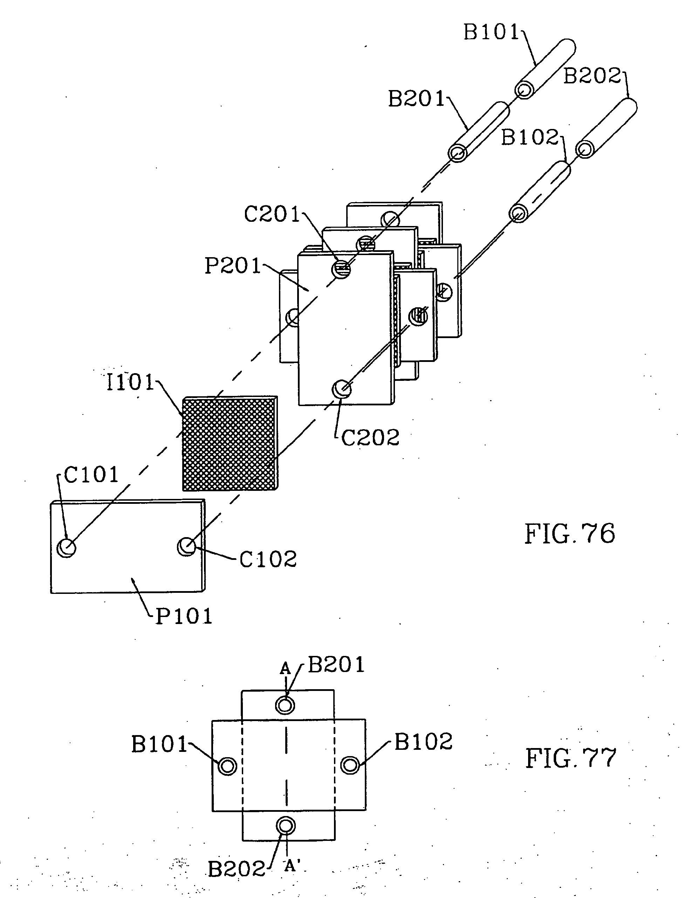

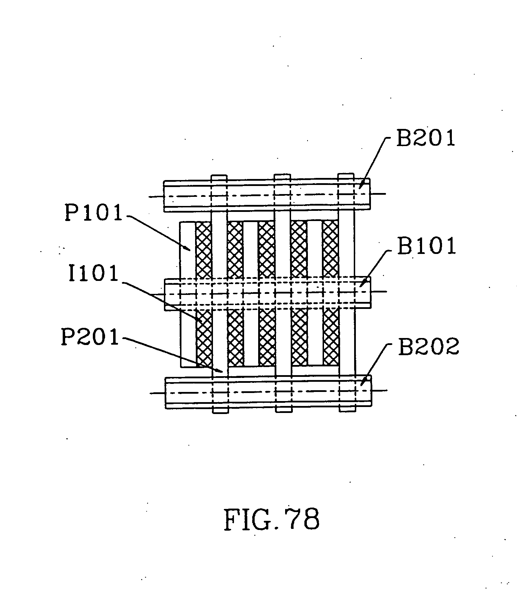

   2) Figure 76 is a 3-D decomposed schematic diagram of an application example of the electricity storage/ discharge device with low internal resistance current collector structure illustrating that the two symmetrical extreme ends of the rectangular or quasi-rectangular shape electrode plates are respectively installed with a conductor through hole, figure 77 is a front view of figure 76, and figure 78 is the A-A' sectional view of figure 76, wherein the application examples illustrated in figures 76~78 are mainly characterized in that two symmetrical exterior ends of the positive electrode plates P101 of the electricity storage and discharge device are respectively installed with a conductor through hole C101, C102, while the two symmetrical exterior ends of negative electrode plates P201 are respectively installed with a conductor through hole C201, C202; therein the aforesaid rectangular or quasi-rectangular electrode plates in different polarities are cross laminated, whereby an isolating space is formed by the non-laminated regions between the two neighboring laminated electrode plates and an isolator plate I101 is installed between the two neighboring electrode plates in different polarities, whereby the positive electrode conductor rods B101, B102 and the negative electrode conductor rods B201, B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

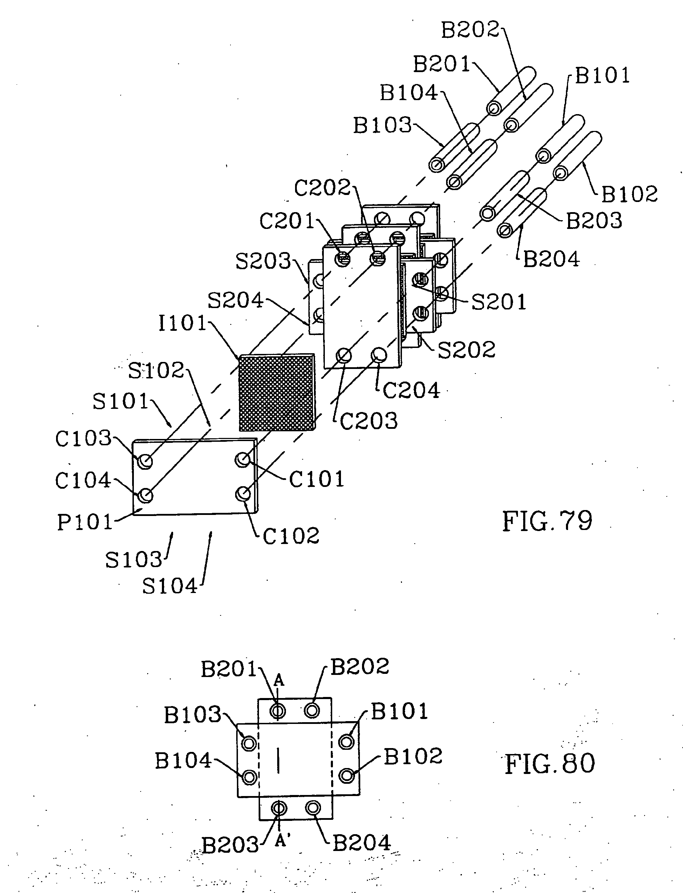

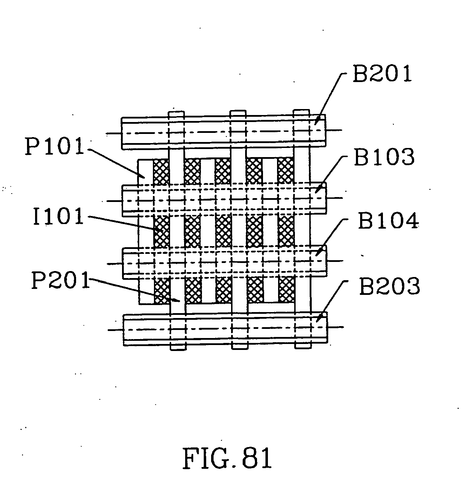

   3) Figure 79 is a 3-D decomposed schematic diagram of an application example of the electricity storage/ discharge device with low internal resistance current collector structure illustrating that the two symmetrical exterior sides of the rectangular or quasi-rectangular shape electrode plates are respectively installed with two in-line conductor through holes, figure 80 is a front view of figure 79, and figure 81 is the A-A' sectional view of figure 80, wherein the application examples illustrated in figures 79~81 are mainly characterized in that two symmetrical exterior ends of the positive electrode plates P101 of the electricity storage and discharge device are respectively installed with two neighboring conductor through holes C101, C102, C103, C104 while the two symmetrical exterior ends of negative electrode plates P201 are respectively installed with two neighboring conductor through holes C201, C202, C203, C204; therein the aforesaid rectangular or quasi-rectangular electrode plates in different polarities are cross laminated, whereby an isolating space is formed by the non-laminated regions between the two neighboring laminated electrode plates and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of tne conductor rods are respectively penetrated through and jointed with the electrode plates in different polarities for series combinations;

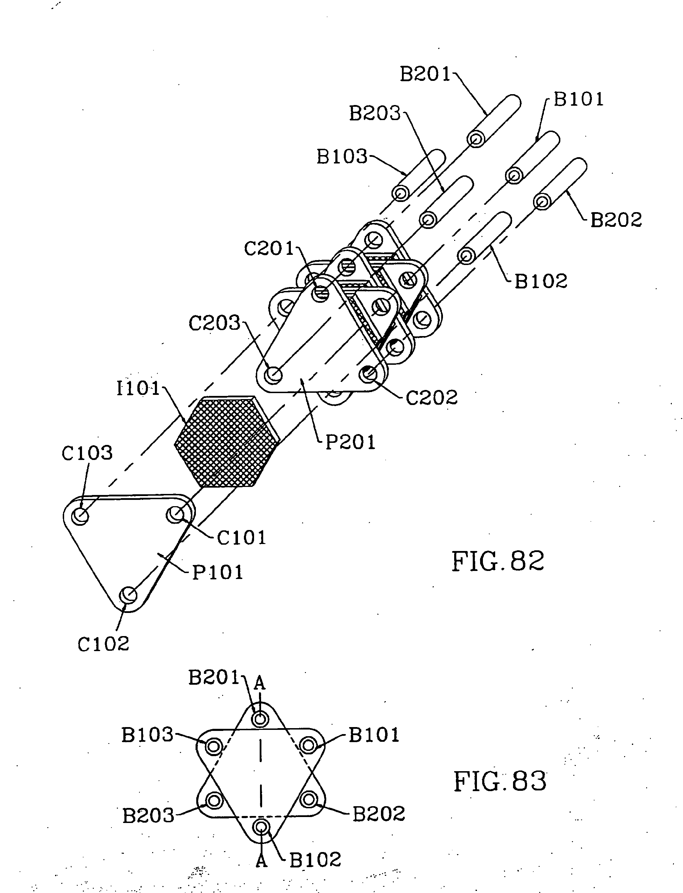

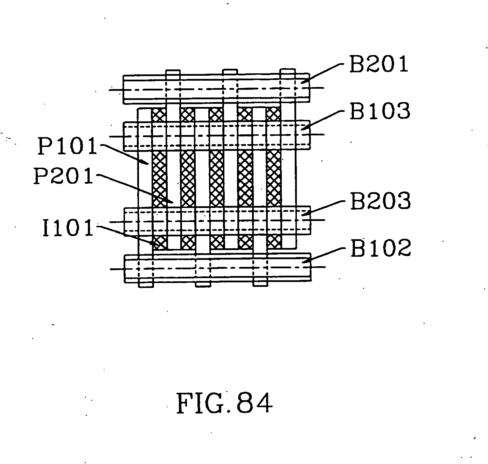

   4) Figure 82 is a 3-D decomposed schematic diagram of an application example of the electricity storage/ discharge device with low internal resistance current collector structure illustrating that three sides of the triangular or quasi-triangular shape electrode plates are respectively installed with a conductor through hole, figure 83 is a front view of figure 82, figure 84 is the A-A' sectional view of figure 83, wherein the application examples illustrated in figures 82~84 are mainly characterized in that the exterior sides of the triangular positive electrode plates P101 of the electricity storage and discharge device are respectively installed with a conductor through holes C101, C102, C103 while the exterior sides of the triangular negative electrode plates P201 are respectively installed with a conductor through holes C201, C202, C203; therein the aforesaid triangular or quasi-triangular electrode plates in different polarities are cross laminated, whereby an isolating space is formed by the non-laminated regions between the two neighboring laminated electrode plates and an isolator plate I101 is installed between the two neighboring electrode plates in different polarities, whereby the positive electrode conductor rods B101, B102, B103 and the negative electrode conductor rods B201, B202, B203 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

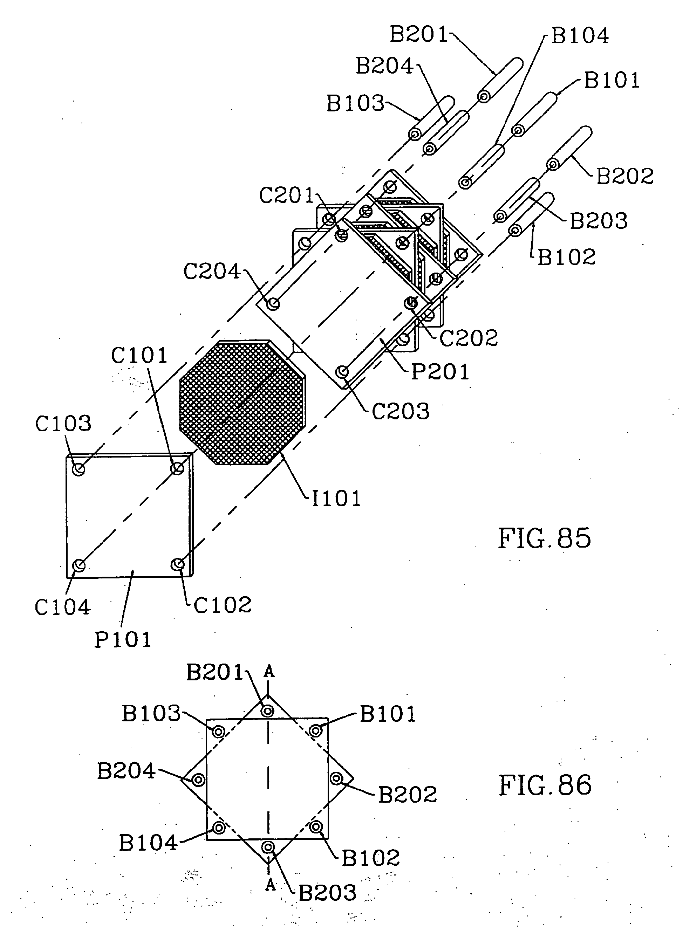

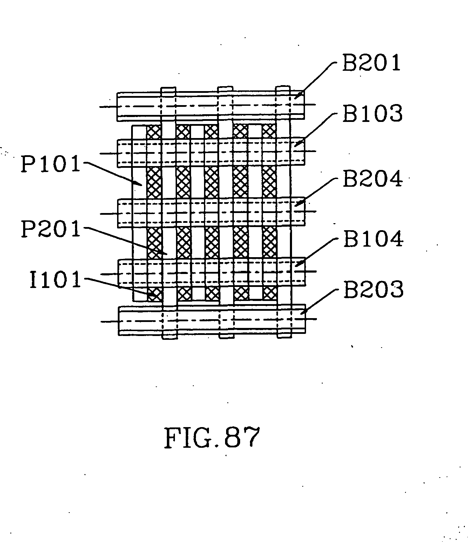

   5) Figure 85 is a 3-D decomposed schematic diagram of an application example of the electricity storage/ discharge device with low internal resistance current collector structure illustrating that the four exterior sides of the symmetrical quadrilateral or quasi-quadrilateral shape electrode plates are respectively installed with a conductor through hole, figure 86 is a front view of figure 85, and figure 87 is the A-A' sectional view of figure 86, wherein the application examples illustrated in figures 85~87 are mainly characterized in that the exterior sides of the symmetrical quadrilateral shape positive electrode plates P101 of the electricity storage and discharge device are respectively installed with a conductor through holes C101, C102, C103, C104 while the-exterior ends of the quadrilateral shape negative electrode plates P201 are respectively installed with a conductor through holes C201, C202, C203, C204; therein the aforesaid electrode plates in different polarities are cross laminated, whereby an isolating space as formed by the non-laminated regions between the two neighboring laminated electrode plates and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

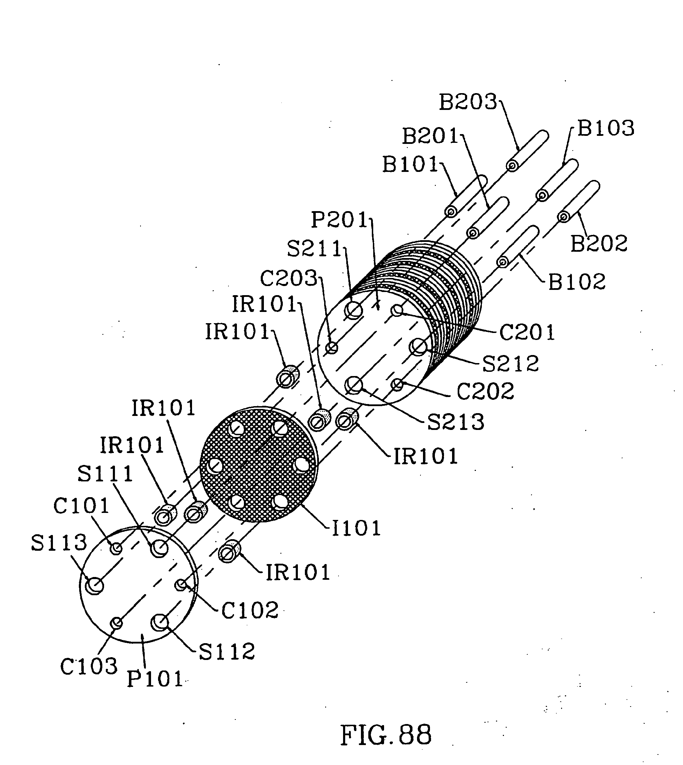

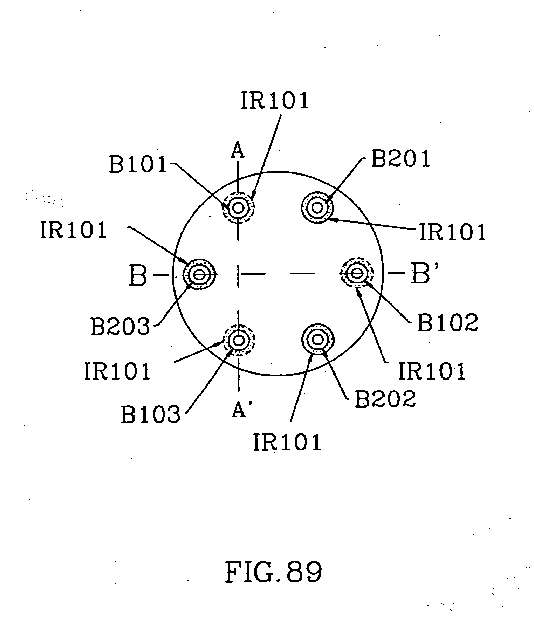

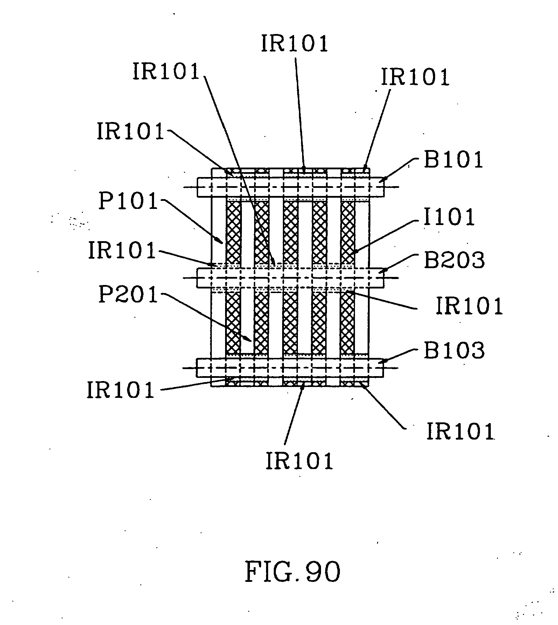

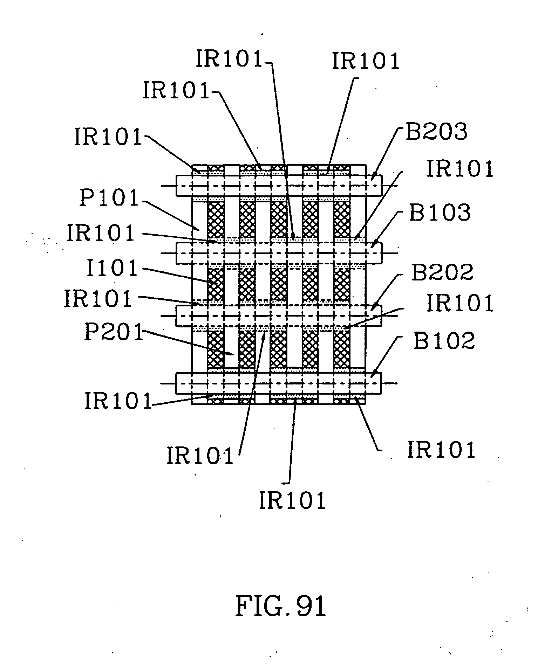

   6) Figure 88 is a 3-D decomposed schematic diagram of an application example of the electricity storage/ discharge device with low internal resistance current collector structure illustrating that the exterior side of the circular or quasi-circular shape electrode plates is respectively intercross installed with conductor through holes and isolating through holes, figure 89 is a front view of figure 88, figure 90 is the A-A' sectional view of figure 89, and figure 91 is the B-B' sectional view of figure 89, wherein the application examples illustrated in figures 88~91 are mainly characterized in that the exterior sides of the circular or quasi-circular positive electrode plates P101 of the electricity storage and discharge device are respectively cross installed with a conductor through hole C101, C102,C103,C104,C105,C106 as well as respectively cross installed with isolating through holes S111, S112, S113, S114, S115, S116, while the exterior ends of the circular or quasi-circular negative electrode plates P201 are respectively cross installed with a conductor through hole C201, C202, C203,C204, C205 as well as respectively cross installed with isolating through holes S211, S212, S213, S214, S215, S216; therein the aforesaid circular or quasi-circular electrode plates in different polarities are cross laminated, whereby an isolating space is formed by the non-laminated regions between the two neighboring laminated electrode plates and an isolator plate I101 is installed between the two neighboring electrode plates in different polarities, whereby the positive electrode conductor rods B101, B102, B103, B104, B105, B106 and the negative electrode conductor rods B201, B202, B203, B204, B205, B206 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein it is characterized in that each electrode plate has two or more than two conductor through holes and two or more than two isolating through holes.
F. The application examples of which the central region of the electrode plate is installed with conductor through noles, including:

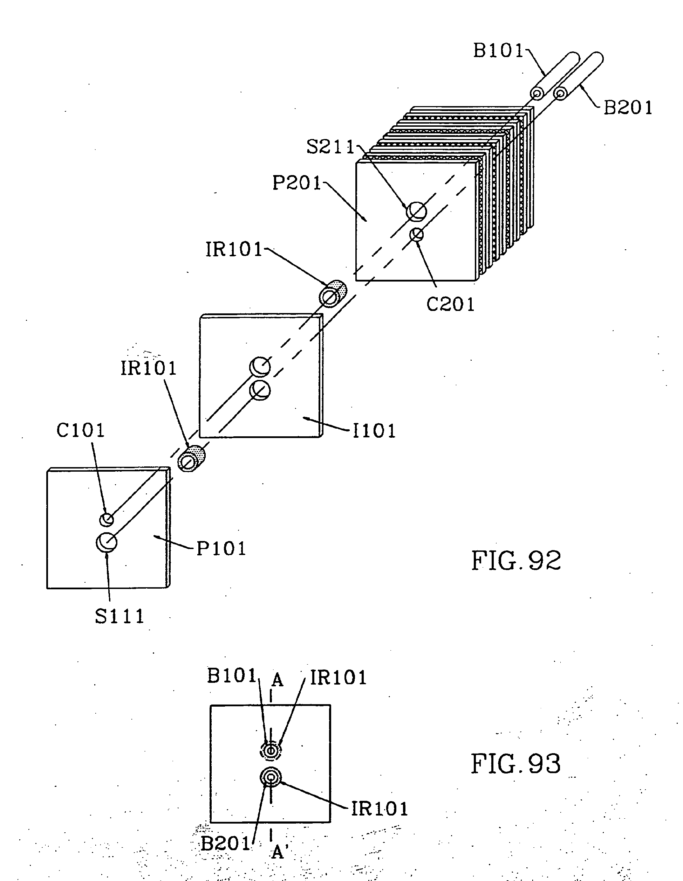

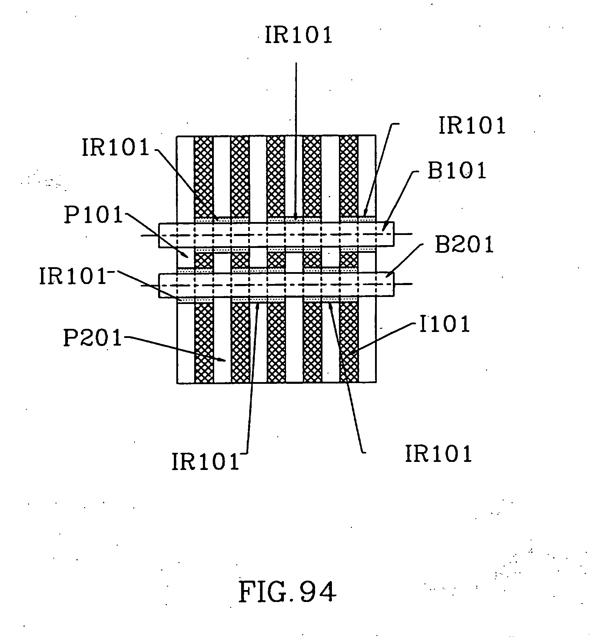

   1) Figure 92 is a 3-D decomposed schematic diagram of ar application example of the electricity storage/ discharge device with low internal resistance current collector structure illustrating that electrode plates in different polarities are respectively provided with a conductor through hole and an isolating through hole near to central region of plate, figure 93 is a front view of figure 92, figure 94 is the A-A' sectional view of figure 93, wherein the application examples illustrated in figures 92~94 are mainly characterized in that a conductor through hole C101 and an isolating through hole S111 are respectively installed at the relative symmetrical positions near to central region of the positive electrode plates P101 of the electricity storage and discharge device, while a conductor through hole C201 and an isolating through hole S211 are respectively installed at the relative symmetrical positions near to central region of the negative electrode plates P201; therein the aforesaid positive and negative electrode plates are cross laminated, and an isolator plate I101 is installed between the two neighboring electrode plates in different polarities, whereby the positive electrode conductor rod B101 and the negative electrode conductor rod B201 are respectively penetrated through the aforesaid conductor through holes, thereby they are respectively penetrated through and joined with the electrode places cf their belonging in tne same polarities for parallel combination current collection, or the two ends of the conductor rods are respectively penetrated through and jointed with tne electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

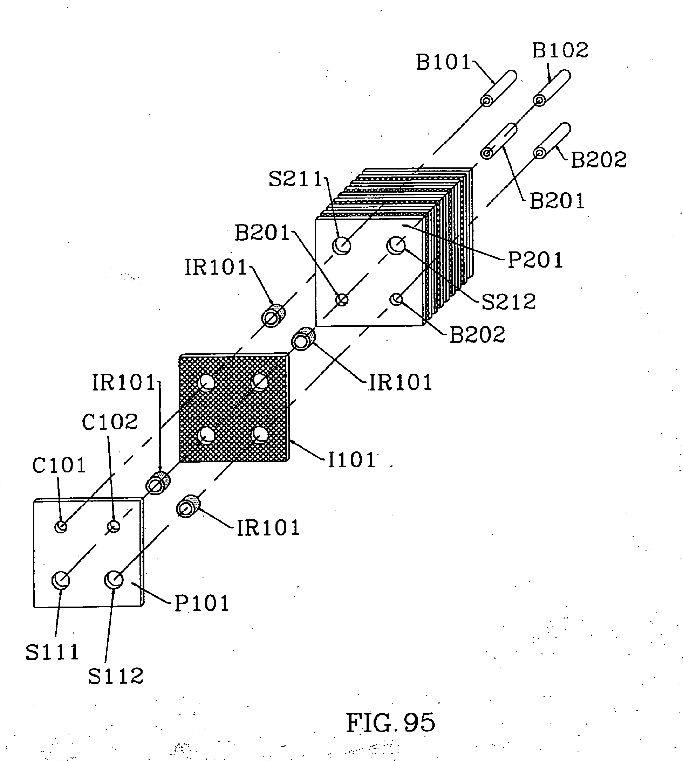

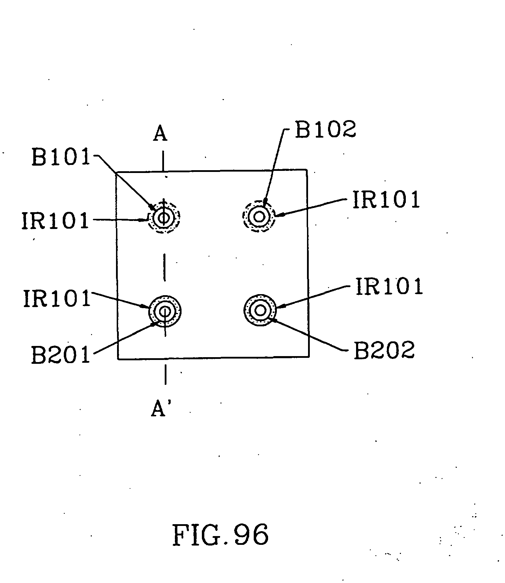

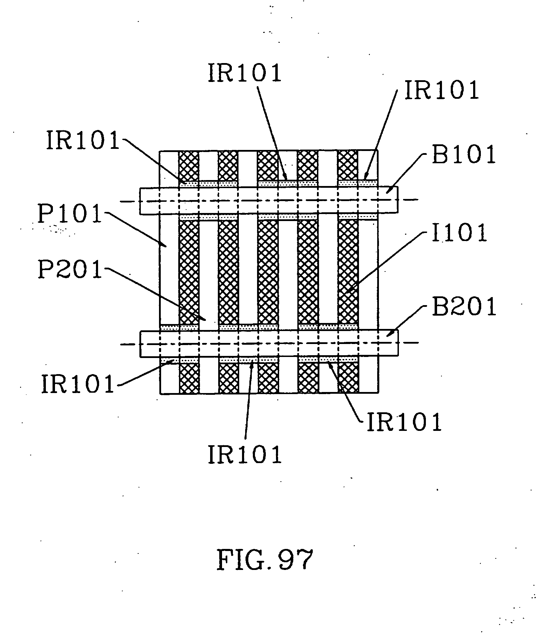

   2) Figure 95 is a 3-D decomposed schematic diagram of an application example of the electricity storage/discharge device with low internal resistance current collector structure illustrating that electrode plates in different polarities are respectively provided with two conductor through holes and two isolating through holes near to central region of plate, figure 96 is a front view of figure 92, and figure 97 is the A-A' sectional view of figure 96, wherein the application examples illustrated in figures 95~97 are mainly characterized in that two conductor through holes C101,C102 and two isolating through holes S111,S112 are respectively installed at the relative symmetrical positions near to central region of the positive electrode plates P101 of the electricity storage and discharge device, while two conductor through holes C201, C202 and two isolating through holes S211, S212 are respectively installed at the relative symmetrical positions near to central region of the positive electrode plates P201; therein the aforesaid positive and negative electrode plates are cross laminated, and an isolator place I101 is installed between the two neighboring electrode plates in different polarities, whereby the positive electrode conductor rods B101,B102 and the negative electrode conductor rods B201,B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

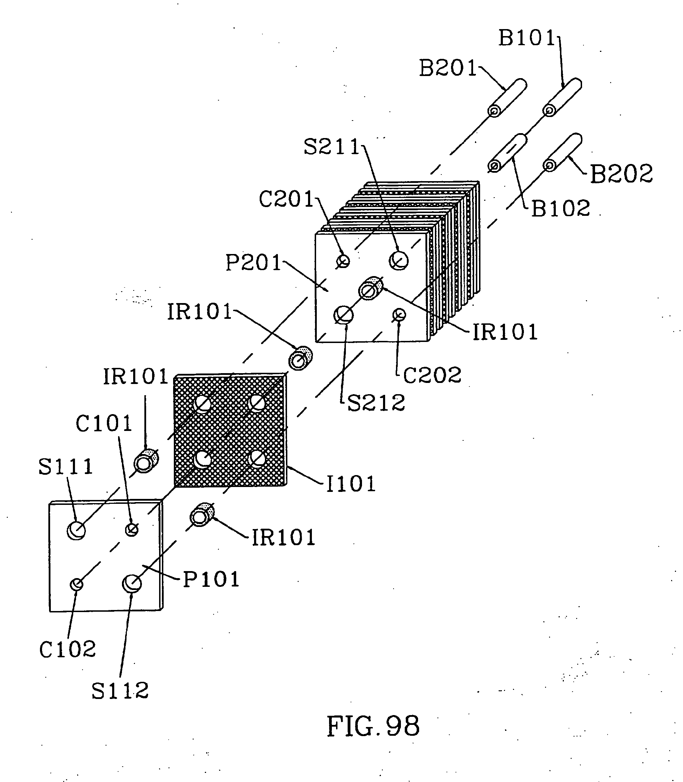

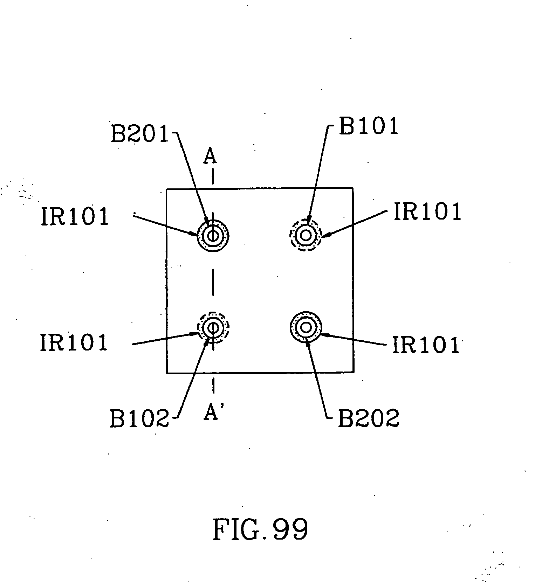

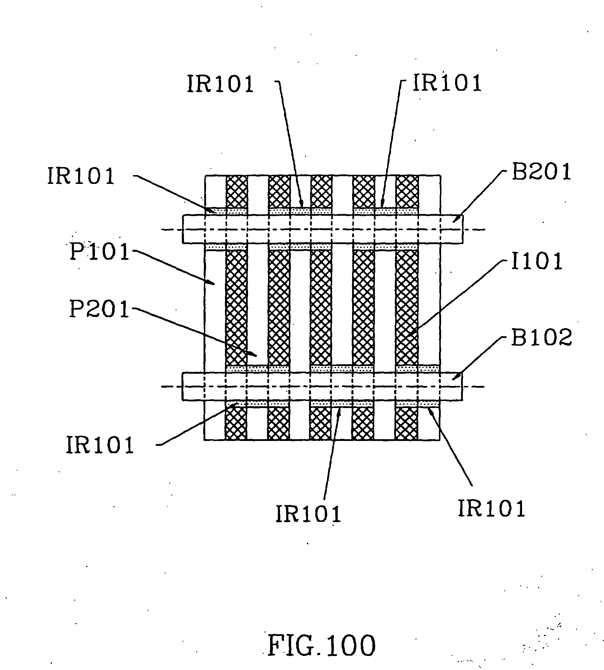

   3) Figure 98 is a 3-D decomposed schematic diagram of an application example of the electricity storage/ discharge device with low internal resistance current collector structure illustrating that electrode plates in different polarities are respectively installed with two conductor through holes and two isolating through holes in symmetrical cross distribution near to central region of plate, figure 99 is a front view of figure 98, and figure 100 is the A-A' sectional view of figure 99, wherein the application examples illustrated in figures 98~100 are mainly characterized in that two conductor through holes C101,C102 and two isolating through holes S111,S112 are respectively installed near to central region of the positive electrode plates P101 of the electricity storage and discharge device in mutually, symmetrical cross distribution, while two conductor through holes C201,C202 and two isolating through holes S211,S212 are respectively installed near to central region of the negative electrode plates P201 in mutually symmetrical cross distribution; therein the aforesaid positive and negative electrode plates are cross laminated, and an isolator plate I101 is installed between the two neighboring electrode plates in different polarities, whereby the positive electrode conductor rods B101,B102 and the negative electrode conductor rods B201,B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

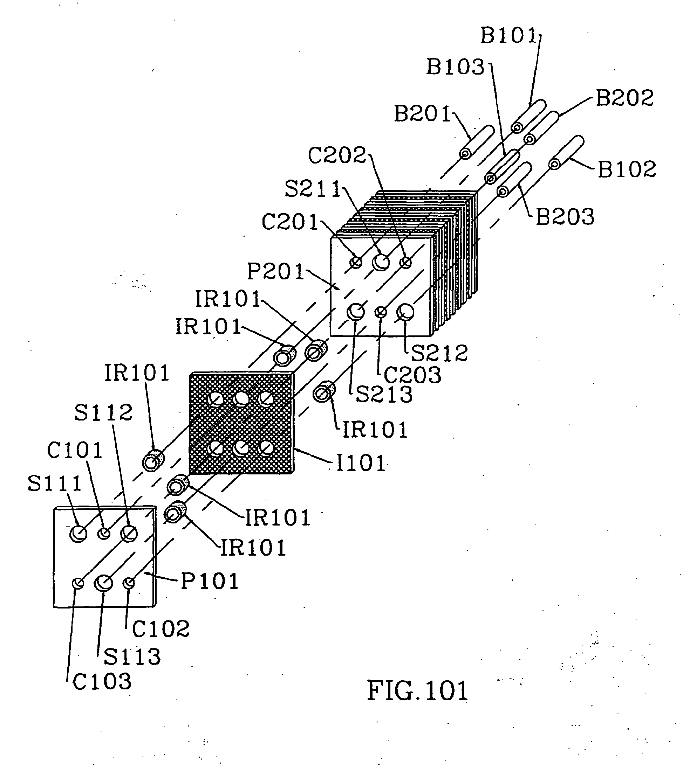

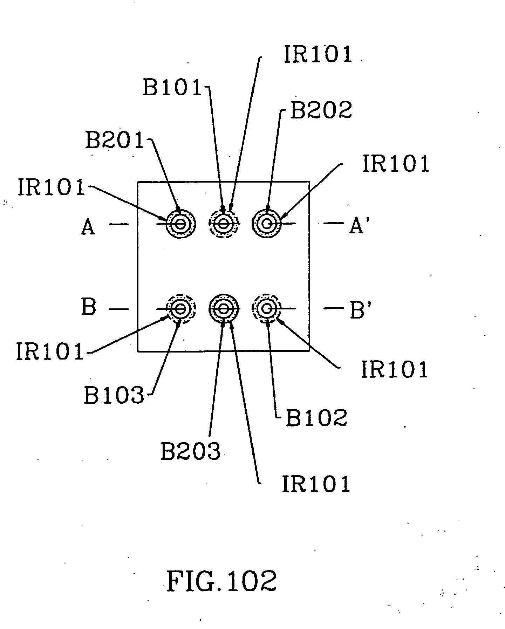

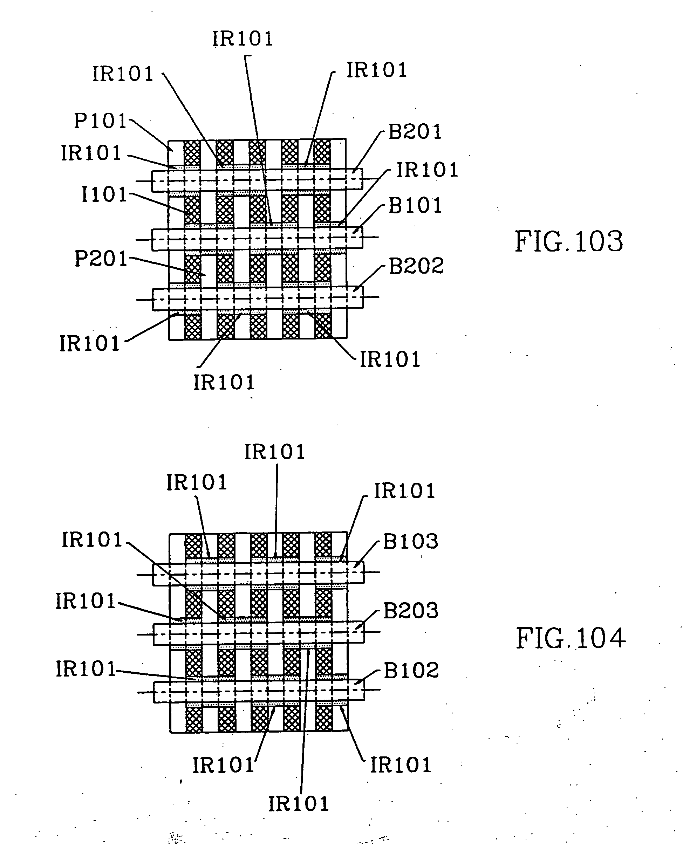

   4) Figure 101 is a 3-D decomposed schematic diagram of an application example of the electricity storage/ discharge device with low internal resistance current collector structure illustrating that electrode plates in different polarities are respectively provided with three conductor through holes and three isolating through holes in symmetrical cross distribution near to the middle plate area, figure 102 is a front view of figure 101, figure 103 is the A-A' sectional view of figure 102, and figure 104 is the B-B' sectional view of figure 102, wherein the application examples illustrated in figures 101~104 are mainly characterized in that three conductor through holes C101,C102,C103 and three isolating through holes S111,S112,S113 are respectively installed near to central region of the positive electrode plates P101 of the electricity storage and discharge device in mutually symmetrical cross distribution, while three conductor through holes C201, C202, C203 and three isolating through holes S211, S212, S213 are respectively installed near to central region of the negative electrode plates P201 in mutually symmetrical cross distribution; therein the aforesaid positive and negative electrode plates are cross laminated, and an isolator plate I101 is installed between the two neighboring electrode plates in different polarities, whereby the positive electrode conductor rods B101,B102 and the negative electrode conductor rods B201,B202 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

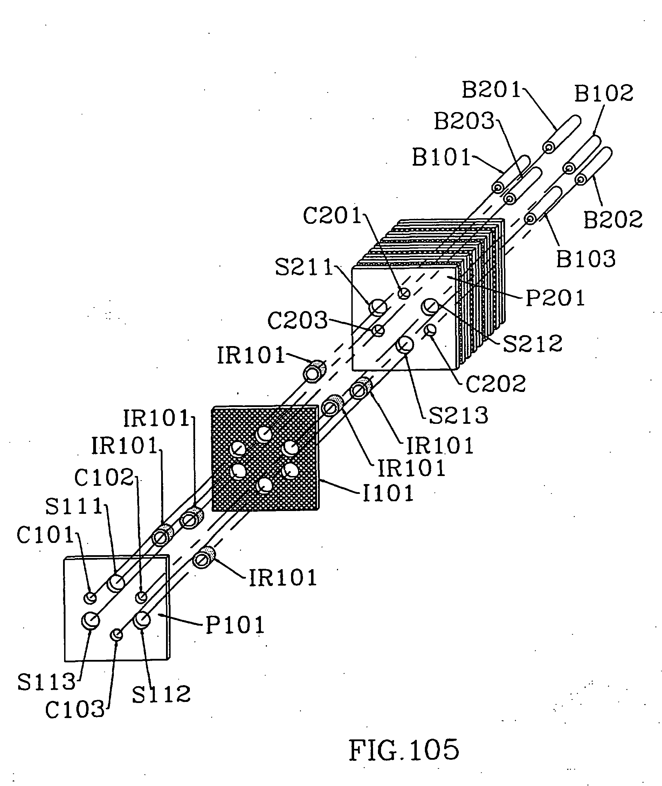

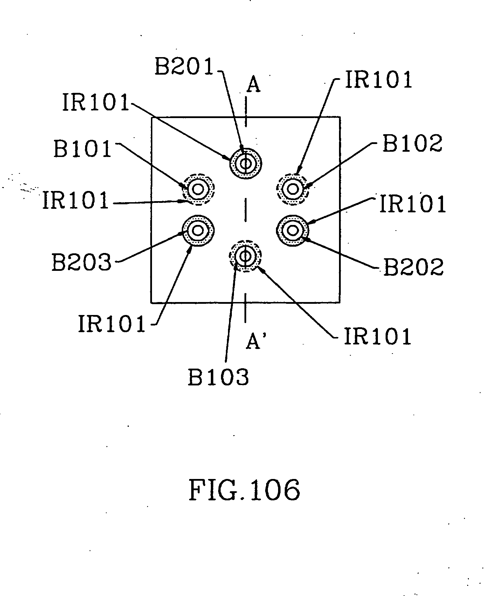

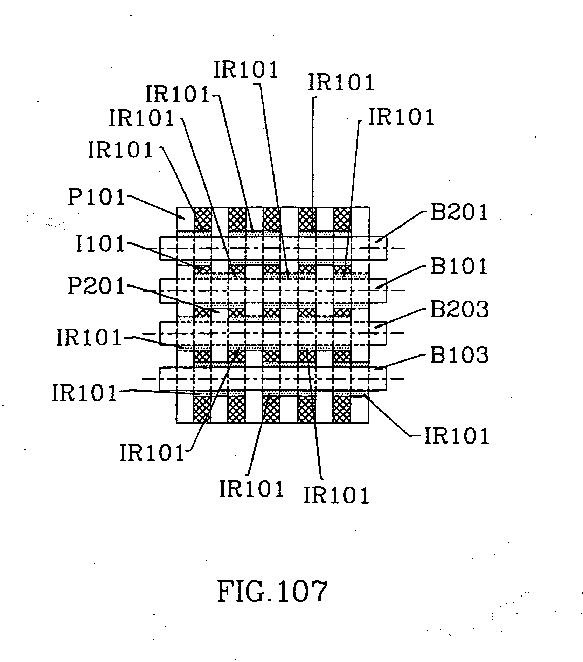

   5) Figure 105 is a 3-D decomposed schematic diagram of an application example of the electricity storage/ discharge device with low internal resistance current collector structure illustrating that electrode plates in different polarities are respectively provided with three conductor through holes and three isolating through holes in hexagonal-symmetrical cross distribution near to the middle plate area, figure 106 is a front view of figure 105, and figure 107 is the A-A' sectional view of figure 106, wherein the application examples illustrated in figures 105~107 are mainly characterized in that three conductor through holes C101,C102,C103 and three isolating through holes S111,S112,S113 are respectively installed near to central region of the positive electrode plates P101 of the electricity storage and discharge device in symmetrical hexagonal cross distribution, while three conductor through holes C201, C202, C203 and three isolating through holes S211,S212,S213 are respectively installed near to central region of the negative electrode plates P201 in symmetrical hexagonal cross distribution; therein the aforesaid positive and negative electrode plates are cross laminated, and an isolator plate I101 is installed between the two neighboring electrode plates in different polarities, whereby the positive electrode conductor rods B101, B102, B103 and the negative electrode conductor rods B201, B202, B203 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;

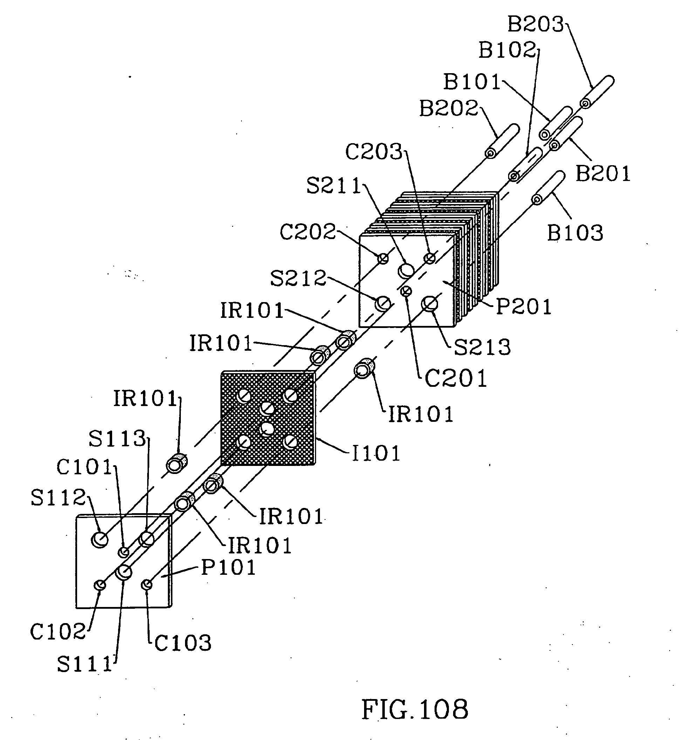

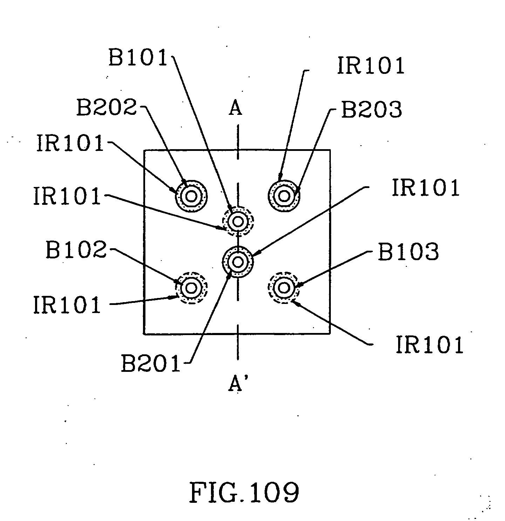

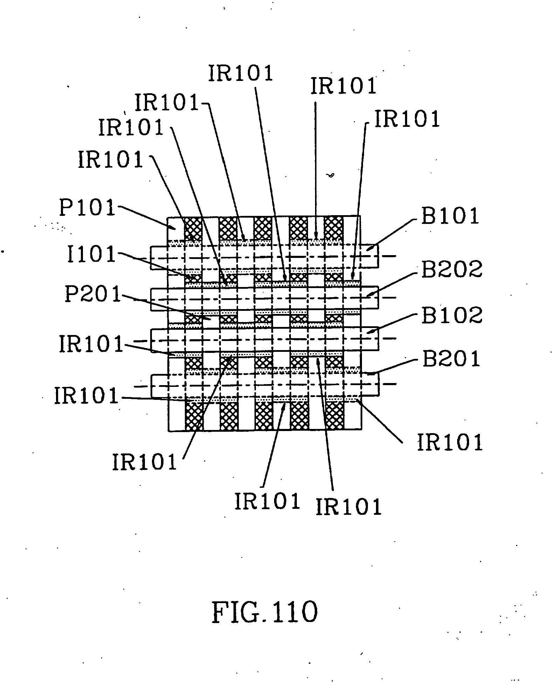

   6) Figure 108 is a 3-D decomposed schematic diagram of an application example of the electricity storage/ discharge device with low internal resistance current collector structure illustrating that electrode plates in different polarities are respectively provided with three conductor through holes and three isolating thorough holes near to the middle plate area, figure 109 is a front view of figure 105, and figure 110 is the A-A' sectional view of figure 109, wherein the application examples illustrated in figures 108∼110 are mainly characterized in that three conductor through holes C101, C102, C103 and three isolating through holes S111, S112, S113 are respectively installed near to central region of the positive electrode plates P101 of the electricity storage and discharge device in symmetrical cross distribution, while three conductor through holes C201,C202,C203 and three isolating through holes S211,S212,S213 are respectively installed near to central region of the negative electrode plates P201 in symmetrical cross distribution; therein the aforesaid positive and negative electrode plates are cross laminated, and an isolator plate I101 is installed between the two neighboring electrode plates in different polarities, whereby the positive electrode conductor rods B101, B102, B103 and the negative electrode conductor rods B201, B202, B203 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations; therein the electric current on the electrode plate is either the output current flowing from surrounding area in multiple circuits to the conductor rod for collected output or the input current diffused from the conductor rod to the surrounding area in multiple circuits, thereby to reduce the internal resistance;
G. The application examples of which the electrode plate is installed with conductor through holes in double ring arrangement, including:

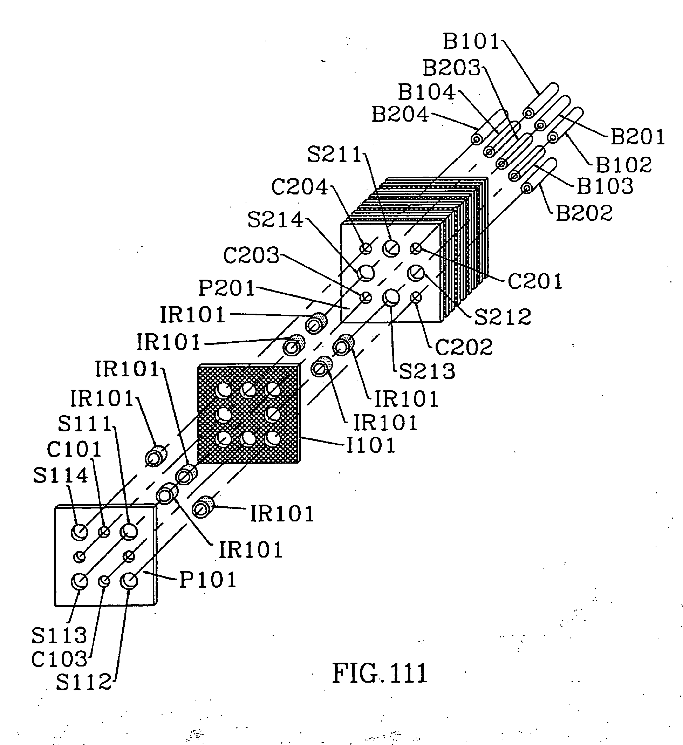

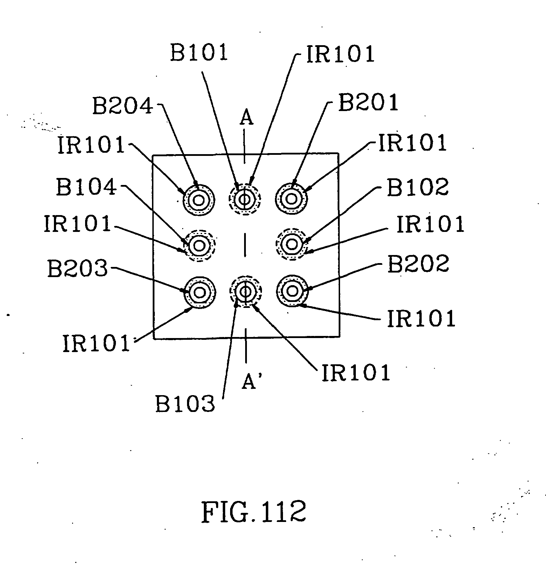

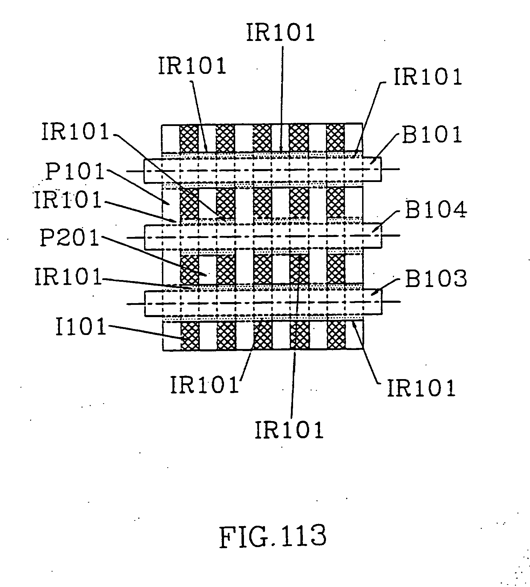

   1) Figure 111 is a 3-D decomposed schematic diagram of an application example of the electricity storage/ discharge device with low internal resistance current collector structure illustrating that the electrode plates are respectively installed with four conductor through holes and four isolating through holes in cross-symmetrical double-ring distribution, figure 112 is a front view of figure 111, and figure 113 is the A-A' sectional view of figure 112, wherein the application examples illustrated in figures 111~113 are mainly characterized in that the positive electrode plates P101 of the electricity storage is respectively installed with four conductor through holes C101, C102, C103, C104 and four isolating through holes S111, S112, S113, S114 in cross-symmetrical ring distribution, while the negative electrode plates P201 is respectively installed with four conductor through holes C201, C202, C203, C204 and four isolating through holes S211, S212, S213, S214 in cross-symmetrical ring distribution; therein the aforesaid positive and negative electrode plates are cross laminated, and an isolator plate I101 is installed between the two neighboring electrode plates in different polarities, whereby the positive electrode conductor rods B101, B102, B103, B104 and the negative electrode conductor rods B201, B202, B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

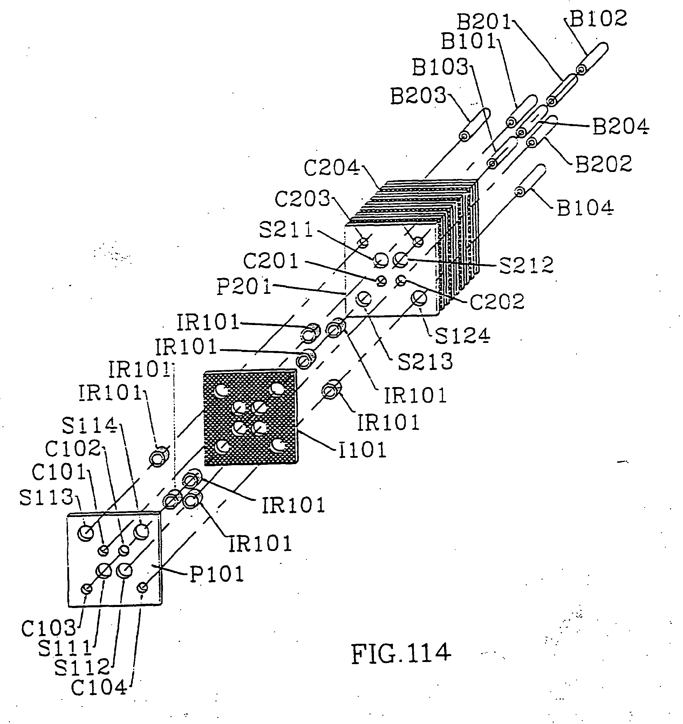

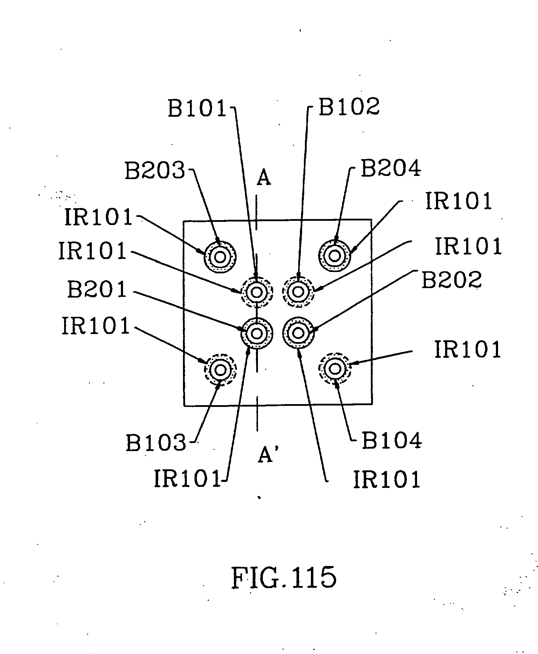

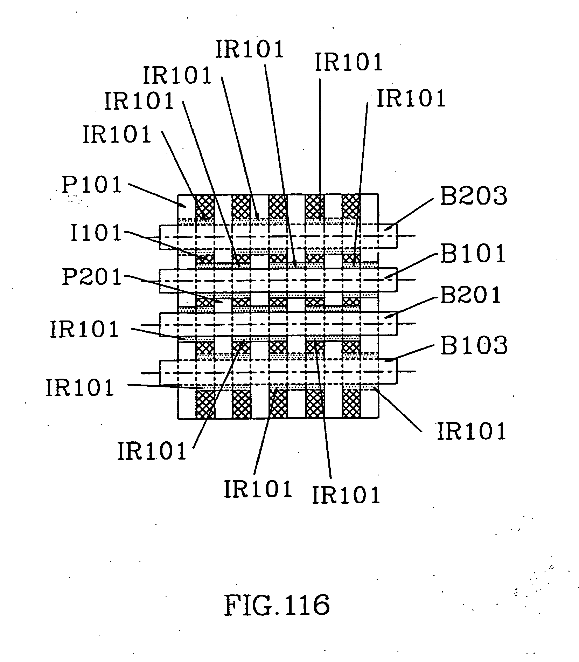

   2) Figure 114 is a 3-D decomposed schematic diagram of an application example of the electricity storage/ discharge device with low internal resistance current collector structure illustrating that each electrode plate is provided with four conductor through holes and four isolating through holes in cross-symmetrical ring shape distribution, figure 115 is a front view of figure 114, and figure 116 is the A-A' sectional view of figure 115, wherein the application examples illustrated in figures 114∼116 are mainly characterized in that the positive electrode plates P101 of the electricity storage is respectively installed with four conductor through holes C101,C102,C103,C104 and four isolating through holes S111,S112,S113,S114 in cross-symmetrical double ring distribution, while the negative electrode plates P201 is respectively installed with four conductor through holes C201, C202, C203, C204 and four isolating through holes S211, S212, S213, S214, in cross-symmetrical double ring distribution; therein the aforesaid positive and negative electrode plates are cross laminated, and an isolator plate I101 is installed between the two neighboring electrode plates in different polarities, whereby the positive electrode conductor rods B101,B102,B103, B104 and the negative electrode conductor rods B201,B202,B203, B204 are respectively penetrated through the aforesaid conductor through holes, thereby they are respectively penetrated through and joined with the electrode plates of their belonging in the same polarities for parallel combination current collection, or the two ends of the conductor rods are respectively penetrated through and jointed with the electrode plates in different polarities for series combinations;

   As described by the embodying examples in the aforesaid figures 1∼116, besides of that the geometrical shapes and quantities of the electrode plate shall be selected according to requirement, the low resistance current collecting basic structure of the electricity storage/ discharge device is mainly characterized in that the conductor through holes are installed on the electrode plates in different polarities for joining the corresponding conductor rods as well as to reserve spaces, notches or isolating through holes for accommodating the penetration of conductor rods in different polarities without mutual contacts; in addition, the isolator and casing of the conventional electricity storage and discharge device are also installed, wherein their main common structural characteristics include the following:
   - A positive electrode plate: It is constituted by the positive electrode plates of the primary or secondary batteries, wherein the plate is provided with conductor through holes and nas reserved spaces, notches or isolating through holes for accommodating the penetration of conductor rods in different polarities without contacts, whereof the conductor through holes are for penetrating conductor rods, thereof the conductor through hole and the conductor rod can be joined by mechanical seal methods or by welding, or by the press fit due to forcing elastic deformation of the inserted tube shape conductor rod against the conductor through hole, thereby to appear in a good electrical conducting status or by the press fit due to forcing elastic deformation of the non-closed hollow tube structure with axial opening clearance against the conductor through holes;
   - A negative electrode plate: It is constituted by the positive electrode plates of the primary or secondary batteries, wherein the plate is provided with conductor through holes and has reserved spaces, notches or isolating through holes for accommodating the penetration of conductor rods in different polarities without contacts, whereof the conductor through holes are for penetrating conductor rods, thereof the conductor through hole and the conductor rod can be joined by mechanical seal methods or by welding, or by the press fit due to forcing elastic deformation of the inserted tube shape conductor rod against the conductor through hole, thereby to appear in a good electrical conducting status;
   - Tne aforesaid positive and negative electrode plates can be constituted by cross laminating the electrode plates in the same shapes or by the electrode plates in different shapes to allow for penetration and combination of the conductor rods with the electrode plate installed conductor through holes without mutual interference.
H. The application examples of which two or more than two sides of the electrode plate is installed with individually outside extended current collecting terminals, including:

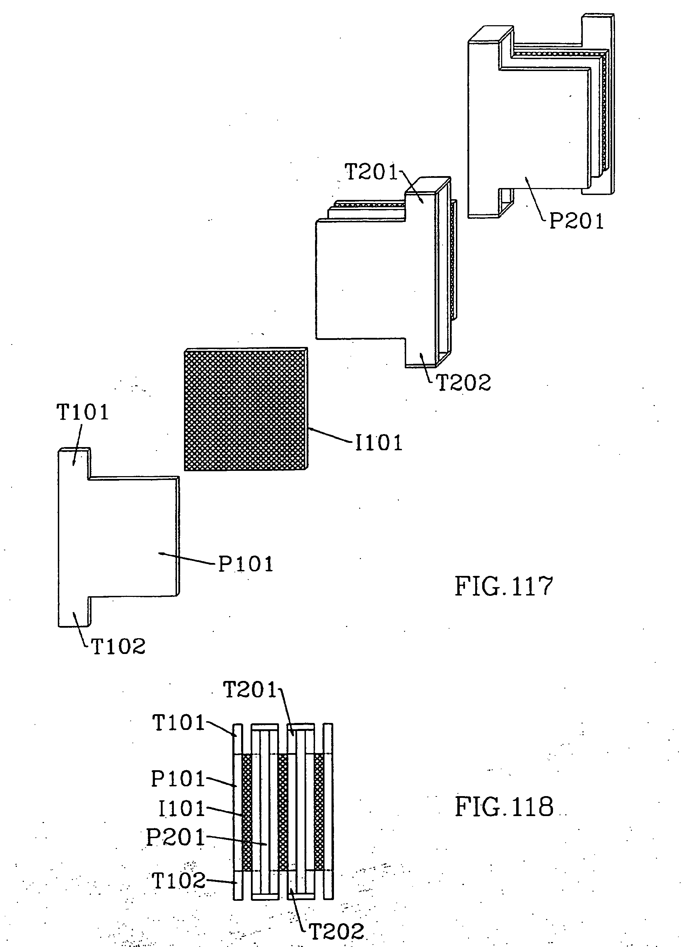

   1) Figure 117 is an embodying example of the electricity storage/discharge device with low internal resistance current collector structure illustrating that two sides of the electrode plate are respectively installed with a current collecting terminal at the same end, and figure 118 is a side view of figure 117, wherein the application examples illustrated in figures 117∼118 are mainly characterized in that two sides of the positive electrode plates P101 of the electricity storage are respectively installed with an individual current collecting terminal T101, T102 at the same end, thereby to appear an structural embodiment of one electrode plate with two current collecting terminals, while two sides of the negative electrode plates P201 are respectively installed with an individual current collecting terminal T201, T202 at the same end, thereby to appear an structural embodiment of one electrode plate with two current collecting terminals, wherein the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations , and an isolator plate I101 is installed between the two neighboring electrode plates in different polarities, whereby the two aforesaid current collecting terminals are combined with the current collecting terminals of the electrode plates in the same polarities for current collection in parallel combination or the two current collecting terminals are respectively series combined with the neighboring electrode plates in different polarities to form two current circuits;

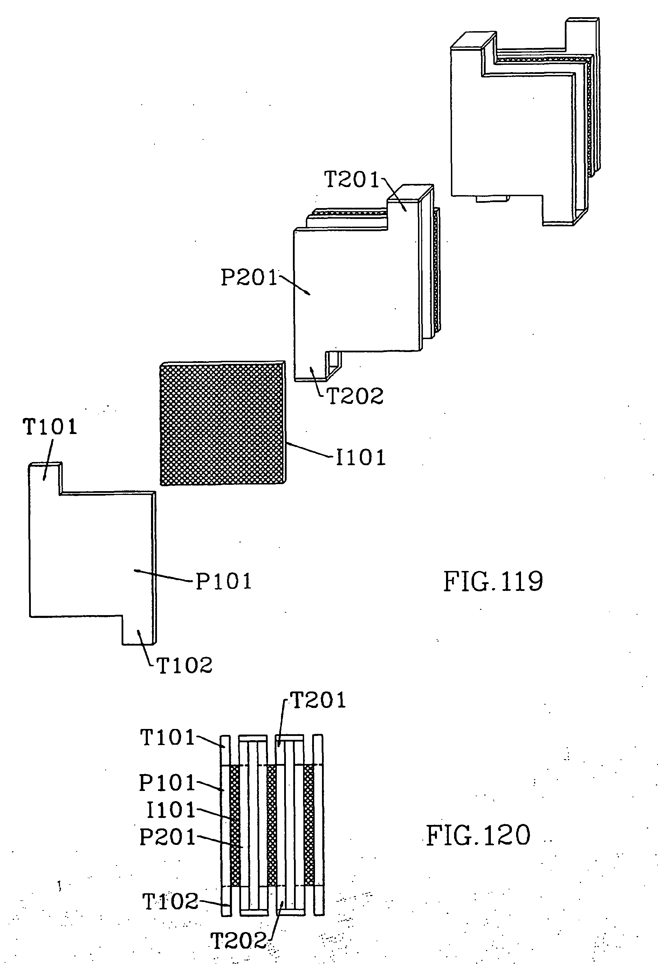

   2) Figure 119 is an embodying example of the electricity storage/discharge device with low internal resistance current collector structure illustrating that two sides of the electrode plate are respectively installed with a current collecting terminal at different ends, and figure 120 is a side view of figure 119, wherein the application examples illustrated in figures 119∼120 are mainly characterized in that two sides of the positive electrode plates P101 of the electricity storage are respectively installed with an individual current collecting terminal T101, T102 at different ends, thereby to appear an structural embodiment of one electrode plate with two current collecting terminals, while two sides of the negative electrode plates P201 are respectively installed with an individual current collecting terminal T201, T202 at different ends, thereby to appear an structural embodiment of one electrode plate with two current collecting terminals, wherein the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations, and an isolator plate I101 is installed between the two neighboring electrode plates in different polarities, whereby the two aforesaid current collecting terminals are combined with the current collecting terminals of the electrode plates in the same polarities for current collection in parallel combination or the two current collecting terminals are respectively series combined with the neighboring electrode plates in different polarities to form two current circuits;

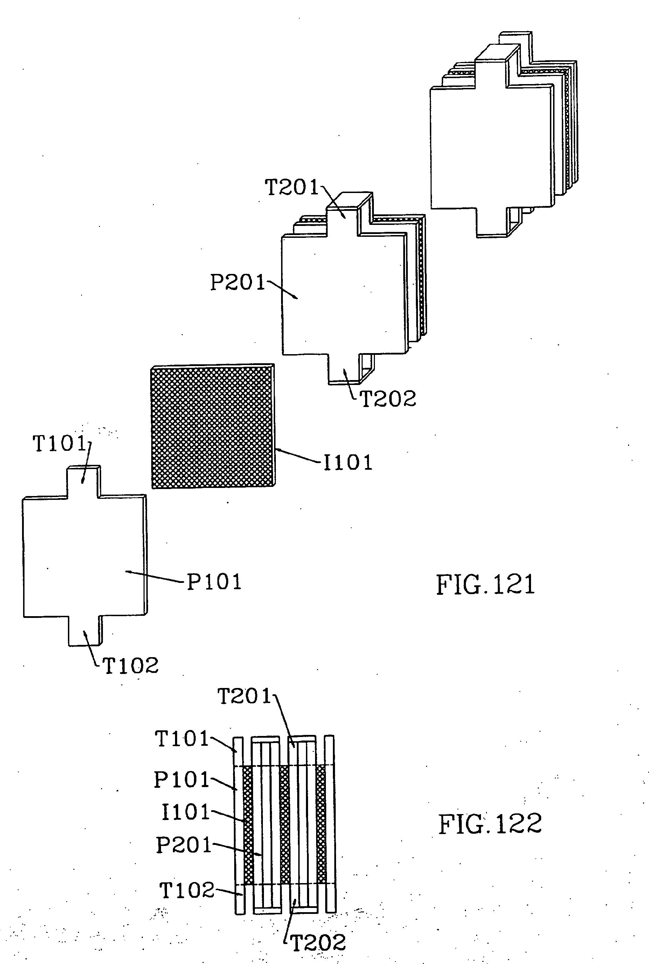

   3) Figure 121 is an embodying example of the electricity storage/discharge device with low internal resistance current collector structure illustrating that two sides of the electrode plate are respectively installed with a current collecting terminal near to the middle, and figure 122 is a side view of figure 119, wherein the application examples illustrated in figures 121∼122 are mainly characterized in that two sides of the positive electrode plates P101 of the electricity storage are respectively installed with an individual current collecting terminal T101, T102 near to the middle, thereby to appear an structural embodiment of one electrode plate with two current collecting terminals, while two sides of the negative electrode plates P201 are respectively installed with an individual current collecting terminal T201, T202 near to the middle, thereby to appear an structural embodiment of one electrode plate with two current collecting terminals, wherein the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations, and an isolator plate I101 is installed between the two neighboring electrode plates in different polarities, whereby the two aforesaid current collecting terminals are combined with the current collecting terminals of the electrode plates in the same polarities for current collection in parallel combination or the two current collecting terminals are respectively series combined with the neighboring electrode plates in different polarities to form two current circuits;

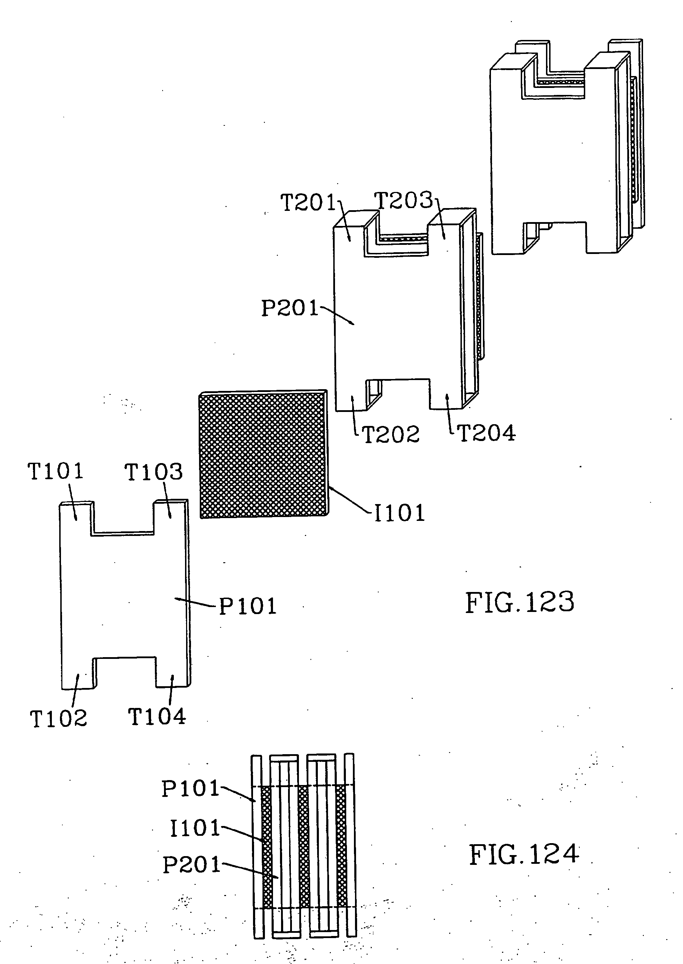

   4) Figure 123 is an embodying example of the electricity storage/discharge device with low internal resistance current collector structure illustrating that two sides of the electrode plate are respectively installed with two current collecting terminals near to both ends of respective sides, and figure 124 is a side view of figure 123, wherein the application examples illustrated in figures 123∼124 are mainly characterized in that two sides of the positive electrode plates P101 of the electricity storage are respectively installed with two current collecting terminals T101, T102, T103, T104 near to both ends of side, while two sides of the negative electrode plates P201 are respectively installed with two current collecting terminals T201, T202, T203, T204 near to both ends of side, i.e. each electrode plate individually is embodied to have four current collecting terminals, whereof the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations, and an isolator plate I101 is installed between the two neighboring electrode plates in different polarities, whereby the two aforesaid current collecting terminals are combined with the current collecting terminals of the electrode plates in the same polarities for current collection in parallel combination or the four current collecting terminals are respectively series combined with the neighboring electrode plates in different polarities to form four current circuits;

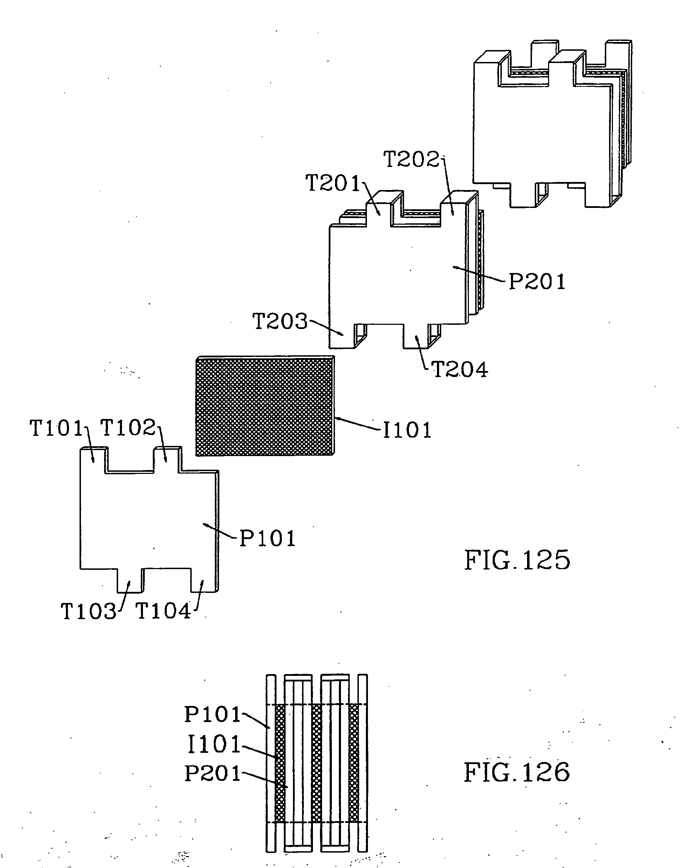

   5) Figure 125 is an embodying example of the electricity storage/discharge device with low internal resistance current collector structure illustrating that two sides of the electrode plate are respectively cross installed with two current collecting terminals, and figure 126 is a side view of figure 125, wherein the application examples illustrated in figures 125∼126 are mainly characterized in that two sides of the positive electrode plates P101 of the electricity storage are respectively cross installed with two current collecting terminals T101, T102, T103, T104, while two sides of the negative electrode plates P201 are respectively cross installed with two current collecting terminals T201, T202, T203, T204, i.e. each electrode plate individually is embodied to have four current collecting terminals, whereof the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations, and an isolator plate I101 is installed between the two neighboring electrode plates in different polarities, whereby the two aforesaid current collecting terminals are combined with the current collecting terminals of the electrode plates in the same polarities for current collection in parallel combination or the four current collecting terminals are respectively series combined with the neighboring electrode plates in different polarities to form four current circuits;

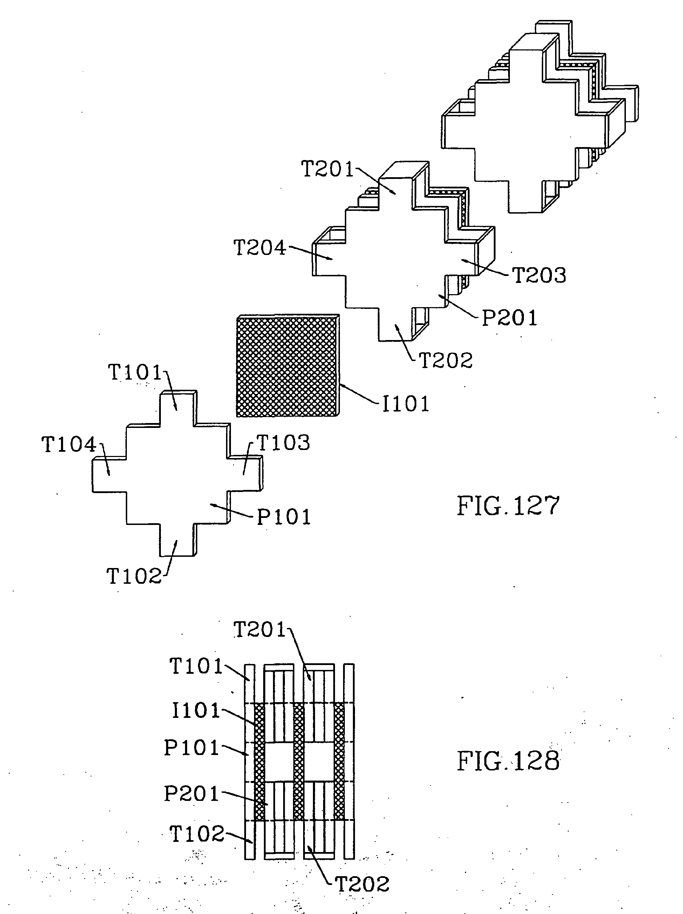

   6) Figure 127 is an embodying example of the electricity storage/discharge device with low internal resistance current collector structure illustrating that four sides of the electrode plate are respectively installed with a current collecting terminal at the central, and figure 128 is a side view of figure 127, wherein the application examples illustrated in figures 127∼128 are mainly characterized in that four sides of tne positive electrode plates P101 of the electricity storage are respectively cross installed with a current collecting terminal T101, T102, T103, T104 at the middle of side, while four sides of the negative electrode plates P201 are respectively cross installed with a current collecting terminal T201, T202, T203, T204 at the middle of side, i.e. each electrode plate individually is embodied to have four current collecting terminals, whereof the aforesaid electrode plates are comprised of positive electrode plates P101 and negative electrode plates P201, and the positive and negative electrode plates are cross laminated, or the multiple cross laminated plates are arranged in a row structure at lateral direction for series or parallel combinations, and an isolator plate I101 is installed between the two neighboring electrode plates in different polarities, whereby the two aforesaid current collecting terminals are combined with the current collecting terminals of the electrode plates in the same polarities for current collection in parallel combination or the four current collecting terminals are respectively series combined with the neighboring electrode plates in different polarities to form four current circuits;

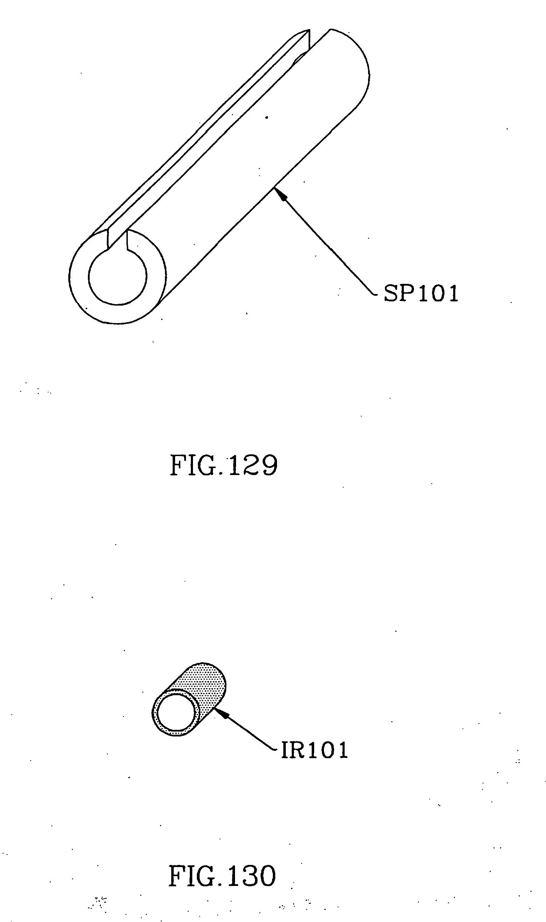

   Application range of this design is not limited to the aforesaid listed realistic embodied examples given in figures 117-128, i.e. for practical applications on the quadrilateral or quasi-quadrilateral electrode plates, besides of that current collecting terminals can be installed on the two sides or four sides, the current collecting terminals can also be installed only on the three sides, and in addition to quadrilateral shape, the geometric shape of the electrode plate can be constituted by the circular or quasi-circular, or elliptical or quasi-elliptical, three sides or more than tree sides configurations (including triangles, quadrilaterals, pentagons, hexagons, heptagons, octagons or polygons with more than eight sides), thereof each electrode plate is characterized to be installed with two or more than two current collecting terminals to allow the electrode plate equipped with two or more than two current circuits.
   As summarized, besides of that each of the embodied examples illustrated in figures 1~128 has individual characteristics, they share the following common characteristics:
   - The aforesaid positive and negative electrode plates include the embodied structures of circular or quasi-circular, elliptical or quasi-elliptical, or three sides or more than three sides configured (including triangles, quadrilaterals, pentagons, hexagons, heptagons, octagons or polygons with more than eight sides) electrode plates, wherein their low internal resistance current collecting structure embodiments include : 1) the two sides or more than two sides of the electrode plates are respectively installed with one or more than one outside extended current collecting terminals; (2) one or more than one conductor through holes are individually provided in the selected areas of two sides or more than two sides, or near tc the central region of the positive or negative electrode plates, thereof the selected areas of the two sides or more than two sides or central region of the aforesaid positive or negative electrode plates are respectively provided with one or more than one isolating space or notches or through holes with size larger than the conductor rods designed to allow for the penetration of conductor rods without contact after the electrode plates are cross laminated, thereby to allow the electrode plates have two or more than two input or output current circuits, thus to lower the internal resistance of the electricity storage device;
   - For the electricity storage/discharge device with low internal resistance current collector structure to be applied in polar-less electricity storage and discharge devices (such as capacitors), then the aforesaid positive and negative electrode plates are replaced by the polar-less primary side electrode plate and secondary side electrode plate;
   - The conductor rod is for penetrating through and joining with the conductor through holes on the electrode plates, thereby the jointed conductor rod and electrode plates appear in a good conducting status; whereof the conductor rod can be comprised of solid or hollow tube shape conductor rods' made from the conducting material in circular, square or other geometric shapes or a non-closed elastic hollow tube conducting structure with an axial opening clearance as shown in figure 129;
   - Two ends of the conductor rods in the aforesaid structure can be further respectively installed with protruded bonnets or screws, nuts or unidirectional press washer, insulator pressing plates etc. for press fitting with the electrode plate thereby to improve their mechanical stability;
   - The conductor rods in the aforesaid structure are for penetrating through the electrode plates in the same polarities to provide parallel combined current collection function, or for penetrating through the conductor through holes of the electrode plates in different polarities to provide series combined functions; or for penetrating the electrodes in the same polarities and different polarities to provide parallel combined current collection or series combination functions;
   - For the conductor rod comprised of hollow tube structure, the gaseous or liquid fluid pump and cooling radiators can be further installed (or a heating device) to pump the gaseous or liquid fluid passing through the tubular shape conductor rod for regulating the cooling or heating temperatures;
   - For the conductor rod to be used as a current collecting structure, if the passing fluid is an insulating fluid, then the tubular conductor rod on the electrodes at the same voltage level can be directly presented in series combined or parallel combined current circuit structures;
   - For the conductor rods to be used for parallel combined current collection or series combination functions, the conductor rods at the different voltage levels can be series combined or parallel combined by the insulation conduits to introduce temperature cooling or heating modulating insulation gaseous or liquid state fluid;
   - Insulation ring shape or tubular shape insulator can be inserted between the conductor rod and tne conductor through hole as shown in figure 130 to ensure the insulation and to further improve the structure stability between the electrode plates;
   - Insulation blocks can be installed between the conductor rod and its passing electrode plate isolator notches to ensure insulation and to further improve the structure stability between the electrode plates;
   - Space settling blocks can be installed between the conductor rod and its passing electrode plate insulating spaces to and to further improve the structure stability between the electrode plates;
   - the two or more than two individually outside extended current collecting terminals are installed on the two or more than two sides of the individual electrode plates for multiple circuits parallel combination between the electrode plates in the same polarities or series combination between the electrode plates in different polarities, thereby to let each electrode plate in the electricity storage and discharge device have two or more than two circuits during the current input or output, whereby to reduce the internal resistance of the electricity storage and discharge device during input or output.
   - The isolator body is the isolator plates or films (or isolator sheets) layer installed between the electrode plates in different polarities; if the isolator body is an inserting structure, it can be inserted or the positive and negative electrode plates simultaneously, or inserted on the electrode plates in either one of the polarities;
   - The casing is used as the container to accommodate the electricity storage and discharge device as well as for electrode plate protection, whereof it is constituted by insulation material or non-insulation material, if it is made of non-insulation material, insulation goods shall be additionally provided between the inside casing and the internal electrodes;

As described in the previous sections, the low internal resistance current collector structure of the electricity storage/discharge device is an innovative design, wherein the solid or hollow tube shape conductor rods are penetrated through the electrode plates in the same polarities for parallel combination or electrode plates in the different polarities for series combination or mixture of parallel and series combinations; or the two or more than two individually outside extended current collecting terminals are installed on the two or more than two sides of the individual electrode plates for multiple circuits parallel combination between the electrode plates in the same polarities or series combination between the electrode plates in different polarities, thereby to reduce the internal resistance within the electricity storage device, thereof as the relative current collecting structure of the electricity storage device is innovative and its practical improvement on the electrode plate current collecting structure of the electricity storage device as well as on the strength of structure is so obvious practically, which is the essence of the design's progressiveness.

## Claims

1. An electricity storage/discharge device comprising:
a plurality of electrode plates (P101, P201) each having at least two current-collecting terminals respectively at opposite sides thereof each electrode plate (P101, P201) having at least one conductor through-hole at each terminal and, at least one isolating opening;
a plurality of isolator members (I101) positioned between respective ones of pairs of the electrode plates having opposite polarities;
at least two conductor rods for positive electrode and at least two conductor rods for negative electrode conducting function respectively, the conductor rods being arranged to pass through, and be electrically connected to, selected ones of the through-holes such that the conductor rods form series connections between the electrode plates upon electrical connection to through-holes of electrode plates having opposite polarities; and/or the conductor rods form parallel connections between the electrode plates upon being electrically connected to through-holes of electrode plates having the same polarity, wherein the conductor rods are also arranged to pass through the isolating openings of the electrode plates to which the conductor rods are not electrically connected, the isolating openings having a size larger than the size of the conductor rods so as to prevent contact between the conductor rods and the electrode plates; and
insulator members positioned in the isolating openings further to isolate the conductor rods (B101, B102; B201, B202) passing through the isolating openings (S101, S102; S201, S202) from respective electrode plates (P101, P201) to which the conductor rods are not electrically connected;
wherein the electrode plates are parallel connected for electrode plates having the same polarity and/or serial connected for electrode plates having different polarities, whereby the current-collecting terminals constitute at least two inputs/outputs to current-carrying circuits of the device, thereby to reduce the internal resistance of the device.

2. A device as claimed in claim 1, further comprising at least one outwardly-extending, current-collecting terminal on each side of each of the electrode plates (P101, P201), whereby the current-collecting terminal includes the conductor through-hole with positive electrode and negative electrode conducting function and each of the current collecting terminals on each of the electrode plates serves as an input/output terminal for that electrode plate.

3. A device as claimed in claim 1 or claim 2, further comprising at least one outwardly-extending, current-collecting terminal on at least one additional side of each electrode plate (P101, P201).

4. A device as claimed in any one of claims 1 to 3, wherein at least two of the current-collecting terminals of each electrode plate (P101, P201) are situated at corners of that electrode plate.

5. A device as claimed in any one of the preceding claims, wherein the through-holes (C101, C102; C201, C202) have a circular shape, and the conductor rods (B101, B102; B201, B202) have a corresponding circular cross-section.

6. A device as claimed in any one of claims 1 to 4, wherein the conductor rods (B101, B102; B201, B202) have a rectangular shape.

7. A device as claimed in any one of the preceding claims, wherein each conductor rod (B101, B102; B201, B202) is a hollow tube having an axially-extending opening to facilitate press-fitting of the conductor rods in said selected through-holes (C101, C102; C201, C202).

8. A device as claimed in any one of the preceding claims, wherein the conductor rods (B101, B102; B201, B202) are hollow tubes, and are arranged to permit passage of a cooling fluid.

9. A device as claimed in claim 8, wherein the cooling fluid is an insulating fluid.

10. A device as claimed in any one of claims 5 to 10, wherein the conductor rods (B101, B102; B201, B202) are welded to the through-holes (C101, C102; C201, C202).

11. A device as claimed in any one of the preceding claims, wherein the electrode plates (P101, P201) are at least partially circular.

12. A device as claimed in any one of claims 1 to 10, wherein the electrode plates (P101, P201) form polygons having at least three sides.

13. A device as claimed in any one of the preceding claims, wherein the two ends of each conductor rod (B101, B102; B201, B202) are provided with mechanical fastening means for securing together the electrode plates (P101, P201) and the isolator members (I101).

## Patentansprüche

1. Elektrizitätsspeicher-/Entladungsvorrichtung, umfassend:
• eine Vielzahl von Elektrodenplatten (P101, P201) mit jeweils mindestens zwei Stromsammelanschlüssen an jeweils gegenüberliegenden Enden davon, wobei jede Elektrodenplatte (P101, P201) mindestens ein Leiterdurchgangsloch an jedem Endgerät und wenigstens eine Isolieröffnung aufweist;
• eine Vielzahl von Isolierelementen (I101), die zwischen den jeweiligen Paaren von Elektrodenplatten mit entgegengesetzten Polaritäten positioniert sind;
• mindestens zwei Leiterstäbe für positive Elektrodenleiterfunktion, und mindestens zwei Leiterstäbe für negative Elektrodenleiterfunktion, wobei die Leiterstäbe so angeordnet sind, dass sie durch selektierte Durchgangslöcher hindurchführen und damit elektrisch verbunden werden, sodass die Leiterstäbe nach der elektrischen Verbindung mit Durchgangslöchern von Elektrodenplatten mit entgegengesetzten Polaritäten Reihenverbindungen zwischen den Elektrodenplatten bilden; und/oder dass die Leiterstäbe nach der elektrischen Verbindung mit den Durchgangslöchern von Elektrodenplatten mit der gleichen Polarität parallele Verbindungen zwischen den Elektrodenplatten bilden, wobei die Leiterstäbe auch angeordnet sind, dass sie durch die Isolieröffnungen der Elektrodenplatten, mit denen die Leiterstäbe nicht elektrisch verbunden sind, hindurchführen, wobei die Grösse der Isolieröffnungen grösser ist als die Grösse der Leiterstäbe, sodass Kontakt zwischen den Leiterstäben und den Elektrodenplatten verhindert wird; und
• in den Isolieröffnungen gelegene Isolatorelemente, um die Leiterstäbe (B101, B102; B201, B202), die durch die Isolieröffnungen (S101, S102; S201, S202) von jeweiligen Elektrodenplatten (P101, P201), mit denen die Leiterstäbe nicht elektrisch verbunden sind, hindurchführen, weiter zu isolieren,
• wobei bei Elektrodenplatten mit der gleichen Polarität die Elektrodenplatten parallel verbunden sind, und/oder bei Elektrodenplatten mit verschiedenen Polaritäten diese seriell verbunden sind, wobei die Stromsammelanschlüsse mindestens zwei Eingänge/Ausgänge zu stromführenden Schaltkreisen der Vorrichtung bilden, um dadurch den Innenwiderstand der Vorrichtung zu reduzieren.

2. Vorrichtung nach Anspruch 1, weiter umfassend mindestens einen nach aussen verlaufenden Stromsammelanschluss an jeder Seite von jeder der Elektrodenplatten (P101, P201), wobei der Stromsammelanschluss das Leiterdurchgangsloch mit positiver und mit negativer Elektrodenleiterfunktion einschliesst, und jede der Stromsammelanschlüsse an jeder der Elektrodenplatten als Eingangs-/Ausgangsanschluss für diese Elektrodenplatte dient.

3. Vorrichtung nach Anspruch 1 oder 2, weiter umfassend mindestens einen nach aussen verlaufenden Stromsammelanschluss an mindestens einer zusätzlichen Seite von jeder Elektrodenplatte (P101, P201).

4. Vorrichtung nach einem der Ansprüche 1 bis 3, wobei mindestens zwei der Stromsammelanschlüsse von jeder Elektrodenplatte (P101, P201) sich an Ecken dieser Elektrodenplatte befinden.

5. Vorrichtung nach einem der vorangegangenen Ansprüche, wobei die Durchgangslöcher (C101, C102; C201, C202) eine kreisförmige Form aufweisen, und die Leiterstäbe (B101, B102; B201, B202) einen dementsprechenden kreisförmigen Querschnitt haben.

6. Vorrichtung nach einem der Ansprüche 1 bis 4, wobei die Leiterstäbe (B101, B102; B201, B202) eine rechteckige Form aufweisen.

7. Vorrichtung nach einem der vorangegangenen Ansprüche, wobei jeder Leiterstab (B101, B102; B201, B202) ein Hohlrohr mit einer axialverlaufenden Öffnung ist, um eine Pressverbindung der Leiterstäbe in den genannten selektierten Durchgangslöchern (C101, C102; C201, C202) zu erleichtern.

8. Vorrichtung nach einem der vorangegangenen Ansprüche, wobei die Leiterstäbe (B101, B102; B201, B202) Hohlrohre sind, und so angeordnet sind, dass sie den Durchlauf eines Kühlmittels ermöglichen.

9. Vorrichtung nach Anspruch 8, wobei das Kühlmittel eine Isolierflüssigkeit ist.

10. Vorrichtung nach einem der Ansprüche 5 bis 10, wobei die Leiterstäbe (B101, B102; B201, B202) mit den Durchgangslöchern (C101, C102; C201, C202) verschweisst sind.

11. Vorrichtung nach einem der vorangegangenen Ansprüche, wobei die Elektrodenplatten (P101, P20 1) zumindest teilweise kreisförmig sind.

12. Vorrichtung nach einem der Ansprüche 1 bis 10, wobei die Elektrodenplatten (P101, P201) Polygone mit mindestens drei Seiten bilden.

13. Vorrichtung nach einem der vorangegangenen Ansprüche, wobei die zwei Enden eines jeden Leiterstabs (B101, B102; B201, B202) mit mechanischen Befestigungsmitteln versehen sind, um die Elektrodenplatten (P101, P201) und die Isolierelemente (I101) miteinander zu befestigen.

## Revendications

1. Dispositif de stockage/décharge d'électricité comprenant :
une pluralité de plaques d'électrode (P101, P201) ayant chacune au moins deux bornes de collecte de courant respectivement à des côtés opposés de celles-ci, chaque plaque d'électrode (P101, P201) ayant au moins un trou traversant conducteur à chaque borne et au moins une ouverture isolante ;
une pluralité d'éléments isolateurs (I101) positionnés entre des paires respectives des paires de plaques d'électrode ayant des polarités opposées ;
au moins deux tiges conductrices pour fonction de conduction d'électrode positive et au moins deux tiges conductrices pour fonction de conduction d'électrode négative respectivement, les tiges conductrices étant agencées pour passer à travers, et être électriquement connectées à, des trous traversants sélectionnés parmi les trous traversants de telle sorte que les tiges conductrices forment des connexions en série entre les plaques d'électrode lors d'une connexion électrique à des trous traversants des plaques d'électrode ayant des polarités opposées ; et/ou les tiges conductrices forment des connexions parallèles entre les plaques d'électrode lors d'une connexion électrique à des trous traversants des plaques d'électrode ayant la même polarité,
les tiges conductrices étant également agencées pour passer à travers les ouvertures isolantes des plaques d'électrode auxquelles les tiges conductrices ne sont pas électriquement connectées, les ouvertures isolantes ayant une taille supérieure à la taille des tiges conductrices de façon à éviter un contact entre les tiges conductrices et les plaques d'électrode ; et
des éléments isolants positionnés dans les ouvertures isolantes pour isoler davantage les tiges conductrices (B101, B102 ; B201, B202) passant à travers les ouvertures isolantes (S101, S102 ; S201, S202) par rapport à des plaques d'électrode respectives (P101, P201) auxquelles les tiges conductrices ne sont pas électriquement connectées ;
les plaques d'électrode étant connectées en parallèle pour des plaques d'électrode ayant la même polarité et/ou connectées en série pour des plaques d'électrode ayant des polarités différentes, ce par quoi les bornes de collecte de courant constituent au moins deux entrées/sorties pour des circuits de transport de courant du dispositif, permettant ainsi de réduire la résistance interne du dispositif.

2. Dispositif selon la revendication 1, comprenant en outre au moins une borne de collecte de courant s'étendant vers l'extérieur sur chaque côté de chacune des plaques d'électrode (P101, P201), ce par quoi la borne de collecte de courant comprend le trou traversant conducteur à fonction de conduction d'électrode positive et d'électrode négative et chacune des bornes de collecte de courant sur chacune des plaques d'électrode sert de borne d'entrée/sortie pour cette plaque d'électrode.

3. Dispositif selon la revendication 1 ou la revendication 2, comprenant en outre au moins une borne de collecte de courant s'étendant vers l'extérieur sur au moins un côté additionnel de chaque plaque d'électrode (P101, P201).

4. Dispositif selon l'une quelconque des revendications 1 à 3, dans lequel au moins deux des bornes de collecte de courant de chaque plaque d'électrode (P101, P201) sont situées à des coins de cette plaque d'électrode.

5. Dispositif selon l'une quelconque des revendications précédentes, dans lequel les trous traversants (C101, C102 ; C201, C202) ont une forme circulaire, et les tiges conductrices (B101, B102 ; B201, B202) ont une section transversale circulaire correspondante.

6. Dispositif selon l'une quelconque des revendications 1 à 4, dans lequel les tiges conductrices (B101, B102 ; B201, B202) ont une forme rectangulaire.

7. Dispositif selon l'une quelconque des revendications précédentes, dans lequel chaque tige conductrice (B101, B102 ; B201, B202) est un tube creux ayant une ouverture s'étendant de manière axiale pour faciliter un ajustement serré des tiges conductrices dans lesdits trous traversants sélectionnés (C101, C102 ; C201, C202).

8. Dispositif selon l'une quelconque des revendications précédentes, dans lequel les tiges conductrices (B101, B102 ; B201, B202) sont des tubes creux, et sont agencées pour permettre un passage d'un fluide de refroidissement.

9. Dispositif selon la revendication 8, dans lequel le fluide de refroidissement est un fluide isolant.

10. Dispositif selon l'une quelconque des revendications 5 à 10, dans lequel les tiges conductrices (B101, B102 ; B201, B202) sont soudées aux trous traversants (C101, C102 ; C201, C202).

11. Dispositif selon l'une quelconque des revendications précédentes, dans lequel les plaques d'électrode (P101, P201) sont au moins partiellement circulaires.

12. Dispositif selon l'une quelconque des revendications 1 à 10, dans lequel les plaques d'électrode (P101, P201) forment des polygones ayant au moins trois côtés.

13. Dispositif selon l'une quelconque des revendications précédentes, dans lequel les deux extrémités de chaque tige conductrice (B101, B102 ; B201, B202) comprennent des moyens de fixation mécanique pour fixer ensemble les plaques d'électrode (P101, P201) et les éléments isolateurs (I101).
